(19) **Europäisches Patentamt / European Patent Office / Office européen des brevets**

(11) **EP 4 591 981 A1**

(12) **EUROPEAN PATENT APPLICATION**
published in accordance with Art. 153(4) EPC

(43) Date of publication:
**30.07.2025 Bulletin 2025/31**

(21) Application number: **24779687.3**

(22) Date of filing: **18.03.2024**

(51) International Patent Classification (IPC):
*B01J 35/60* (2024.01)      *B01D 53/94* (2006.01)
*B01J 23/63* (2006.01)      *B01J 35/57* (2024.01)
*B01J 37/02* (2006.01)      *F01N 3/022* (2006.01)
*F01N 3/035* (2006.01)      *F01N 3/24* (2006.01)
*F01N 3/28* (2006.01)

(52) Cooperative Patent Classification (CPC):
**B01D 53/94; B01J 23/63; B01J 35/57; B01J 35/60; B01J 37/02; F01N 3/022; F01N 3/035; F01N 3/24; F01N 3/28**

(86) International application number:
**PCT/JP2024/010614**

(87) International publication number:
**WO 2024/203562 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023051744**

(71) Applicant: **Mitsui Mining & Smelting Co., Ltd.**
**Shinagawa-ku**
**Tokyo 141-8584 (JP)**

(72) Inventors:
• **NAGAI, Yusuke**
  **Ageo-shi, Saitama 362-0025 (JP)**
• **KURIHARA, Hiroki**
  **Ageo-shi, Saitama 362-0025 (JP)**
• **NOGUCHI, Keitaro**
  **Ageo-shi, Saitama 362-0025 (JP)**
• **MAEDA, Akihide**
  **Ageo-shi, Saitama 362-0025 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **EXHAUST GAS PURIFICATION CATALYST AND PRODUCTION METHOD THEREFOR**

(57)   An object of the present invention is to provide an exhaust gas purification catalyst that can realize improvement of PM collection performance and suppression of an increase in pressure loss, and the present invention provides an exhaust gas purification catalyst (1A) including: a wall-flow type substrate (10); a first catalyst layer (20); and a second catalyst layer (30), wherein,
assuming that:
Conditions 1 and 2 are defined as the conditions that, in a logarithmic differential pore volume distribution curve of the first catalyst layer (20), a peak value A present in a pore size range of 1 $\mu$m or more and 3 $\mu$m or less is 0.20 mL/g or more, and a peak value B present in a pore size range of more than 3 $\mu$m and 10 $\mu$m or less is 0.20 mL/g or more, respectively,
Conditions 3 and 4 are defined as the conditions that, in a logarithmic differential pore volume distribution curve of the second catalyst layer (30), a peak value C present in a pore size range of 1 $\mu$m or more and 3 $\mu$m or less is 0.20 mL/g or more, and a peak value D present in a pore size range of more than 3 $\mu$m and 10 $\mu$m or less is 0.20 mL/g or more, respectively,
the first catalyst layer (20) and the second catalyst layer (30) satisfy a predetermined combination of the conditions.

EP 4 591 981 A1

[Figure 6]

**Description**

**FIELD OF THE INVENTION**

The present invention relates to an exhaust gas purification catalyst and a method for producing the same.

**BACKGROUND ART**

Exhaust gas emitted from an internal combustion engine of an automobile, a motorcycle or the like contains harmful components such as hydrocarbon (HC), carbon monoxide (CO) and nitrogen oxide (NOx). A three-way catalyst is used to purify and detoxify those harmful components. A catalyst containing a platinum group element such as Pt, Pd or Rh is used as a three-way catalyst.

In addition to harmful components such as HC, CO and NOx, exhaust gas contains particulate matter (PM), which is known as causing air pollution.

To respond to an environmental regulation on PM, a vehicle equipped with a gasoline engine such as a gasoline direct injection engine (GDI) is also required to be installed with a filter with a PM collecting function (GPF: Gasoline Particulate Filter) as in a vehicle equipped with a diesel engine.

A substrate having a structure called a wall-flow type is used as a GPF. The wall-flow type substrate includes: an inflow-side cell having an open end on the exhaust gas inflow side and a closed end on the exhaust gas outflow side; an outflow-side cell having an open end on the exhaust gas outflow side and a closed end on the exhaust gas inflow side; and a porous partition wall separating the inflow-side cell and the outflow-side cell.

Since space for installing an exhaust gas purification catalyst is usually limited, technologies for collecting PM and purifying harmful components such as HC, CO, and NOx by forming a catalyst layer containing a platinum group element such as Pt, Pd or Rh on a wall-flow type substrate have been studied (for example, Patent Document 1). In an exhaust gas purification catalyst including a wall-flow type substrate and a catalyst layer provided on the wall-flow type substrate, the exhaust gas that has flowed into the wall-flow type substrate from the end (opening) on the exhaust gas inflow side of the inflow-side cell passes through the porous partition wall and flows out from the end (opening) on the exhaust gas outflow side of the outflow-side cell. Thus, PM in the exhaust gas is trapped in pores of the catalyst and partition wall.

**CITATION LIST**

PATENT DOCUMENT

Patent Document 1: WO 2021/029098

**SUMMARY OF THE INVENTION**

TECHNICAL PROBLEM

Smaller pores of the catalyst layer and partition wall improve PM collection performance, but increase pressure loss (pressure drop). On the other hand, larger pores of the catalyst layer and partition wall suppress an increase in pressure loss, but decrease PM collection performance. Therefore, it is difficult to achieve both of improvement of PM collection performance and suppression of an increase in pressure loss. Thus, there is a need for a technology that can achieve both of them.

Thus, an object of the present invention is to provide an exhaust gas purification catalyst that can realize improvement of PM collection performance and suppression of an increase in pressure loss, and a method for producing the same.

SOLUTION TO PROBLEM

To solve the above-described problem, the present invention provides the following exhaust gas purifications catalysts and their production methods.

[1] An exhaust gas purification catalyst including: a substrate extending in an exhaust gas flow direction; a first catalyst layer; and a second catalyst layer,
wherein the substrate includes:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction, and wherein,

assuming that:

Condition 1 is defined as the condition that, in a logarithmic differential pore volume distribution curve of the first catalyst layer obtained by mercury **porosimetry, a peak value A is present in a pore size range of 1 $\mu$m or more and 3 $\mu$m or less and the peak value A is 0.20 mL/g or more;**

Condition 2 is defined as the condition that, in the logarithmic differential pore volume distribution curve of the first catalyst layer obtained by mercury **porosimetry, a peak value B is present in a pore size range of more than 3 $\mu$m and 10 $\mu$m or less and the peak value B is 0.20 mL/g or more;**

Condition 3 is defined as the condition that, in a logarithmic differential pore volume distribution curve of the second catalyst layer obtained by mercury **porosimetry, a peak value C is present in a pore size range of 1 $\mu$m or more and 3 $\mu$m or less and the peak value C is 0.20 mL/g or more;** and

Condition 4 is defined as the condition that, in the logarithmic differential pore volume distribution curve of the second catalyst layer obtained by mercury **porosimetry, a peak value D is present in a pore size range of more than 3 $\mu$m and 10 $\mu$m or less and the peak value D is 0.20 mL/g or more,**

the second catalyst layer satisfies Condition 3 and does not satisfy Condition 4, or satisfies Condition 4 and does not satisfy Condition 3, or satisfies Conditions 3 and 4, or satisfies none of Conditions 3 and 4, and

when the second catalyst layer satisfies Condition 3 and does not satisfy Condition 4, the first catalyst layer satisfies at least Condition 2 of Conditions 1 and 2,

when the second catalyst layer satisfies Condition 4 and does not satisfy Condition 3, the first catalyst layer satisfies at least Condition 1 of Conditions 1 and 2,

when the second catalyst layer satisfies Conditions 3 and 4, the first catalyst layer satisfies at least one of Conditions 1 and 2, or none of Conditions 1 and 2, and

when the second catalyst layer satisfies none of Conditions 3 and 4, the first catalyst layer satisfies Conditions 1 and 2.

[2] The exhaust gas purification catalyst according to [1], wherein

the second catalyst layer satisfies Condition 3 and does not satisfy Condition 4, or satisfies Condition 4 and does not satisfy Condition 3, or satisfies Conditions 3 and 4, and

when the second catalyst layer satisfies Condition 3 and does not satisfy Condition 4, the first catalyst layer satisfies at least Condition 2 of Conditions 1 and 2,

when the second catalyst layer satisfies Condition 4 and does not satisfy Condition 3, the first catalyst layer satisfies at least Condition 1 of Conditions 1 and 2, and

when the second catalyst layer satisfies Conditions 3 and 4, the first catalyst layer satisfies at least one of Conditions 1 and 2.

[3] The exhaust gas purification catalyst according to [1] or [2], wherein the peak value A in Condition 1 is 1.00 mL/g or less, and the peak value C in Condition 3 is 1.00 mL/g or less.

[4] The exhaust gas purification catalyst according to any one of [1] to [3], wherein the peak value B in Condition 2 is 1.00 mL/g or less, and the peak value D in Condition 4 is 1.00 mL/g or less.

[5] The exhaust gas purification catalyst according to any one of [1] to [4], wherein the peak value A in Condition 1 is 0.31 mL/g or more, and the peak value C in Condition 3 is 0.31 mL/g or more.

[6] A method for producing an exhaust gas purification catalyst including: a substrate extending in an exhaust gas flow direction; a first catalyst layer; and a second catalyst layer,

wherein the substrate includes:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction,

wherein the method includes the following steps of:

(1a) applying a first slurry containing a first pore forming agent onto the inflow-side cell side of the partition wall to form a first precursor layer;

(1b) applying a second slurry containing a second pore forming agent onto the outflow-side cell side of the partition wall to form a second precursor layer; and

(1c) calcining the first precursor layer and the second precursor layer to form the first catalyst layer and the second catalyst layer, respectively,

wherein, of the first and second pore forming agents, one pore forming **agent has a median particle size D50 of more than 4 $\mu$m, and the other pore forming agent has a median particle size D50 of 4 $\mu$m or less,**

wherein the first slurry contains an inorganic oxide particle, and the inorganic oxide particle contained in the first slurry has a median particle size D50 **of 1 $\mu$m or more and 20 $\mu$m or less,**

wherein an amount of the first pore forming agent contained in the first precursor layer is 10% by mass or more and 60% by mass or less based on a mass of the first catalyst layer,

wherein a mass of the first catalyst layer per unit volume of a portion of the substrate provided with the first catalyst layer is 5 g/L or more and 150 g/L or less,

wherein the second slurry contains an inorganic oxide particle, and the inorganic oxide particle contained in the second slurry has a median particle size **D50 of 1 $\mu$m or more and 20 $\mu$m or less,**

wherein an amount of the second pore forming agent contained in the second precursor layer is 10% by mass or more and 60% by mass or less based on a mass of the second catalyst layer, and

wherein a mass of the second catalyst layer per unit volume of a portion of the substrate provided with the second catalyst layer is 5 g/L or more and 150 g/L or less.

[7] A method for producing an exhaust gas purification catalyst including: a substrate extending in an exhaust gas flow direction; a first catalyst layer; and a second catalyst layer,

wherein the substrate includes:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction,

wherein the second catalyst layer includes: a lower layer formed on the outflow-side cell side of the partition wall; and an upper layer formed on the lower layer,

wherein the method includes the following steps of:

(2a) applying a first slurry containing a first pore forming agent onto the inflow-side cell side of the partition wall to form a first precursor layer;

(2b) applying a third slurry containing a third pore forming agent onto the outflow-side cell side of the partition wall to form a third precursor layer;

(2c) applying a fourth slurry containing a fourth pore forming agent onto the third precursor layer to form a fourth precursor layer; and

(2d) calcining the first precursor layer, the third precursor layer and the fourth precursor layer to form the first catalyst layer, the lower layer and the upper layer, respectively,

wherein, of the first, third and fourth pore forming agents, one or two pore **forming agents have a median particle size D50 of more than 4 μm, and the other one or two pore forming agents have a median particle size D50 of 4 μm or less,**

wherein the first slurry contains an inorganic oxide particle, and the inorganic oxide particle contained in the first slurry has a median particle size D50 **of 1 μm or more and 20 μm or less,**

wherein an amount of the first pore forming agent contained in the first precursor layer is 10% by mass or more and 60% by mass or less based on a mass of the first catalyst layer,

wherein a mass of the first catalyst layer per unit volume of a portion of the substrate provided with the first catalyst layer is 5 g/L or more and 150 g/L or less,

wherein the third slurry contains an inorganic oxide particle, and the inorganic oxide particle contained in the third slurry has a median particle size **D50 of 1 μm or more and 20 μm or less,**

wherein an amount of the third pore forming agent contained in the third precursor layer is 10% by mass or more and 60% by mass or less based on a mass of the lower layer,

wherein a mass of the lower layer per unit volume of a portion of the substrate provided with the lower layer is 5 g/L or more and 90 g/L or less,

wherein the fourth slurry contains an inorganic oxide particle, and the inorganic oxide particle contained in the fourth slurry has a median particle size **D50 of 1 μm or more and 20 μm or less,**

wherein an amount of the fourth pore forming agent contained in the fourth precursor layer is 10% by mass or more and 60% by mass or less based on a mass of the upper layer, and

wherein a mass of the upper layer per unit volume of a portion of the substrate provided with the upper layer is 5 g/L or more and 60 g/L or less.

[8] The method according to [7], wherein the third pore forming agent has a **median particle size D50 of more than 4 μm, and the fourth pore forming agent has a median particle size D50 of 4 μm or less.**

[9] A method for producing an exhaust gas purification catalyst including: a substrate extending in an exhaust gas flow direction; a first catalyst layer; and a second catalyst layer,

wherein the substrate includes:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction,

wherein the first catalyst layer includes: a lower layer formed on the inflow-side cell side of the partition wall; and an upper layer formed on the lower layer,

wherein the method includes the following steps of:

(3a) applying a second slurry containing a second pore forming agent onto the outflow-side cell side of the partition wall to form a second precursor layer;

(3b) applying a fifth slurry containing a fifth pore forming agent onto the inflow-side cell side of the partition wall to form a fifth precursor layer;

(3c) applying a sixth slurry containing a sixth pore forming agent onto the fifth precursor layer to form a sixth precursor layer; and

(3d) calcining the second precursor layer, the fifth precursor layer and the sixth precursor layer to form the second catalyst layer, the lower layer and the upper layer, respectively,

wherein, of the second, fifth and sixth pore forming agents, one or two **pore forming agents have a median particle size D50 of more than 4 μm, and the other one or two pore forming agents have a median particle size D50 of 4 μm or** less,

wherein the second slurry contains an inorganic oxide particle, and the inorganic oxide particle contained in the second slurry has a median particle size **D50 of 1 μm or more and 20 μm or less,**

wherein an amount of the second pore forming agent contained in the second precursor layer is 10% by mass or more and 60% by mass or less based on a mass of the second catalyst layer,

wherein a mass of the second catalyst layer per unit volume of a portion of the substrate provided with the second catalyst layer is 5 g/L or more and 150 g/L or less,

wherein the fifth slurry contains an inorganic oxide particle, and the inorganic oxide particle contained in the fifth slurry has a median particle size D50 **of 1 μm or more and 20 μm or less,**

wherein an amount of the fifth pore forming agent contained in the fifth precursor layer is 10% by mass or more and 60% by mass or less based on a mass of the lower layer,

wherein a mass of the lower layer per unit volume of a portion of the substrate provided with the lower layer is 5 g/L or more and 90 g/L or less,

wherein the sixth slurry contains an inorganic oxide particle, and the inorganic oxide particle contained in the sixth slurry has a median particle size **D50 of 1 μm or more and 20 μm or less,**

wherein an amount of the sixth pore forming agent contained in the sixth precursor layer is 10% by mass or more and 60% by mass or less based on a mass of the upper layer, and

wherein a mass of the upper layer per unit volume of a portion of the substrate provided with the upper layer is 5 g/L or more and 60 g/L or less.

[10] The method according to [9], wherein the fifth pore forming agent has a **median particle size D50 of more than 4 μm, and the sixth pore forming agent has a median particle size D50 of 4 μm or less.**

ADVANTAGEOUS EFFECTS OF INVENTION

According to the present invention, there is provided an exhaust gas purification catalyst that can realize improvement of PM collection performance and suppression of an increase in pressure loss.

**BRIEF DESCRIPTION OF THE DRAWINGS**

Figure 1 is a partial end view showing a state in which the exhaust gas purification catalyst according to the first embodiment is disposed in an exhaust gas path of an internal combustion engine.

Figure 2 is an end view taken along line A-A of Figure 1.

Figure 3 is an end view taken along line B-B of Figure 1.

Figure 4 is an enlarged view of a region denoted by the reference sign R1 in Figure 2.

Figure 5 is an enlarged view of a region denoted by the reference sign R2 in Figure 3.

Figure 6 is an end view taken along line C-C of Figure 1.

Figures 7A to 7C are diagrams for illustrating the "peak value" in the logarithmic differential pore volume distribution curve. In each of the graphs in Figures 7A to 7C, the left side of the horizontal axis is the smaller pore side, and the right side of the horizontal axis is the larger pore side.

Figure 8 is a diagram (diagram corresponding to Figure 5) for illustrating the exhaust gas purification catalyst according to the second embodiment.

Figure 9 is a diagram (diagram corresponding to Figure 6) for illustrating the exhaust gas purification catalyst according to the second embodiment.

Figure 10 is a diagram (diagram corresponding to Figure 5) for illustrating the exhaust gas purification catalyst according to the third embodiment.

Figure 11 is a diagram (diagram corresponding to Figure 6) for illustrating the exhaust gas purification catalyst according to the third embodiment.

Figure 12A shows the logarithmic differential pore volume distribution curve of the first catalyst layer in the exhaust gas purification catalyst of Example 2.

Figure 12B shows the logarithmic differential pore volume distribution curve of the second catalyst layer in the exhaust gas purification catalyst of Example 2.

Figure 13A shows the logarithmic differential pore volume distribution curve of the first catalyst layer in the exhaust gas purification catalyst of Comparative Example 1.

Figure 13B shows the logarithmic differential pore volume distribution curve of the second catalyst layer in the exhaust gas purification catalyst of Comparative Example 1.

Figure 14A shows the logarithmic differential pore volume distribution curve of the first catalyst layer in the exhaust gas purification catalyst of Comparative Example 2.

Figure 14B shows the logarithmic differential pore volume distribution curve of the second catalyst layer in the exhaust gas purification catalyst of Comparative Example 2.

**DETAILED DESCRIPTION OF THE INVENTION**

With reference to the drawings, embodiments of the present invention will be described below.

<<First embodiment>>

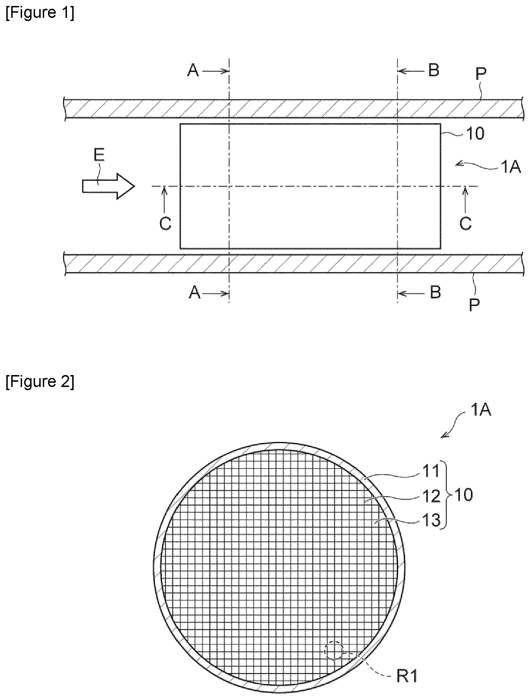

With reference to Figures 1 to 6, the first embodiment of the present invention will be described below.
As shown in Figure 1, an exhaust gas purification catalyst 1A according to the first embodiment (hereinafter referred to as the "catalyst 1A") is disposed in an exhaust gas path in an exhaust pipe P of an internal combustion engine. The internal combustion engine is, for example, a gasoline engine (e.g., GDI engine), a diesel engine, or the like.
In Figure 1, the exhaust gas flow direction in the exhaust gas path of the internal combustion engine is denoted by the reference sign E. The same applies to other figures. The upstream position in the exhaust gas flow direction E (e.g., the left side in Figure 1) is referred to as the "exhaust gas inflow side" or "inflow side", and the downstream position in the exhaust gas flow direction E (e.g., the right side in Figure 1) is referred to as the "exhaust gas outflow side" or "outflow side".
As shown in Figure 1, the catalyst 1A is disposed in the exhaust gas path of the internal combustion engine such that the axial direction of a substrate 10 coincides or roughly coincides with the exhaust gas flow direction E. In the present specification, the "length" means a dimension in the axial direction of the substrate 10, unless otherwise defined.
As shown in Figures 1 to 6, the catalyst 1A includes a substrate 10, a first catalyst layer 20, and a second catalyst layer 30.
In the present embodiment, the first catalyst layer 20 and the second catalyst layer 30 each have a single-layer structure.

<Substrate>

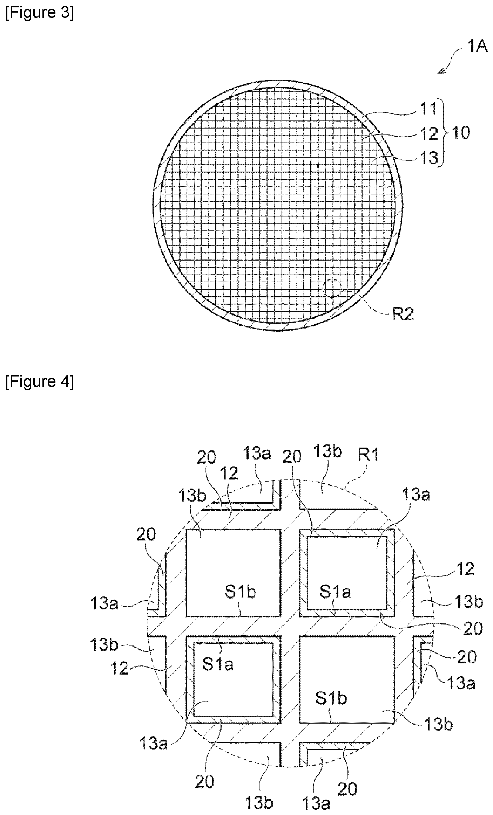

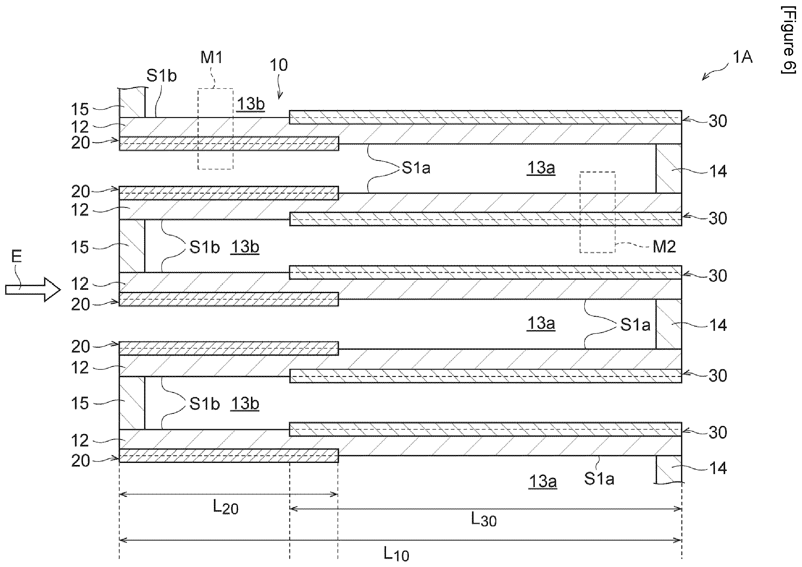

The material constituting the substrate 10 can be appropriately selected from known materials. Examples of the material constituting the substrate 10 include a ceramic material and a metal material. The ceramic material is preferable. Examples of the ceramic material include carbide ceramics such as silicon carbide, titanium carbide, tantalum carbide, and tungsten carbide; nitride ceramics such as aluminum nitride, silicon nitride, boron nitride, and titanium nitride; and oxide ceramics such as alumina, zirconia, cordierite, mullite, zircon, aluminum titanate, and magnesium titanate. Examples of the metal material include alloys such as stainless steel.
The length L10 of the substrate 10 can be appropriately adjusted in consideration of exhaust gas purification performance, PM collection performance, and the like. From the viewpoint of improving exhaust gas purification performance and PM collection performance, the length L10 of the substrate 10 is preferably 50 mm or more and 160 mm or less, and more preferably 80 mm or more and 130 mm or less.
The volume of the substrate 10 can be appropriately adjusted in consideration of exhaust gas purification performance, PM collection performance, and the like. From the viewpoint of improving exhaust gas purification performance and PM collection performance, the volume of the substrate 10 is preferably 0.5 L or more and 2.5 L or less, more preferably 0.5 L or more and 2.0 L or less, and still more preferably 0.7 L or more and 2.0 L or less. In the present specification, the volume of the substrate 10 means an apparent volume of the substrate 10. In the case where the substrate 10 is cylindrical, the outer diameter of the substrate 10 is expressed as "2r", and the length of the substrate 10 is expressed as "L10", the volume of the substrate 10 **is calculated based on the formula: (Volume of substrate 10)** $= \pi \times r^2 \times L10$.
The substrate 10 is a wall-flow type substrate. As shown in Figures 2 to 6, the substrate 10 includes cells 13 (inflow-side cells 13a and outflow-side cells 13b), and a partition wall 12 that separates the cells 13 (inflow-side cells 13a and outflow-side cells 13b) from each other. It is preferable that the substrate 10 has a honeycomb structure.
As shown in Figures 2 and 3, the substrate 10 includes a tubular member 11. The cells 13 (inflow-side cells 13a and outflow-side cells 13b) and the partition wall 12 are provided in the tubular member 11. The tubular member 11 defines the outer shape of the substrate 10. The axial direction of the tubular member 11 coincides with the axial direction of the substrate 10. As shown in Figures 2 and 3, the tubular member 11 has a hollow cylindrical shape, but it may have another shape such as a hollow elliptic cylindrical shape or a polygonal tubular shape.
As shown in Figures 2 to 6, the cells 13 (inflow-side cells 13a and outflow-side cells 13b) each extend in the exhaust gas flow direction E and has an end on the exhaust gas inflow side and an end on the exhaust gas outflow side.
As shown in Figure 6, the substrate 10 is provided with a first sealing member 14 that seals the ends of some of the cells 13 on the exhaust gas outflow side and a second sealing member 15 that seals the ends of the remaining cells 13 on the exhaust gas inflow side, so that some of the cells 13 are each an inflow-side cell 13a in which the end on the exhaust gas inflow side is open and the end on the exhaust gas outflow side is closed by the first sealing member 14, and the remaining cells 13 are each an outflow-side cell 13b in which the end on the exhaust gas inflow side is closed by the second sealing member 15 and the end on the exhaust gas outflow side is open.

As shown in Figures 2 to 6, the partition wall 12 is present between adjacent cells 13 (adjacent inflow-side cell 13a and outflow-side cell 13b), whereby the adjacent cells 13 (adjacent inflow-side cell 13a and outflow-side cell 13b) are separated from each other by the partition wall 12.

As shown in Figures 4 to 6, a plurality of (four in the present embodiment) outflow-side cells 13b are arranged around one inflow-side cell 13a, and the inflow-side cell 13a and the outflow-side cells 13b arranged around the inflow-side cell 13a are separated from each other by the porous partition wall 12. As shown in Figures 4 to 6, a plurality of (four in the present embodiment) inflow-side cells 13a are arranged around one outflow-side cell 13b, and the outflow-side cell 13b and the inflow-side cells 13a arranged around the outflow-side cell 13b are separated from each other by the porous partition wall 12.

As shown in Figures 2 to 6, the shape in a plan view of the end (opening) on the exhaust gas inflow side of each inflow-side cell 13a and the shape in a plan view of the end (opening) on the exhaust gas outflow side of each outflow-side cell 13b are, for example, rectangle, but may be another shape such as hexagon, octagon, or the like.

The cell density per square inch of the substrate 10 can be appropriately adjusted in consideration of PM collection performance, pressure loss, and the like. From the viewpoint of improving PM collection performance and suppressing an increase in pressure loss, the cell density per square inch of the substrate 10 is preferably 180 cells or more and 350 cells or less. The cell density per square inch of the substrate 10 is the total number of cells 13 (inflow-side cells 13a and outflow-side cells 13b) per square inch in a cross section obtained by cutting the substrate 10 in a plane perpendicular to the axial direction of the substrate 10.

As shown in Figures 2 and 3, the partition wall 12 is provided in the tubular member 11. The partition wall 12 has a porous structure allowing exhaust gas to pass through.

As shown in Figures 4 to 6, the partition wall 12 has an outer surface S1a on the inflow-side cell 13a side and an outer surface S1b on the outflow-side cell 13b side. The outer surface S1a is, of the outer surface that defines the outer shape of the partition wall 12, a region on the inflow-side cell 13a side (i.e., a region in contact with the inflow-side cell 13a), the region extending in the exhaust gas flow direction E. The outer surface S1b is, of the outer surface that defines the outer shape of the partition wall 12, a region on the outflow-side cell 13b side (i.e., a region in contact with the outflow-side cell 13b), the region extending in the exhaust gas flow direction E.

The thickness of the partition wall 12 can be appropriately adjusted in consideration of PM collection performance, pressure loss, and the like. From the viewpoint of improving PM collection performance and suppressing an increase in pressure loss, the thickness of the partition wall 12 is preferably 110 $\mu$m or more and 380 $\mu$m or less, more preferably 150 $\mu$m or more and 330 $\mu$m or less, and still more preferably 180 $\mu$m or more and 310 $\mu$m or less.

The average pore size (average void size) of the partition wall 12 can be appropriately adjusted and is preferably 12 $\mu$m or more and 25 $\mu$m or less, and more preferably 13 $\mu$m or more and 22 $\mu$m or less, from the viewpoint of more effectively achieving improvement of PM collection performance and suppression of an increase in pressure loss. The porosity (void content) of the partition wall 12 can be appropriately adjusted and is, for example, 40% or more and 80% or less, preferably 45% or more and 75% or less, more preferably 50% or more and 75% or less, and still more preferably 60% or more and 70% or less, from the viewpoint of more effectively achieving suppression of an increase in pressure loss.

The average pore size and porosity of the partition wall 12 can be measured by mercury porosimetry using a mercury porosimeter. In the mercury porosimetry, a test piece cut out from the substrate 10 (containing neither a first sealing member 14 nor a second sealing member 15) is stored in a measurement cell of the mercury porosimeter, the pressure inside the measurement cell is reduced, mercury is introduced into the measurement cell, pressure is applied thereon, and then the pore size and the pore volume are measured based on the pressure during application of pressure and the volume of mercury introduced into pores of the partition wall 12 in the test piece. The measurement is performed, for example, in the range of pressures of 0.5 to 20000 psia. Note that, 0.5 psia corresponds to $0.35 \times 10^{-3}$ kg/mm$^2$, and 20000 psia corresponds to 14 kg/mm$^2$. The range of the pore size corresponding to this pressure range is 0.01 to 420 $\mu$m. As the constant when calculating the pore size based on the pressure, for example, a contact angle of 140° and a surface tension of 480 dyn/cm are used. The average pore size of the partition wall 12 is the pore size at which the cumulative pore volume reaches 50% (the pore size at 50% of the cumulative value of the pore volume) in the pore size distribution of the partition wall 12. The porosity of the partition wall 12 can be calculated based on the following equation. In the case where the partition wall material is cordierite, for example, 2.52 can be used as the true specific gravity of cordierite.

Porosity of partition wall 12 (%) = (Total pore volume)/((Total pore volume) + 1/(True specific gravity of partition wall material)) $\times$ 100

<First catalyst layer>

As shown in Figures 4 and 6, the first catalyst layer 20 is formed on the inflow-side cell 13a side of the partition wall 12.

As shown in Figure 6, the first catalyst layer 20 extends from the end on the exhaust gas inflow side of the partition wall 12 along the exhaust gas flow direction E. In the present embodiment, the first catalyst layer 20 does not reach the end on the exhaust gas outflow side of the partition wall 12, but it may reach the end on the exhaust gas outflow side of the partition wall 12.

As shown in Figures 4 and 6, it is preferable that at least part of the first catalyst layer 20 rises from the outer surface S1a of the partition wall 12 toward the inflow-side cell 13a side, i.e., the first catalyst layer 20 has a portion rising from the outer surface S1a of the partition wall 12 toward the inflow-side cell 13a side (hereinafter referred to as the "rising structure"). This improves the contactability of the first catalyst layer 20 with exhaust gas and PM, thereby more effectively achieving improvement of exhaust gas purification performance and improvement of PM collection performance.

The first catalyst layer 20 may be composed of the rising structure or may have a portion existing inside the partition wall 12 (hereinafter referred to as the "internal structure") in addition to the rising structure. The partition wall 12 is porous, so that when the first catalyst layer 20 is formed, the internal structure may be formed together with the rising structure. The rising structure and the internal structure may be continuous. The first catalyst layer 20 may be composed of the internal structure. The expression that "the first catalyst layer 20 is formed on the inflow-side cell 13a side of the partition wall 12" encompasses an embodiment wherein the first catalyst layer 20 is composed of the rising structure, an embodiment wherein the first catalyst layer 20 is composed of the internal structure, and an embodiment wherein the first catalyst layer 20 has both the rising structure and the internal structure.

While the region in which the rising structure of the first catalyst layer 20 is present does not overlap with the region in which the partition wall 12 is present, the region in which the internal structure of the first catalyst layer 20 is present overlaps with the region in which the partition wall 12 is present. Therefore, by cutting the catalyst 1A in a plane perpendicular to the axial direction of the substrate 10, and observing the first catalyst layer 20 and the partition wall 12 each present in the resulting cross section, the rising structure and the internal structure can be identified based on the difference in form between the first catalyst layer 20 and the partition wall 12. At the time of observing the cross section, element mapping of the cross section may be performed. The element mapping can be performed, for example, by a combination of cross-sectional observation of the cross section by SEM and compositional analysis of the cross section. The element mapping can be performed, for example, using a scanning electron microscope-energy dispersive X-ray spectrometer (SEM-EDX), an electron probe microanalyzer (EPMA), or the like. By performing the element mapping of the cross section, the rising structure and the internal structure can be identified based on the difference in form and composition between the first catalyst layer 20 and the partition wall 12.

From the viewpoint of balancing exhaust gas purification performance and cost, the mass (mass after calcining) of the first catalyst layer 20 per unit volume of the portion of the substrate 10 provided with the first catalyst layer 20 is preferably 5 g/L or more and 150 g/L or less, more preferably 10 g/L or more and 100 g/L or less, and still more preferably 25 g/L or more and 70 g/L or less. The mass of the first catalyst layer 20 per unit volume of the portion of the substrate 10 provided with the first catalyst layer 20 is calculated based on the formula: (Mass of first catalyst layer 20) / ((Volume of substrate 10) $\times$ (Average length L20 of first catalyst Layer 20 / Length L10 of substrate 10)).

In the present specification, the expression "the mass of the first catalyst layer 20" means the total mass calculated by categorizing all metal elements contained in the first catalyst layer 20 into a platinum group element(s) and a metal element(s) other than the platinum group element(s), obtaining the mass(es) of the platinum group element (s) in terms of metal and the mass(es) of the metal element(s) other than the platinum group element(s) in terms of oxide, and totalizing the obtained masses. In other words, the expression "the mass of the first catalyst layer 20" means the calculated mass obtained by totalizing the mass(es) of the platinum group element(s) contained in the first catalyst layer 20 in terms of metal and the mass(es) of the metal element(s) other than the platinum group element(s) contained in the first catalyst layer 20 in terms of oxide. The term "metal element" encompasses metalloid elements such as Si, B, and the like.

In the present specification, the term "platinum group element" encompasses Pt (platinum element), Pd (palladium element), Rh (rhodium element), Ru (ruthenium element), Os (osmium element), and Ir (iridium element).

In the present specification, an oxide of a rare earth element other than Ce, Pr and Tb means a sesquioxide ($M_2O_3$, wherein M represents a rare earth element other than Ce, Pr and Tb), an oxide of Ce means $CeO_2$, an oxide of Pr means $Pr_6O_{11}$, an oxide of Tb means $Tb_4O_7$, an oxide of Al means $Al_2O_3$, an oxide of Zr means $ZrO_2$, an oxide of Si means $SiO_2$, an oxide of B means $B_2O_3$, an oxide of Cr means $Cr_2O_3$, an oxide of Mg means MgO, an oxide of Ca means CaO, an oxide of Sr means SrO, an oxide of Ba means BaO, an oxide of Fe means $Fe_3O_4$, an oxide of Mn means $Mn_3O_4$, an oxide of Ni means NiO, an oxide of Ti means $TiO_2$, an oxide of Zn means ZnO, and an oxide of Sn means $SnO_2$.

One example of the method of measuring the average length L20 of the first catalyst layer 20 is as follows:

A sample extending in the axial direction of the substrate 10 and having the same length as the length L10 of the substrate 10 is cut out from the catalyst 1A. The sample is, for example, in the form of a cylinder having a diameter of 25.4 mm. The value of the diameter of the sample can be changed as necessary. The sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas inflow side of the sample. The length of each cut piece is 5 mm. The composition of each cut piece is analyzed using a scanning electron microscope-energy dispersive X-ray spectroscopy (SEM-EDX), or the like, and it is confirmed whether or not each cut piece includes part of the first catalyst layer 20, based on the composition of each cut piece.

The compositional analysis is not necessarily performed for a cut piece that apparently includes part of the first catalyst layer 20. For example, it is possible to confirm whether or not each cut piece includes part of the first catalyst layer 20, by observing the cross section using a scanning electron microscope (SEM), an electron probe microanalyzer (EPMA), or the like. At the time of observing the cross section, element mapping of the cross section may be performed. The element mapping can be performed in the same manner as described above.

After confirming whether or not each cut piece includes part of the first catalyst layer 20, the length of the first catalyst layer 20 included in the sample is calculated based on the following formula:

Length of first catalyst layer 20 included in sample = 5 mm × (Number of --> cut pieces each including part of first catalyst layer 20)

For example, in the case where each of the first cut piece to the k-th cut piece includes part of the first catalyst layer 20, whereas each of the (k + 1)-th to the n-th cut pieces does not include part of the first catalyst layer 20, the length of the first catalyst layer 20 included in the sample is (5 × k) mm.

One example of the method of more specifically measuring the length of the first catalyst layer 20 included in the sample is as follows:

The k-th cut piece (namely, the cut piece closest to the exhaust gas outflow side, among the cut pieces each including part of the first catalyst layer 20) is cut in the axial direction of the substrate 10, and part of the first catalyst layer 20 existing in the resulting cross section is observed using SEM, EPMA, or the like, to measure the length of part of the first catalyst layer 20 included in the k-th cut piece. Thereafter, the length of the first catalyst layer 20 included in the sample is calculated based on the following formula:

Length of first catalyst layer 20 included in sample = (5 mm × (k-1)) + (Length of part of first catalyst layer 20 included in k-th cut piece)

The length of the first catalyst layer 20 included in the sample is calculated for 8 to 16 samples arbitrarily cut out from the exhaust gas purification catalyst 1A, and the mean value of the measured lengths is defined as the average length L20 of the first catalyst layer 20.

The average length L20 of the first catalyst layer 20 can be adjusted as appropriate in consideration of exhaust gas purification performance, PM collection performance, and the like. From the viewpoint of improving exhaust gas purification performance and PM collection performance, the percentage of the average length L20 of the first catalyst layer 20 to the length L10 of the substrate 10 (L20 / L10 × 100) is preferably 15% or more and 90% or less, more preferably 20% or more and 90% or less, still more preferably 30% or more and 85% or less.

The first catalyst layer 20 contains one or more platinum group elements. The one or more platinum group elements can be selected from Pt, Pd, Rh, Ru, Ir, Os, and the like. From the viewpoint of improving exhaust gas purification performance, the one or more platinum group elements are preferably selected from Pt, Pd and Rh. The one or more platinum group elements are each contained in the first catalyst layer 20 in the form capable of functioning as a catalytically active component, for example, in the form of a catalytically active component containing the platinum group element, such as a metal, an alloy containing the platinum group element, a compound containing the platinum group element (for example, an oxide of the platinum group element), or the like. From the viewpoint of improving exhaust gas purification performance, the catalytically active component containing the platinum group element is preferably in the form of a particle.

In an embodiment, the first catalyst layer 20 contains Rh. The first catalyst layer 20 may contain one or more other platinum group elements in addition to Rh.

In another embodiment, the first catalyst layer 20 contains Pd and/or Rh. The first catalyst layer 20 may contain one or more other platinum group elements in addition to Pd and/or Rh.

From the viewpoint of balancing exhaust gas purification performance and cost, the amount of the one or more platinum group elements in terms of metal in the first catalyst layer 20 is preferably 0.010% by mass or more and 20% by mass or less, more preferably 0.020% by mass or more and 15% by mass or less, and still more preferably 0.050% by mass or more and 10% by mass or less, based on the mass of the first catalyst layer 20. The expression "the amount of the one or more platinum group elements in terms of metal in the first catalyst layer 20" means, in the case where the first catalyst layer 20 contains one platinum group element, the amount of the one platinum group element in terms of metal, and means, in the case where the first catalyst layer 20 contains two or more platinum group elements, the total amount of the two or more platinum group elements in terms of metal.

In the case where the composition of raw materials used to form the first catalyst layer 20 is known, the amount of each metal element in terms of metal or oxide in the first catalyst layer 20 can be determined from the composition of the raw materials.

In the case where the composition of raw materials used to form the first catalyst layer 20 is not known, the amount of each metal element in terms of metal or oxide in the first catalyst layer 20 can be determined using a conventional method such as a scanning electron microscopy-energy dispersive X-ray spectroscopy (SEM-EDX). A specific example is as described below.

Elemental analysis using a conventional method such as SEM-EDX is performed on a sample obtained from the first catalyst layer 20 to identify the types of constituent elements of the entire sample, and to obtain the mole percentage of each of the metal element identified. In each of 10 fields of view in SEM, the mole percentage of each of the metal elements is obtained. The average mole percentage of each of the metal elements in the 10 fields of view is defined as the mole percentage of each of the metal elements in the first catalyst layer 20. From the mole percentage of each of the metal elements in the first catalyst layer 20, the mass percentage of each of the platinum group elements in terms of metal in the first catalyst layer 20, and the mass percentage of each of the metal elements other than the platinum group elements in terms of oxide in the first catalyst layer 20 are calculated. The mass percentage of each of the platinum group elements in terms of metal in the first catalyst layer 20 is calculated based on the formula: (the mass of each of the platinum group elements in terms of metal, calculated from the mole percentage) / ((the masses of the platinum group elements in terms of metal, calculated from the mole percentage) + (the masses of the metal elements other than the platinum group elements in terms of oxide, calculated from the mole percentage)) $\times$ 100. The mass percentage of each of the metal elements other than the platinum group elements in terms of oxide in the first catalyst layer 20 is calculated based on the formula: (the mass of each of the metal elements other than the platinum group elements in terms of oxide, calculated from the mole percentage) / ((the masses of the platinum group elements in terms of metal, calculated from the mole percentage) + (the masses of the metal elements other than the platinum group elements in terms of oxide, calculated from the mole percentage)) $\times$ 100.

It is preferable that the first catalyst layer 20 contains one or more carriers, and that at least part of a catalytically active component is supported on the one or more carriers.

The expression that "at least part of a catalytically active component is supported on a carrier" means the state in which at least part of the catalytically active component is physically and/or chemically adsorbed and/or retained on the outer surface of the carrier and/or on the inner surface of pores of the carrier. Whether at least part of a catalytically active component is supported on a carrier can be confirmed using, for example, SEM-EDX or the like. Specifically, when a carrier and at least part of a catalytically active component are present in the same region in an element mapping obtained by analyzing a cross section of a catalyst layer by SEM-EDX, it can be determined that at least part of the catalytically active component is supported on the carrier.

The carrier can be selected from, for example, an inorganic oxide. The inorganic oxide is, for example, in the form of a particle. From the viewpoint of improving supportability for a catalytically active component, the inorganic oxide is preferably porous. The inorganic oxide may have oxygen storage capacity (OSC) or may not have OSC. The inorganic oxide used as a carrier is distinct from an inorganic oxide used as a binder (e.g., an inorganic oxide binder such as an alumina binder, a zirconia binder, a titania binder, a silica binder, or the like).

Examples of the inorganic oxide include an Al-based oxide, a Ce-based oxide, a Ce-Zr-based complex oxide, an oxide of a rare earth element other than Ce, zirconia ($ZrO_2$), silica ($SiO_2$), titania ($TiO_2$), zeolite (aluminosilicate), an oxide based on MgO, ZnO or $SnO_2$, and the like.

The carrier is preferably selected from the Al-based oxide, the Ce-based oxide and the Ce-Zr-based complex oxide. The first catalyst layer 20 may contain one or more carriers other than the Al-based oxide, the Ce-based oxide and the Ce-Zr-based complex oxide.

In the present specification, the Al-based oxide means an oxide containing Al, wherein Al is the element with the highest content by mass among the elements other than O that constitute the oxide. However, an oxide falling into the category of the Ce-Zr-based complex oxide is excluded from the scope of the Al-based oxide.

The Al-based oxide may contain one or more elements other than Al and O (hereinafter referred to as "the other element(s)"). The other element(s) can be selected from, for example, B, Si, Zr, Cr, rare earth elements (e.g., Y, Ce, La, Nd, Pr, Sm, Gd, and the like), alkaline earth metal elements (e.g., Mg, Ca, Sr, Ba, and the like), and the like. Examples of the Al-based oxide include alumina ($Al_2O_3$), an oxide obtained by modifying the surface of alumina with the other element(s), an oxide obtained by dissolving the other element(s) in alumina, and the like.

In the present specification, the Ce-based oxide means an oxide containing Ce, wherein Ce is the element with the highest content by mass among the elements other than O that constitute the oxide. However, an oxide falling into the category of the Ce-Zr-based complex oxide is excluded from the scope of the Ce-based oxide.

The Ce-based oxide may contain one or more elements other than Ce and O (hereinafter referred to as "the other element(s)"). The other element(s) can be selected from, for example, rare earth elements other than Ce (e.g., Y, Pr, Sc, La, Nd, Sm, Eu, Gd, Tb, Dy, Ho, Er, Tm, Yb, Lu, and the like), alkaline earth metal elements (e.g., Mg, Ca, Sr, Ba, and the like), Fe, Mn, Ni, Zr, Al, and the like. Examples of the Ce-based oxide include ceria ($CeO_2$), an oxide obtained by modifying the surface of ceria with the other element(s), an oxide obtained by dissolving the other element(s) in ceria, and the like.

In the present specification, the Ce-Zr-based complex oxide means a complex oxide containing Ce and Zr, wherein the content of Ce in terms of $CeO_2$ in the complex oxide is 5.0% by mass or more and 95.0% by mass or less based on the mass of the complex oxide, and the content of Zr in terms of $ZrO_2$ in the complex oxide is 5.0% by mass or more and 95.0% by mass or less based on the mass of the complex oxide.

The Ce-Zr-based complex oxide may contain one or more elements other than Ce, Zr and O (hereinafter referred to as "the other element(s)"). The other element(s) can be selected from, for example, rare earth elements other than Ce, alkaline earth metal elements (e.g., Mg, Ca, Sr, Ba, and the like), Fe, Mn, Ni, Zr, Al, and the like. Examples of the Ce-Zr-based complex oxide include $CeO_2$-$ZrO_2$ solid solution, an oxide obtained by modifying the surface of $CeO_2$-$ZrO_2$ solid solution with the other element(s), an oxide obtained by dissolving the other element(s) in $CeO_2$-$ZrO_2$ solid solution, and the like.

The content of the other element(s) in terms of oxide in the Ce-Zr-based complex oxide is, for example, 5% by mass or more and 30% by mass or less based on the mass of the Ce-Zr-based complex oxide. The expression "the content of the other element(s) in terms of oxide in the Ce-Zr-based complex oxide" means, in the case where the Ce-Zr-based complex oxide contains one element as the other element(s), the content of the one element in terms of oxide, and, in the case where the Ce-Zr-based complex oxide contains two or more elements as the other element(s), the total content of the two or more elements in terms of oxide.

In the case where the composition of the Al-based oxide is known, the content of each element in terms of oxide in the Al-based oxide can be determined from the composition of the Al-based oxide.

In the case where the composition of the Al-based oxide is not known, the content of each element in terms of oxide in the Al-based oxide can be determined by analyzing a sample containing the Al-based oxide by energy dispersive X-ray spectroscopy (EDX) to obtain an element mapping, and performing EDX elemental analysis on a designated particle in the obtained element mapping. Specifically, the content of each element in terms of oxide in the designated particle can be determined by qualitatively identifying (color-coding) an Al-based oxide particle and other oxide particle(s) by elemental mapping, and performing compositional analysis (elemental analysis) on the designated particle.

The content of each element in terms of oxide in the Ce-based oxide or the Ce-Zr-based complex oxide can be determined in the same manner as the content of each element in terms of oxide in the Al-based oxide.

The first catalyst layer 20 may contain other components such as a binder, a stabilizer, and the like. Examples of the binder include inorganic oxide binders such as alumina sol, ceria sol, zirconia sol, titania sol and silica sol. Examples of the stabilizer include nitrates, carbonates, oxides and sulfates of alkaline earth metal elements (e.g., Sr, Ba, and the like).

\<Second catalyst layer\>

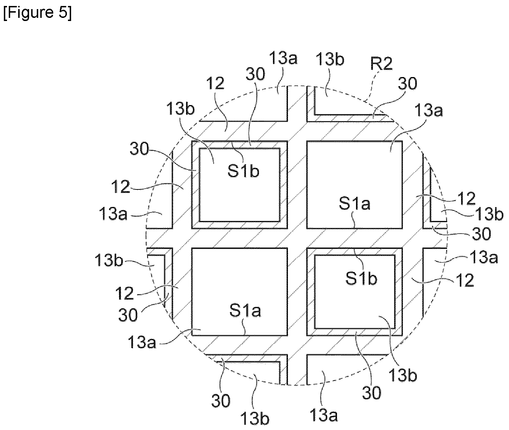

As shown in Figures 5 and 6, the second catalyst layer 30 is formed on the outflow-side cell 13b side of the partition wall 12.

As shown in Figure 6, the second catalyst layer 30 extends from the end on the exhaust gas outflow side of the partition wall 12 along the direction opposite to the exhaust gas flow direction E. In the present embodiment, the second catalyst layer 30 does not reach the end on the exhaust gas inflow side of the partition wall 12. The second catalyst layer 30 may reach the end on the exhaust gas inflow side of the partition wall 12.

As shown in Figures 5 and 6, it is preferable that at least part of the second catalyst layer 30 rises from the outer surface S1b of the partition wall 12 toward the outflow-side cell 13b side, i.e., the second catalyst layer 30 has a portion rising from the outer surface S1b of the partition wall 12 toward the outflow-side cell 13b side (hereinafter referred to as the "rising structure"). This improves the contactability of the second catalyst layer 30 with exhaust gas and PM, thereby more effectively achieving improvement of exhaust gas purification performance and improvement of PM collection performance.

The second catalyst layer 30 may be composed of the rising structure or may have a portion existing inside the partition wall 12 (hereinafter referred to as the "internal structure") in addition to the rising structure. The partition wall 12 is porous, so that when the second catalyst layer 30 is formed, the internal structure may be formed together with the rising structure. The rising structure and the internal structure may be continuous. The second catalyst layer 30 may be composed of the internal structure. The expression that "the second catalyst layer 30 is formed on the outflow-side cell 13b side of the partition wall 12" encompasses an embodiment wherein the second catalyst layer 30 is composed of the rising structure, an embodiment wherein the second catalyst layer 30 is composed of the internal structure, and an embodiment wherein the second catalyst layer 30 has both the rising structure and the internal structure.

The above descriptions with respect to the identification method of the rising structure and internal structure of the first catalyst layer 20 are also applied to the second catalyst layer 30. Upon application, the "first catalyst layer 20" is replaced with the "second catalyst layer 30".

From the viewpoint of balancing exhaust gas purification performance and cost, the mass (mass after calcining) of the second catalyst layer 30 per unit volume of the portion of the substrate 10 provided with the second catalyst layer 30 is preferably 5 g/L or more and 150 g/L or less, more preferably 10 g/L or more and 100 g/L or less, and still more preferably 25 g/L or more and 70 g/L or less. The mass of the second catalyst layer 30 per unit volume of the portion of the substrate 10 provided with the second catalyst layer 30 is calculated from the formula: (Mass of second catalyst layer 30) / ((Volume of substrate 10) × (Average length L30 of second catalyst layer 30 / Length L10 of substrate 10)).

The above descriptions with respect to the mass of the first catalyst layer 20 are also applied to the second catalyst layer 30. Upon application, the "first catalyst layer 20" is replaced with the "second catalyst layer 30".

The above descriptions with respect to the method for measuring the average length L20 of the first catalyst layer 20 are also applied to the method for measuring the average length L30 of the second catalyst layer 30. Upon application, the "first catalyst layer 20" and the "average length L20" are replaced with the "second catalyst layer 30" and the "average length L30", respectively. However, in the method of measuring the average length L30 of the second catalyst layer 30, the sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas outflow side of the sample.

The average length L30 of the second catalyst layer 30 can be appropriately adjusted in consideration of exhaust gas purification performance, PM collection performance, and the like. From the viewpoint of improving exhaust gas purification performance and PM collection performance, the percentage of the average length L30 of the second catalyst layer 30 to the length L10 of the substrate 10 (L30 / L10 × 100) is preferably 15% or more and 90% or less, more preferably 20% or more and 90% or less, and still more preferably 30% or more and 85% or less.

From the viewpoint of improving exhaust gas purification performance and PM collection performance, the percentage of the total of the average length L20 of the first catalyst layer 20 and the average length L30 of the second catalyst layer 30 to the length L10 of the substrate 10 ((L20 + L30) / L10 × 100) is preferably 100% or more and 180% or less, more preferably 100% or more and 170% or less, and still more preferably 105% or more and 150% or less.

The second catalyst layer 30 contains one or more platinum group elements. The above descriptions with respect to the one or more platinum group elements contained in the first catalyst layer 20 and the amount thereof in terms of metal are also applied to the one or more platinum group elements contained in the second catalyst layer 30 and the amount thereof in terms of metal. Upon application, the "first catalyst layer 20" is replaced with the "second catalyst layer 30".

In one embodiment, the second catalyst layer 30 contains Pd and/or Rh. The second catalyst layer 30 may contain one or more other platinum group elements in addition to Pd and/or Rh. The embodiment wherein the second catalyst layer 30 contains Pd and/or Rh can be combined with the embodiment wherein the first catalyst layer 20 contains Rh.

In another embodiment, the second catalyst layer 30 contains Rh. The second catalyst layer 30 may contain one or more other platinum group elements in addition to Rh. The embodiment wherein the second catalyst layer 30 contains Rh can be combined with the embodiment wherein the first catalyst layer 20 contains Pd and/or Rh.

It is preferable that the second catalyst layer 30 contains one or more carriers, and that at least part of a catalytically active component is supported on the one or more carriers. The meaning of the expression "supported" and the confirmation method thereof are the same as described above.

The above descriptions with respect to the carrier contained in the first catalyst layer 20 are also applied to the carrier contained in the second catalyst layer 30. Upon application, the "first catalyst layer 20" is replaced with the "second catalyst layer 30".

The second catalyst layer 30 may contain other components such as a binder, a stabilizer, and the like. The descriptions with respect to the binder and the stabilizer are the same as described above.

<Logarithmic differential pore volume distribution curve>

In the present specification, the "logarithmic differential pore volume distribution curve (log-differential pore volume distribution curve)" means a curve obtained by plotting the value (logarithmic differential pore volume dV/d(logD)) obtained by dividing the increment in pore volume (differential pore volume dV) by the difference in common logarithm (log) between the upper and lower values of the corresponding pore size (differential value d(logD)), against the midpoint of the increment in pore size (average pore size in each interval). The "average pore size" means the diameter.

In the logarithmic differential pore volume distribution curve of the first **catalyst layer 20, the horizontal axis represents the pore size ($\mu$m) of the first** catalyst layer 20, and the vertical axis represents the logarithmic differential pore volume (mL/g) of the first catalyst layer 20 per unit mass of a cut piece M1. The cut piece M1 will be described later.

In the logarithmic differential pore volume distribution curve of the second **catalyst layer 30, the horizontal axis represents the pore size ($\mu$m) of the second** catalyst layer 30, and the vertical axis represents the logarithmic differential pore volume (mL/g) of the second catalyst layer 30 per unit mass of a cut piece M2. The cut piece M2 will be described later.

The logarithmic differential pore volume distribution curve of the first catalyst layer 20 can be obtained by the following method.

The catalyst 1A is cut in a plane parallel to the axial direction of the substrate 10 and in a plane perpendicular to the axial direction of the substrate 10, and the portion indicated by the reference sign M1 in Figure 6 is cut out to obtain a cut piece M1 that includes part of the partition wall 12 and part of the first catalyst layer 20, but does not include the second catalyst layer 30. The cut piece M1 includes neither the first sealing member 14 nor the second sealing member 15. The length of the part of the partition wall 12 included in the cut piece M1 is equal to the length of the cut piece M1. The length of the part of the first catalyst layer 20 included in the cut piece M1 is equal to the length of the cut piece M1. The cut piece M1 can be obtained from the vicinity of the exhaust gas inflow side end of the catalyst 1A. For example, by cutting the substrate 10 at two locations 10 mm and 20 mm apart from the exhaust gas inflow side end in the exhaust gas flow direction E, respectively, in a plane perpendicular to the axial direction of the substrate 10, the cut piece M1 with a length of 10 mm, including part of the partition wall 12 and part of the first catalyst layer 20, but not including the second catalyst layer 30 can be obtained. The size of the cut piece M1 can be changed as appropriate. The cut piece M1 is in the shape of, for example, a cube with a side length of 10 mm.

The logarithmic differential pore volume distribution curve of the first catalyst layer 20 can be obtained by performing mercury porosimetry using the cut piece M1.

The mercury porosimetry can be performed under the following conditions and procedures using an automatic porosimeter "AutoPore IV 9520" manufactured by Shimadzu Corporation.

(Measurement conditions)

Measurement environment: 25°C
Measurement cell: sample chamber volume 3 cm$^3$, press-in volume 0.39 cm$^3$
Measurement range: from 0.0048 MPa to 255.1060 MPa

Measurement point:

54 points in the range of 0.0048 MPa to 0.3447 MPa
77 points in the range of 0.3447 MPa to 255.1060 MPa
131 points in total (the respective points are pitched to be equally spaced when plotting the pressure as a logarithm)
Press-in volume: adjusted to be 25% or more and 90% or less.

(Low pressure parameters)

**Exhaust pressure: 50 μmHg**
Exhaust time: 5.0 min
Mercury injection pressure: 0.0034 MPa
Equilibrium time: 10 sec

(High pressure parameter)

Equilibrium time: 10 sec

(Mercury parameters)

Advancing contact angle: 130.0 degrees
Receding contact angle: 130.0 degrees
Surface tension: 485.0 mN/m (485.0 dyne/cm)
Mercury density: 13.5335 g/mL

(Measurement procedures)

(1) In the low pressure section, measurement is made at 54 points in the range of 0.0048 MPa to 0.3447 MPa or less.

(2) In the high pressure section, measurement is made at 77 points in the range of 0.3792 MPa to 255.1060 MPa or less.

(3) The logarithmic differential pore volume distribution curve (log-differential pore volume distribution curve) is determined from the mercury injection pressure, the mercury injection volume, and the mass of the cut piece M1.

The above (1), (2), and (3) can be carried out automatically by the software attached to the apparatus. Other conditions may be in accordance with JIS R 1655:2003.

Since the cut piece M1 includes part of the partition wall 12 and part of the first catalyst layer 20, the logarithmic differential pore volume distribution obtained by the mercury porosimetry includes the logarithmic differential pore volume distribution of the partition wall 12 in addition to the logarithmic differential pore volume distribution of the first catalyst layer 20. However, the pore size of the partition wall 12 is significantly larger than the pore size of the first catalyst layer 20, and therefore, the logarithmic differential pore volume distribution of the first catalyst layer 20 can be distinguished from the logarithmic differential pore volume distribution of the partition wall 12.

The pore size range in the logarithmic differential pore volume distribution **of the first catalyst layer 20 is, for example, 0.001 μm or more and 12 μm or less, preferably 0.002 μm or more and 11 μm or less, and more preferably 0.003 μm or more and 11 μm or less. The pore size range in the logarithmic differential pore volume distribution of the partition wall 12 is, for example, 11 μm or more and 80 μm or less, preferably 12 μm or more and 50 μm or less, and more preferably 12 μm or more and 30 μm or less.**

The logarithmic differential pore volume distribution curve of the second catalyst layer 30 can be obtained by the following method.

The catalyst 1A is cut in a plane parallel to the axial direction of the substrate 10 and in a plane perpendicular to the axial direction of the substrate 10, and the portion indicated by the reference sign M2 in Figure 6 is cut out to obtain a cut piece M2 that includes part of the partition wall 12 and part of the second catalyst layer 30, but does not include the first catalyst layer 20. The cut piece M2 includes neither the first sealing member 14 nor the second sealing member 15. The length of the part of the partition wall 12 included in the cut piece M2 is equal to the length of the cut piece M2. The length of the part of the second catalyst layer 30 included in the cut piece M2 is equal to the length of the cut piece M2. The cut piece M2 can be obtained from the vicinity of the exhaust gas outflow side end of the catalyst 1A. For example, by cutting the substrate 10 at two locations 10 mm and 20 mm apart from the exhaust gas outflow side end in the direction opposite to the exhaust gas flow direction E, respectively, in a plane perpendicular to the axial direction of the substrate 10, the cut piece M2 with a length of 10 mm, including part of the partition wall 12 and part of the second catalyst layer 30, but not including the first catalyst layer 20 can be obtained. The size of the cut piece M2 can be changed as appropriate. The cut piece M2 is in the shape of, for example, a cube with a side length of 10 mm.

The logarithmic differential pore volume distribution curve of the second catalyst layer 30 can be obtained by performing mercury porosimetry using the cut piece M2.

The mercury porosimetry can be performed under the same conditions and procedures as described above using an automatic porosimeter "AutoPore IV 9520" manufactured by Shimadzu Corporation.

Since the cut piece M2 includes the partition wall 12 and the second catalyst layer 30, the logarithmic differential pore volume distribution obtained by the mercury porosimetry includes the logarithmic differential pore volume distribution of the partition wall 12 in addition to the logarithmic differential pore volume distribution of the second catalyst layer 30. However, the pore size of the partition wall 12 is significantly larger than the pore size of the second catalyst layer 30, and therefore, the logarithmic differential pore volume distribution of the second catalyst layer 30 can be distinguished from the logarithmic differential pore volume distribution of the partition wall 12.

The pore size range in the logarithmic differential pore volume distribution **of the second catalyst layer 30 is, for example, 0.001 μm or more and 12 μm or less, preferably 0.002 μm or more and 12 μm or less, and more preferably 0.003 μm or more and 11 μm or less. The pore size range in the logarithmic differential pore volume distribution of the partition wall 12 is, for example, 11 μm or more and 80 μm or less, preferably 12 μm or more and 50 μm or less, and preferably 12 μm or more and 30 μm or less.**

<Derivative curve of logarithmic differential pore volume distribution curve>

In the present specification, the "derivative curve of the logarithmic differential pore volume distribution curve" means the first derivative curve of the logarithmic differential pore volume distribution curve.

In the derivative curve of the logarithmic differential pore volume distribution curve, the horizontal axis is the same as the horizontal axis of the logarithmic differential pore volume distribution curve, and the vertical axis represents the slope of the tangent line in the logarithmic differential pore volume distribution curve.

The derivative curve of the logarithmic differential pore volume distribution curve can be obtained by the following procedures.

(1) In the logarithmic differential pore volume distribution curve obtained by the method described above, pairs of the pore size $D_n$ and the value $v_n$ corresponding to the pore size $D_n$ in the logarithmic differential pore volume distribution curve (n represents an integer of 1 or more and 131 or less) are defined as $(D_1, v_1), (D_2, v_2), ... , (D_n, v_n), ... , (D_{131}, v_{131})$ in ascending order of pore size.

(2) For each pore size $D_n$ **of** $1 \leq \mathbf{n} \leq \mathbf{130}$, **the value of** $(v_{n+1} - v_n)/(D_{n+1} - D_n)$ is defined as the derivative value at the pore size $D_n$ in the logarithmic differential pore volume distribution curve.

(3) By plotting the derivative value in the logarithmic differential pore volume distribution curve obtained in (2) above against each pore size $D_n$, the derivative curve of the logarithmic differential pore volume distribution curve can be obtained.

<Peak value>

The "peak value" in the logarithmic differential pore volume distribution curve will be described below.

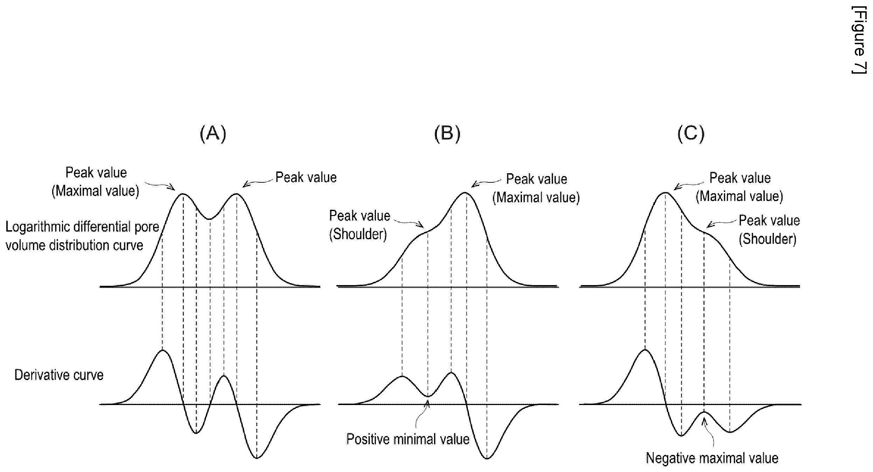

(P1) In the case where one or more maximal values are present in the logarithmic differential pore volume distribution curve as shown in Figure 7A, each of the maximal values (logarithmic differential pore volume at each of the vertices) in the logarithmic differential pore volume distribution curve correspond to the "peak value".

(P2) In the case where a shoulder is present on the smaller pore size side of a certain peak in the logarithmic differential pore volume distribution curve as shown in Figure 7B, there is a positive minimal value at the portion corresponding to the shoulder in the derivative curve of the logarithmic differential pore volume distribution curve. The pore size that gives the minimal value is determined from the derivative curve of the logarithmic differential pore volume distribution curve, and the logarithmic differential pore volume corresponding to the determined pore size is determined from the logarithmic differential pore volume distribution curve. The determined logarithmic differential pore volume corresponds to the "peak value". In the case where a shoulder is present on the smaller pore size side of a certain peak in the logarithmic differential pore volume distribution curve, the shoulder is normally upward to the right as shown in Figure 7B.

(P3) In the case where a shoulder is present on the larger pore size side of a certain peak in the logarithmic differential pore volume distribution curve, there is a negative maximal value at the portion corresponding to the shoulder in the derivative curve of the logarithmic differential pore volume distribution curve. The pore size that gives the maximal value is determined from the derivative curve of the logarithmic differential pore volume distribution curve, and the logarithmic differential pore volume corresponding to the determined pore size is determined from the logarithmic differential pore volume distribution curve. The determined logarithmic differential pore volume corresponds to the "peak value". In the case where a shoulder is present on the larger pore size side of a certain peak in the logarithmic differential pore volume distribution curve, the shoulder is normally downward to the right as shown in Figure 7C.

As described above, the "peak value" in the logarithmic differential pore volume distribution curve encompasses not only the maximal value (logarithmic differential pore volume at the vertex) in that curve, but also the shoulder in that curve. That is, the "peak value" in the logarithmic differential pore volume distribution curve encompasses the peak value defined in (P1) (hereinafter referred to as "peak value P1"), the peak value defined in (P2) (hereinafter referred to as "peak value P2"), and the peak value defined in (P3) (hereinafter referred to as "peak value P3"). In the logarithmic differential pore volume distribution curve, it is only required that one or more of the peak values P1, P2, and P3 be present, and it is not necessary that all of the peak values P1, P2, and P3 be present. In the logarithmic differential pore volume distribution curve, two or more peak values P1 may be present, two or more peak values P2 may be present, and two or more peak values P3 may be present.

<Peak value A>

Hereinafter, the expression that "a peak value A is present in the pore **size range of 1 $\mu$m or more and 3 $\mu$m or less in the logarithmic differential pore** volume distribution curve of the first catalyst layer 20" will be described.

In the case where one peak value (which may be any of the peak values **P1, P2, and P3) is present in the pore size range of 1 $\mu$m or more and 3 $\mu$m or** less in the logarithmic differential pore volume distribution curve of the first catalyst layer 20, the one peak value corresponds to the "peak value A".

In the case where two or more peak values (each of which may be any **of the peak values P1, P2, and P3) are present in the pore size range of 1 $\mu$m or more and 3 $\mu$m or less in the logarithmic differential pore volume distribution curve** of the first catalyst layer 20, the maximum value among the two or more peak values corresponds to the "peak value A".

The peak value A may be any of the peak values P1, P2, and P3. In one embodiment, it is the peak value P1 or P2.

<Peak value B>

Hereinafter, the expression that "a peak value B is present in the pore **size range of more than 3 μm and 10 μm or less in the logarithmic differential** pore volume distribution curve of the first catalyst layer 20" will be described.

In the case where one peak value (which may be any of the peak values **P1, P2, and P3) is present in the pore size range of more than 3 μm and 10 μm** or less in the logarithmic differential pore volume distribution curve of the first catalyst layer 20, the one peak value corresponds to the "peak value B".

In the case where two or more peak values (each of which may be any of the peak values P1, P2, and P3) are present in the pore size range of more than **3 μm and 10 μm or less in the logarithmic differential pore volume distribution** curve of the first catalyst layer 20, the maximum value among the two or more peak values corresponds to the "peak value B".

The peak value B may be any of the peak values P1, P2, and P3. In one embodiment, it is the peak value P1 or P3.

<Peak value C>

Hereinafter, the expression that "a peak value C is present in the pore **size range of 1 μm or more and 3 μm or less in the logarithmic differential pore** volume distribution curve of the second catalyst layer 30" will be described.

In the case where one peak value (which may be any of the peak values **P1, P2, and P3) is present in the pore size range of 1 μm or more and 3 μm or** less in the logarithmic differential pore volume distribution curve of the second catalyst layer 30, the one peak value corresponds to the "peak value C".

In the case where two or more peak values (each of which may be any of **the peak values P1, P2, and P3) are present in the pore size range of 1 μm or more and 3 μm or less in the logarithmic differential pore volume distribution curve** of the second catalyst layer 30, the maximum value among the two or more peak values corresponds to the "peak value C".

The peak value C may be any of the peak values P1, P2, and P3. In one embodiment, it is the peak value P1 or P2.

<Peak value D>

Hereinafter, the expression "a peak value D is present in the pore size **range of more than 3 μm and 10 μm or less in the logarithmic differential pore** volume distribution curve of the second catalyst layer 30" will be described.

In the case where one peak value (which may be any of the peak values **P1, P2, and P3) is present in the pore size range of more than 3 μm and 10 μm** or less in the logarithmic differential pore volume distribution curve of the second catalyst layer 30, the one peak value corresponds to the "peak value D".

In the case where two or more peak values (each of which may be any of the peak values P1, P2, and P3) are present in the pore size range of more than **3 μm and 10 μm or less in the logarithmic differential pore volume distribution** curve of the second catalyst layer 30, the maximum value among the two or more peak values corresponds to the "peak value D".

The peak value D may be any of the peak values P1, P2, and P3. In one embodiment, it is the peak value P1 or P3.

<Parameters of the present invention>

In the present specification,

"Condition 1" is defined as the condition that, in the logarithmic differential pore volume distribution curve of the first catalyst layer 20 obtained by mercury porosimetry, a peak value A is present in the pore size range of 1 **μm or more and 3 μm or less and the peak value A is 0.20 mL/g or more,**
"Condition 2" is defined as the condition that, in the logarithmic differential pore volume distribution curve of the first catalyst layer 20 obtained by mercury porosimetry, a peak value B is present in the pore size range of **more than 3 μm and 10 μm or less and the peak value B is 0.20 mL/g or more,**
"Condition 3" is defined as the condition that, in the logarithmic differential pore volume distribution curve of the second catalyst layer 30 obtained by mercury porosimetry, a peak value C is present in the pore size **range of 1 μm or more and 3 μm or less and the peak value C is 0.20 mL/g or** more, and
"Condition 4" is defined as the condition that, in the logarithmic differential pore volume distribution curve of the second catalyst layer 30 obtained by mercury porosimetry, a peak value D is present in the pore size range of more **than 3 μm and 10 μm or less and the peak value D is 0.20 mL/g or more.**

It is preferable that the second catalyst layer 30 satisfies Condition 3 and does not satisfy Condition 4; or satisfies Condition 4 and does not satisfy Condition 3; or satisfies Conditions 3 and 4; or satisfies none of Conditions 3 and 4.

When the second catalyst layer 30 satisfies Condition 3 and does not satisfy Condition 4, it is preferable that the first catalyst layer 20 satisfies at least Condition 2 of Conditions 1 and 2. When the second catalyst layer 30 satisfies Condition 4 and does not satisfy Condition 3, it is preferable that the first catalyst layer 20 satisfies at least Condition 1 of Conditions 1 and 2. When the second catalyst layer 30 satisfies Conditions 3 and 4, it is preferable that the first catalyst layer 20 satisfies at least one of Conditions 1 and 2, or none of Conditions 1 and 2. When the second catalyst layer 30 satisfies none of Conditions 3 and 4, it is preferable that the first catalyst layer 20 satisfies Conditions 1 and 2.

That is, the catalyst 1A encompasses the following aspects (i) to (ix).

[Table 1]

Table 1

|  | First catalyst layer | | Second catalyst layer | |
|---|---|---|---|---|
|  | Condition 1 | Condition 2 | Condition 3 | Condition 4 |
| (i) | Satisfied | Satisfied | Satisfied | Not satisfied |
| (ii) | Not satisfied | Satisfied | Satisfied | Not satisfied |
| (iii) | Satisfied | Satisfied | Not satisfied | Satisfied |
| (iv) | Satisfied | Not satisfied | Not satisfied | Satisfied |
| (v) | Satisfied | Satisfied | Satisfied | Satisfied |
| (vi) | Satisfied | Not satisfied | Satisfied | Satisfied |
| (vii) | Not satisfied | Satisfied | Satisfied | Satisfied |
| (viii) | Not satisfied | Not satisfied | Satisfied | Satisfied |
| (ix) | Satisfied | Satisfied | Not satisfied | Not satisfied |

Smaller pores in the first catalyst layer 20 and the second catalyst layer 30 improve PM collection performance, but increase pressure loss. On the other hand, larger pores in the first catalyst layer 20 and the second catalyst layer 30 suppress an increase in pressure loss, but decrease PM collection performance. Therefore, one type of pore size control, that is, making the pores of the first catalyst layer 20 and the second catalyst layer 30 smaller or making the pores of the first catalyst layer 20 and the second catalyst layer 30 larger, cannot achieve both of improvement of PM collection performance and suppression of an increase in pressure loss. In contrast, in the above-described aspects (i) to (ix), the first catalyst layer 20 and the second catalyst layer 30, as a whole, satisfy the condition that the peak value A and/or the peak value C, each of which corresponds to a small pore size, are/is 0.20 mL/g or more, and the condition that the peak value B and/or the peak value D, each of which corresponds to a large pore size, are/is 0.20 mL/g or more. This ensures that the amount of pores contributing to PM collection performance and the amount of pores contributing to a reduction in pressure loss are sufficient, thereby achieving both of improvement of PM collection performance and suppression of an increase in pressure loss.

From the viewpoint of more effectively achieving both of improvement of PM collection performance and suppression of an increase in pressure loss, it is more preferable that the second catalyst layer 30 satisfies Condition 3 and does not satisfy Condition 4, or satisfies Condition 4 and does not satisfy Condition 3, or satisfies Conditions 3 and 4; that when the second catalyst layer 30 satisfies Condition 3 and does not satisfy Condition 4, the first catalyst layer 20 satisfies at least Condition 2 of Conditions 1 and 2; that when the second catalyst layer 30 satisfies Condition 4 and does not satisfy Condition 3, the first catalyst layer 20 satisfies at least Condition 1 of Conditions 1 and 2; and that when the second catalyst layer 30 satisfies Conditions 3 and 4, the first catalyst layer 20 satisfies at least one of Conditions 1 and 2.

In Condition 1, the peak value A is not particularly limited as long as it is 0.20 mL/g or more, but from the viewpoint of more effectively achieving both of improvement of PM collection performance and suppression of an increase in pressure loss, it is preferably 0.31 mL/g or more, and more preferably 0.40 mL/g or more.

In Condition 1, the upper limit of the peak value A is not particularly limited, but from the viewpoint of more effectively achieving both of improvement of PM collection performance and suppression of an increase in pressure loss, it is preferably 1.00 mL/g or less, more preferably 0.80 mL/g or less, and even more preferably 0.50 mL/g or less. Each of these upper limits may be combined with any of the lower limits mentioned above.

In Condition 2, the peak value B is not particularly limited as long as it is 0.20 mL/g or more, but from the viewpoint of more effectively achieving both of improvement of PM collection performance and suppression of an increase in pressure loss, it is preferably 0.30 mL/g or more, and more preferably 0.42 mL/g or more.

In Condition 2, the upper limit of the peak value B is not particularly limited, but from the viewpoint of more effectively achieving both of improvement of PM collection performance and suppression of an increase in pressure loss, it is preferably 1.00 mL/g or less, more preferably 0.80 mL/g or less, and even more preferably 0.50 mL/g or less. Each of these upper limits may be combined with any of the lower limits mentioned above.

In Condition 3, the peak value C is not particularly limited as long as it is 0.20 mL/g or more, but from the viewpoint of more effectively achieving both of improvement of PM collection performance and suppression of an increase in pressure loss, it is preferably 0.31 mL/g or more, and more preferably 0.40 mL/g or more.

In Condition 3, the upper limit of the peak value C is not particularly limited, but from the viewpoint of more effectively achieving both of improvement of PM collection performance and suppression of an increase in pressure loss, it is preferably 1.00 mL/g or less, more preferably 0.80 mL/g or less, and even more preferably 0.50 mL/g or less. Each of these upper limits may be combined with any of the lower limits mentioned above.

In Condition 4, the peak value D is not particularly limited as long as it is 0.20 mL/g or more, but from the viewpoint of more effectively achieving both of improvement of PM collection performance and suppression of an increase in pressure loss, it is preferably 0.30 mL/g or more, and more preferably 0.42 mL/g or more.

In Condition 4, the upper limit of the peak value D is not particularly limited, but from the viewpoint of more effectively achieving both of improvement of PM collection performance and suppression of an increase in pressure loss, it is preferably 1.00 mL/g or less, more preferably 0.80 mL/g or less, and even more preferably 0.50 mL/g or less. Each of these upper limits may be combined with any of the lower limits mentioned above.

<Effect of exhaust gas purification catalyst>

Exhaust gas emitted from an internal combustion engine flows through the exhaust gas path in the exhaust gas pipe P from one end to the other end of the exhaust gas pipe P, and is purified by the catalyst 1A provided in the exhaust pipe P. In this case, the exhaust gas that has flowed in from the end (opening) on the exhaust gas inflow side of the inflow-side cell 13a passes through the first catalyst layer 20 and the porous partition wall 12, and/or through the porous partition wall 12 and the second catalyst layer 30, and/or through the first catalyst layer 20, the porous partition wall 12 and the second catalyst layer 30, and flows out from the end (opening) on the exhaust gas outflow side of the outflow-side cell 13b. Such a mode is called a wall-flow type.

In the catalyst 1A, when the exhaust gas that has flowed in from the end (opening) on the exhaust gas inflow side of the inflow-side cell 13a passes through the first catalyst layer 20 and the porous partition wall 12, or through the porous partition wall 12 and the second catalyst layer 30, or through the first catalyst layer 20, the porous partition wall 12 and the second catalyst layer 30, particulate matter (PM) in the exhaust gas is collected in the pores of the partition wall 12, the pores of the first catalyst layer 20, and/or the pores of the second catalyst layer 30. Therefore, the catalyst 1A is useful as a particulate filter for a gasoline engine or as a diesel particulate filter for a diesel engine.

In the above-described aspects (i) to (ix), the first catalyst layer 20 and the second catalyst layer 30, as a whole, satisfy the condition that the peak value A and/or the peak value C, each of which corresponds to a small pore size, are/is 0.20 mL/g or more, and the condition that the peak value B and/or the peak value D, each of which corresponds to a large pore size, are/is 0.20 mL/g or more. This allows two types of pore size control to be achieved, thereby achieving both of improvement of PM collection performance and suppression of an increase in pressure loss.

<Production method of exhaust gas purification catalyst>

Hereinafter, an embodiment of a method for producing the catalyst 1A will be described. The catalyst 1A to be produced by the method according to the present embodiment encompasses aspects other than the above-described aspects (i) to (ix). The method according to the present embodiment is suitable for producing the above-described aspects (i) to (ix).

The method according to the present embodiment includes the following steps of:

(1a) applying a first slurry containing a first pore forming agent onto the inflow-side cell side of the partition wall 12 of the substrate 10 to form a first precursor layer;
(1b) applying a second slurry containing a second pore forming agent onto the outflow-side cell side of the partition wall 12 of the substrate 10 to form a second precursor layer; and
(1c) calcining the first precursor layer and the second precursor layer to form the first catalyst layer 20 and the second catalyst layer 30, respectively.

Step 1a may be performed before or after Step 1b. Step 1c is performed after Steps 1a and 1b.

<Step 1a>

Step 1a is a step of applying a first slurry containing a first pore forming agent onto the inflow-side cell side of the partition wall 12 of the substrate 10 to form a first precursor layer.

The first slurry contains the first pore forming agent. Examples of the first pore forming agent include cross-linked poly(methyl (meth)acrylate) particles, cross-linked poly(butyl (meth)acrylate) particles, cross-linked polystyrene particles, cross-linked polyacrylate particles, melamine-based resins, and the like.

The composition of the first slurry can be adjusted depending on the composition of the first catalyst layer 20. The first slurry contains, in addition to the first pore forming agent, for example, a supply source of a platinum group element, an inorganic oxide particle, a binder, a solvent, and the like. Examples of the supply source of the platinum group element include a salt of the platinum group element. Examples of the salt of the platinum group element include a nitrate, an ammine complex salt, an acetate, a chloride, and the like. The descriptions with respect to the inorganic oxide constituting the inorganic oxide particle are the same as described above. Examples of the binder include alumina sol, zirconia sol, titania sol, silica sol, ceria sol, and the like. Examples of the solvent include water, an organic solvent, and the like. One solvent may be used, or a mixture of two or more solvents may be used.

The first precursor layer, which is a precursor of the first catalyst layer 20, is formed by applying the first slurry onto the inflow-side cell side of the partition wall 12 of the substrate 10 (i.e., the outer surface S1a on the inflow-side cell 13a side of the partition wall 12), followed by drying. The drying temperature is, for example, 40°C or more and 150°C or less. The drying time is, for example, 5 minutes or more and 1 hour or less.

The particle size of the first pore forming agent can be adjusted as appropriate. The first pore forming agent has a median particle size D50 of, **preferably 0.1 $\mu$m or more and 20 $\mu$m or less, more preferably 0.5 $\mu$m or more and 17 $\mu$m or less, and still more preferably 1.5 $\mu$m or more and 15 $\mu$m or less.** By adjusting the particle size, amount, and the like of the first pore forming agent, it is possible to form the first catalyst layer 20 that satisfies none of Conditions 1 and 2, the first catalyst layer 20 that satisfies one of Conditions 1 and 2, and the first catalyst layer 20 that satisfies both of Conditions 1 and 2.

D50 is the particle size at which the cumulative volume reaches 50% in a particle size distribution based on volume as measured by a laser diffraction scattering particle size distribution measurement method. D50 is measured by: introducing a sample to be measured into an aqueous dispersion medium with an automatic sample feeder ("Microtorac SDC" manufactured by MicrotracBEL Corporation) for a laser diffraction scattering particle size distribution analyzer, irradiating a 40-W ultrasonic wave for 360 seconds in a flow velocity of 32.5 mL/sec, followed by carrying out measurement using a laser diffraction scattering particle size distribution analyzer ("Microtrac MT3300EXII" manufactured by MicrotracBEL Corporation). The measurement is carried out twice under the conditions of particle refractive index: 1.5, particle shape: true sphere, solvent refractive index: 1.3, set-zero: 30 seconds, and measurement time: 30 seconds, and the mean value of the measured values is defined as D50. Pure water is used as the aqueous dispersion medium.

<Step 1b>

Step 1b is a step of applying a second slurry containing a second pore forming agent onto the outflow-side cell side of the partition wall 12 of the substrate 10 to form a second precursor layer.

The second slurry contains the second pore forming agent. Examples of the second pore forming agent are the same as the above-described examples of the first pore forming agent.

The composition of the second slurry can be adjusted depending on the composition of the second catalyst layer 30. The second slurry contains, in addition to the second pore forming agent, for example, a supply source of a platinum group element, an inorganic oxide particle, a binder, a solvent, and the like. Examples of the supply source of the platinum group element include a salt of the platinum group element. Examples of the salt of the platinum group element include a nitrate, an ammine complex salt, an acetate, a chloride, and the like. The descriptions with respect to the inorganic oxide constituting the inorganic oxide particle are the same as described above. Examples of the binder include alumina sol, zirconia sol, titania sol, silica sol, ceria sol, and the like. Examples of the solvent include water, an organic solvent, and the like. One solvent may be used, or a mixture of two or more solvents may be used.

The second precursor layer, which is a precursor of the second catalyst layer 30, is formed by applying the second slurry onto the outflow-side cell side of the partition wall 12 of the substrate 10 (i.e., the outer surface S1b on the outflow-side cell 13b side of the partition wall 12), followed by drying. The drying temperature is, for example, 40°C or more and 150°C or less. The drying time is, for example, 5 minutes or more and 1 hour or less.

The particle size of the second pore forming agent can be adjusted as appropriate. The second pore forming agent has a median particle size D50 of, **preferably 0.1 $\mu$m or more and 20 $\mu$m or less, more preferably 0.5 $\mu$m or more and 17 $\mu$m or less, and still more preferably 1.5 $\mu$m or more and 15 $\mu$m or less.** By adjusting the particle size, amount, and the like of the second pore forming agent, it is possible to form the second catalyst layer 30 that satisfies none of Conditions 3 and 4, the second catalyst layer 30 that satisfies one of Conditions 3 and 4, and the second catalyst layer 30 that satisfies both of Conditions 3 and 4. The meaning and measurement method of D50 are the same as described above.

<Step 1c>

Step 1c is a step of calcining the first precursor layer and the second precursor layer to form the first catalyst layer 20 and the second catalyst layer 30, respectively.

The first catalyst layer 20 and the second catalyst layer 30 are formed by calcining the first precursor layer and the second precursor layer, respectively. The calcining temperature is, for example, 350°C or more and 600°C or less. The calcining time is, for example, 20 minutes or more and 5 hours or less. The atmosphere in which the calcining is carried out is usually an air atmosphere.

The first pore forming agent disappears during the calcining of the first precursor layer, thereby forming pores in the first catalyst layer 20. The second pore forming agent disappears during the calcining of the second precursor layer, thereby forming pores in the second catalyst layer 30. By adjusting the particle sizes, amounts, and the like of the first and second pore forming agents, the logarithmic differential pore volume distributions of the first catalyst layer 20 and the second catalyst layer 30 can be controlled.

It is preferable that the method according to the present embodiment satisfies the following conditions (C1) to (C7). This ensures that the amount of pores contributing to PM collection performance and the amount of pores contributing to a reduction in pressure loss are sufficient, thereby achieving both of improvement of PM collection performance and suppression of an increase in pressure loss. When the method according to the present embodiment satisfies the following conditions (C1) to (C7), the method according to the present embodiment is particularly suitable for producing the above-described aspects (i) to (ix).

(C1) Of the first and second pore forming agents, one pore forming agent has **a median particle size D50 of more than 4 $\mu$m, and the other pore forming agent has a median particle size D50 of 4 $\mu$m or less.**

(C2) The first slurry contains an inorganic oxide particle, and the inorganic **oxide particle contained in the first slurry has a median particle size D50 of 1 $\mu$m or more and 20 $\mu$m or less.**

(C3) The amount of the first pore forming agent contained in the first precursor layer is 10% by mass or more and 60% by mass or less based on the mass (mass after calcining) of the first catalyst layer 20.

(C4) The mass (mass after calcining) of the first catalyst layer 20 per unit volume of the portion of the substrate 10 provided with the first catalyst layer 20 is 5 g/L or more and 150 g/L or less.

(C5) The second slurry contains an inorganic oxide particle, and the inorganic oxide particle contained in the second slurry has a median particle size D50 of 1 **$\mu$m or more and 20 $\mu$m or less.**

(C6) The amount of the second pore forming agent contained in the second precursor layer is 10% by mass or more and 60% by mass or less based on the mass (mass after calcining) of the second catalyst layer 30.

(C7) The mass (mass after calcining) of the second catalyst layer 30 per unit volume of the portion of the substrate 10 provided with the second catalyst layer 30 is 5 g/L or more and 150 g/L or less.

Hereinafter, Condition (C1) will be described.

From the viewpoint of more effectively achieving both of improvement of PM collection performance and suppression of an increase in pressure loss, the **median particle size D50 of the one pore forming agent is more preferably 4.5 $\mu$m or more and 20 $\mu$m or less, still more preferably 4.5 $\mu$m or more and 17 $\mu$m or less, and still more preferably 4.5 $\mu$m or more and 15 $\mu$m or less.**

From the viewpoint of more effectively achieving both of improvement of PM collection performance and suppression of an increase in pressure loss, the median particle size D50 of the other pore forming agent is more preferably 0.1 $\mu$m or more and 4 $\mu$m or less, still more preferably 0.5 $\mu$m or more and 4 $\mu$m or less, and still more preferably 1.5 $\mu$m or more and 4 $\mu$m or less.**

Hereinafter, Condition (C2) will be described.

From the viewpoint of more effectively achieving both of improvement of PM collection performance and suppression of an increase in pressure loss, the median particle size D50 of the inorganic oxide particle contained in the first slurry **is more preferably 1.5 $\mu$m or more and 15 $\mu$m or less, and still more preferably 2 $\mu$m or more and 10 $\mu$m or less.**

Hereinafter, Condition (C3) will be described.

From the viewpoint of more effectively achieving both of improvement of PM collection performance and suppression of an increase in pressure loss, the amount of the first pore forming agent contained in the first precursor layer is more preferably 20% by mass or more and 50% by mass or less, and still more preferably 25% by mass or more and 45% by mass or less, based on the mass (mass after calcining) of the first catalyst layer 20. The amount of the first pore forming agent contained in the first precursor layer can be adjusted by adjusting the amount of the first pore forming agent contained in the first slurry, the amount of the first slurry applied onto the inflow-side cell side of the partition wall 12 of the substrate 10, and the like. The mass of the first catalyst layer 20 can be determined by subtracting the mass of components that disappear by drying and calcining of the first slurry (e.g., the solvent, the pore forming agent, and the like) from the mass of the first slurry applied onto the inflow-side cell side of the partition wall 12 of the substrate 10.

Hereinafter, Condition (C4) will be described.

From the viewpoint of more effectively achieving both of improvement of PM collection performance and suppression of an increase in pressure loss, the mass (mass after calcining) of the first catalyst layer 20 per unit volume of the portion of the substrate 10 provided with the first catalyst layer 20 is more preferably 10 g/L or more and 100 g/L or less, and still more preferably 25 g/L or more and 70 g/L or less. The mass of the first catalyst layer 20 per unit volume of the portion of the substrate 10 provided with the first catalyst layer 20 can be adjusted by adjusting the amount of the first slurry applied onto the inflow-side cell side of the partition wall 12 of the substrate 10, and the like.

Hereinafter, Condition (C5) will be described.

From the viewpoint of more effectively achieving both of improvement of PM collection performance and suppression of an increase in pressure loss, the median particle size D50 of the inorganic oxide particle contained in the **second slurry is more preferably 1.5 $\mu$m or more and 15 $\mu$m or less, and still more preferably 2 $\mu$m or more and 10 $\mu$m or less.**

Hereinafter, Condition (C6) will be described.

From the viewpoint of more effectively achieving both of improvement of PM collection performance and suppression of an increase in pressure loss, the amount of the second pore forming agent contained in the second precursor layer is more preferably 20% by mass or more and 50% by mass or less, and still more preferably 25% by mass or more and 45% by mass or less, based on the mass (mass after calcining) of the second catalyst layer 30. The amount of the second pore forming agent contained in the second precursor layer can be adjusted by adjusting the amount of the second pore forming agent contained in the second slurry, the amount of the second slurry applied onto the outflow-side cell side of the partition wall 12 of the substrate 10, and the like. The mass of the second catalyst layer 30 can be determined by subtracting the mass of components that disappear by drying and calcining of the second slurry (e.g., the solvent, the pore forming agent, and the like) from the mass of the second slurry applied onto the outflow-side cell side of the partition wall 12 of the substrate 10.

Hereinafter, Condition (C7) will be described.

From the viewpoint of more effectively achieving both of improvement of PM collection performance and suppression of an increase in pressure loss, the mass (mass after calcining) of the second catalyst layer 30 per unit volume of the portion of the substrate 10 provided with the second catalyst layer 30 is more preferably 10 g/L or more and 100 g/L or less, and still more preferably 25 g/L or more and 70 g/L or less. The mass of the second catalyst layer 30 per unit volume of the portion of the substrate 10 provided with the second catalyst layer 30 can be adjusted by adjusting the amount of the second slurry applied onto the outflow-side cell side of the partition wall 12 of the substrate 10, and the like.

<<Second embodiment>>

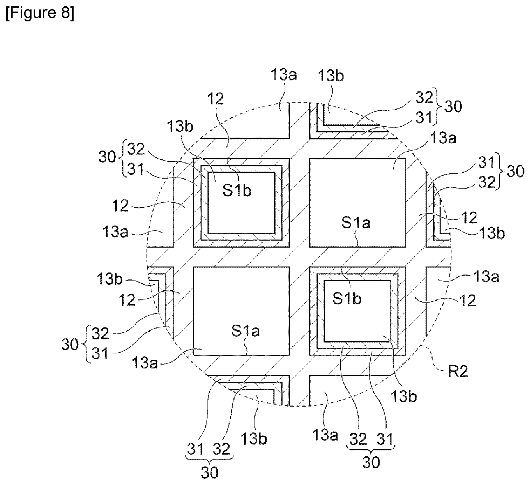

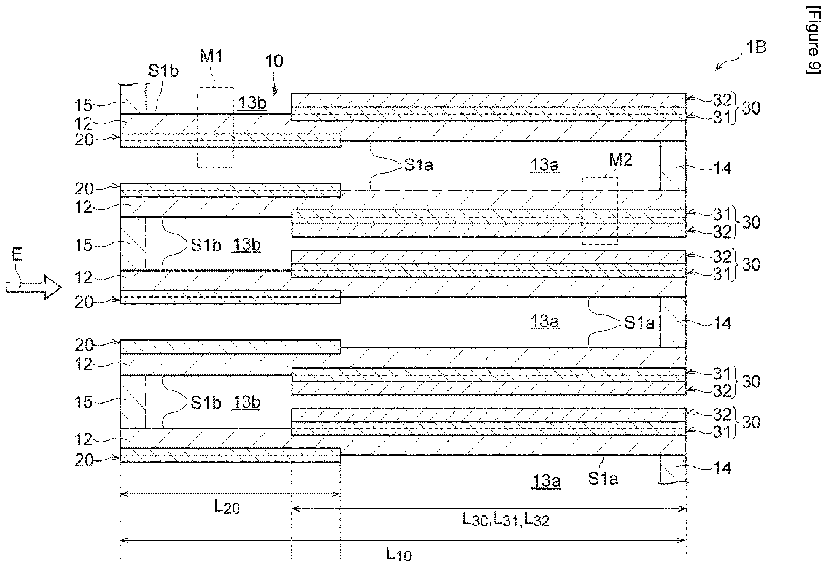

With reference to Figures 8 and 9, the second embodiment of the present invention will be described below.

As shown in Figures 8 and 9, an exhaust gas purification catalyst 1B according to the second embodiment (hereinafter referred to as the "catalyst 1B") differs from the catalyst 1A in that the second catalyst layer 30 has a layered structure including a lower layer 31 and an upper layer 32, instead of a single-layer structure. The lower layer is a layer located on the side of the partition wall 12 compared to the upper layer. In the case where the second catalyst layer 30 has a layered structure, PM collection performance can be improved compared to the case where the second catalyst layer 30 has a single-layer structure.

In the catalyst 1B, the same members as those of the catalyst 1A are denoted by the same reference signs as those of the catalyst 1A. Unless otherwise specified, the above descriptions with respect to the catalyst 1A are also applied to the catalyst 1B. Upon application, the "catalyst 1A" is replaced with the "catalyst 1B".

In the catalyst 1B, the logarithmic differential pore volume distribution of the second catalyst layer 30 is the sum of the logarithmic differential pore volume distribution of the lower layer 31 and the logarithmic differential pore volume distribution of the upper layer 32.

The cut piece M2 used in the mercury porosimetry includes part of the partition wall 12 and part of the second catalyst layer 30 (part of the lower layer 31 and part of the upper layer 32), but does not include the first catalyst layer 20. Other aspects regarding the cut piece M2 are the same as described above.

<Lower layer>

As shown in Figures 8 and 9, the lower layer 31 is formed on the outflow-side cell 13b side of the partition wall 12.

As shown in Figures 8 and 9, the lower layer 31 extends from the end on the exhaust gas outflow side of the partition wall 12 along the direction opposite to the exhaust gas flow direction E. In the present embodiment, the lower layer 31 does not reach the end on the exhaust gas inflow side of the partition wall 12. The lower layer 31 may reach the end on the exhaust gas inflow side of the partition wall 12.

As shown in Figures 8 and 9, it is preferable that at least part of the lower layer 31 rises from the outer surface S1b of the partition wall 12 toward the outflow-side cell 13b side, i.e., the lower layer 31 has a portion rising from the outer surface S1b of the partition wall 12 toward the outflow-side cell 13b side (hereinafter referred to as the "rising structure"). This improves the contactability of the lower layer 31 with exhaust gas and PM, thereby more effectively improving exhaust gas purification performance and PM collection performance.

The lower layer 31 may be composed of the rising structure or may have a portion existing inside the partition wall 12 (hereinafter referred to as the "internal structure") in addition to the rising structure. The partition wall 12 is porous, so that when the lower layer 31 is formed, the internal structure may be formed together with the rising structure. The rising structure and the internal structure may be continuous. The lower layer 31 may be composed of the internal structure. The expression that "the lower layer 31 is formed on the outflow-side cell 13b side of the partition wall 12" encompasses an embodiment wherein the lower layer 31 is composed of the rising structure, an embodiment wherein the lower layer 31 is composed of the internal structure, and an embodiment wherein the lower layer 31 has both the rising structure and the internal structure.

The above descriptions with respect to the identification method of the rising structure and internal structure of the first catalyst layer 20 are also applied to the lower layer 31. Upon application, the "first catalyst layer 20" is replaced with the "lower layer 31".

From the viewpoint of balancing exhaust gas purification performance and cost, the mass (mass after calcining) of the lower layer 31 per unit volume of the portion of the substrate 10 provided with the lower layer 31 is preferably 5 g/L or more and 90 g/L or less, more preferably 10 g/L or more and 70 g/L or less, and still more preferably 15 g/L or more and 50 g/L or less. The mass of the lower layer 31 per unit volume of the portion of the substrate 10 provided with the lower layer 31 is calculated from the formula: (Mass of lower layer 31) / ((Volume of substrate 10) × (Average length L31 of lower layer 31 / Length L10 of substrate 10)).

The above descriptions with respect to the mass of the first catalyst layer 20 are also applied to the lower layer 31. Upon application, the "first catalyst layer 20" is replaced with the "lower layer 31".

The above descriptions with respect to the method for measuring the average length L20 of the first catalyst layer 20 are also applied to the method for measuring the average length L31 of the lower layer 31. Upon application, the "first catalyst layer 20" and the "average length L20" are replaced with the "lower layer 31" and the "average length L31", respectively. However, in the method of measuring the average length L31 of the lower layer 31, the sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas outflow side of the sample.

The average length L31 of the lower layer 31 can be appropriately adjusted in consideration of exhaust gas purification performance, PM collection performance, and the like. From the viewpoint of improving exhaust gas purification performance and PM collection performance, the percentage of the average length L31 of the lower layer 31 to the length L10 of the substrate 10 (L31 / L10 × 100) is preferably 15% or more and 90% or less, more preferably 20% or more and 90% or less, and still more preferably 30% or more and 85% or less.

From the viewpoint of improving exhaust gas purification performance and PM collection performance, the percentage of the total of the average length L20 of the first catalyst layer 20 and the average length L31 of the lower layer 31 to the length L10 of the substrate 10 ((L20 + L31) / L10 × 100) is preferably 100% or more and 180% or less, more preferably 100% or more and 170% or less, and still more preferably 105% or more and 150% or less.

The lower layer 31 contains one or more platinum group elements. The above descriptions with respect to the one or more platinum group elements contained in the first catalyst layer 20 and the amount thereof in terms of metal are also applied to the one or more platinum group elements contained in the lower layer 31 and the amount thereof in terms of metal. Upon application, the "first catalyst layer 20" is replaced with the "lower layer 31".

In one embodiment, the lower layer 31 contains Pd. The lower layer 31 may contain one or more other platinum group elements in addition to Pd. The embodiment wherein the lower layer 31 contains Pd can be combined with the embodiment wherein the first catalyst layer 20 contains Rh.

It is preferable that the lower layer 31 contains one or more carriers, and that at least part of a catalytically active component is supported on the one or more carriers. The meaning of the expression "supported" and the confirmation method thereof are the same as described above.

The above descriptions with respect to the carrier contained in the first catalyst layer 20 are also applied to the carrier contained in the lower layer 31. Upon application, the "first catalyst layer 20" is replaced with the "lower layer 31".

The lower layer 31 may contain other components such as a binder, a stabilizer, and the like. The descriptions with respect to the binder and the stabilizer are the same as described above.

<Upper layer>

As shown in Figures 8 and 9, the upper layer 32 is formed on the lower layer 31.

The expression that "the upper layer 32 is formed on the lower layer 31" means that part or the whole of the upper layer 32 is present on, of two main surfaces of the lower layer 31, the main surface opposite to the main surface on the partition wall 12 side. The expression "the main surface of the lower layer 31" means an outer surface of the lower layer 31, the outer surface extending in the exhaust gas flow direction E. The upper layer 32 may be formed directly or via another layer on the main surface of the lower layer 31. Usually, the upper layer 32 is formed directly on the main surface of the lower layer 31. The upper layer 32 may be provided so that the upper layer 32 covers part or the whole of the main surface of the lower layer 31. The expression that "the upper layer 32 is formed on the lower layer 31" encompasses an embodiment wherein the upper layer 32 is formed directly on the main surface of the lower layer 31, and an embodiment wherein the upper layer 32 is formed via another layer on the main surface of the lower layer 31.

As shown in Figures 8 and 9, the upper layer 32 extends from the end on the exhaust gas outflow side of the partition wall 12 along the direction opposite to the exhaust gas flow direction E. In the present embodiment, the upper layer 32 does not reach the end on the exhaust gas inflow side of the partition wall 12. The upper layer 32 may reach the end on the exhaust gas inflow side of the partition wall 12.

From the viewpoint of balancing exhaust gas purification performance and cost, the mass (mass after calcining) of the upper layer 32 per unit volume of the portion of the substrate 10 provided with the upper layer 32 is preferably 5 g/L or more and 60 g/L or less, more preferably 5 g/L or more and 40 g/L or less, and still more preferably 5 g/L or more and 30 g/L or less. The mass of the upper layer 32 per unit volume of the portion of the substrate 10 provided with the upper layer 32 is calculated from the formula: (Mass of upper layer 32) / ((Volume of substrate 10) $\times$ (Average length L32 of upper layer 32 / Length L10 of substrate 10)).

The above descriptions with respect to the mass of the first catalyst layer 20 are also applied to the upper layer 32. Upon application, the "first catalyst layer 20" is replaced with the "upper layer 32".

The above descriptions with respect to the method for measuring the average length L20 of the first catalyst layer 20 are also applied to the method for measuring the average length L32 of the upper layer 32. Upon application, the "first catalyst layer 20" and the "average length L20" are replaced with the "upper layer 32" and the "average length L32", respectively. However, in the method of measuring the average length L32 of the upper layer 32, the sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas outflow side of the sample.

The average length L32 of the upper layer 32 can be appropriately adjusted in consideration of exhaust gas purification performance, PM collection performance, and the like. From the viewpoint of improving exhaust gas purification performance and PM collection performance, the percentage of the average length L32 of the upper layer 32 to the length L10 of the substrate 10 (L32 / L10 $\times$ 100) is preferably 15% or more and 90% or less, more preferably 20% or more and 90% or less, and still more preferably 30% or more and 85% or less.

From the viewpoint of improving exhaust gas purification performance and PM collection performance, the percentage of the total of the average length L20 of the first catalyst layer 20 and the average length L32 of the upper layer 32 to the length L10 of the substrate 10 ((L20 + L32) / L10 $\times$ 100) is preferably 100% or more and 180% or less, more preferably 100% or more and 170% or less, and still more preferably 105% or more and 150% or less.

The upper layer 32 contains one or more platinum group elements. The above descriptions with respect to the one or more platinum group elements contained in the first catalyst layer 20 and the amount thereof in terms of metal are also applied to the one or more platinum group elements contained in the upper layer 32 and the amount thereof in terms of metal. Upon application, the "first catalyst layer 20" is replaced with the "upper layer 32".

In one embodiment, the upper layer 32 contains Rh. The upper layer 32 may contain one or more other platinum group elements in addition to Rh. The embodiment wherein the upper layer 32 contains Rh can be combined with the embodiment wherein the first catalyst layer 20 contains Rh, and/or the embodiment wherein the lower layer 31 contains Pd.

It is preferable that the upper layer 32 contains one or more carriers, and that at least part of a catalytically active component is supported on the one or more carriers. The meaning of the expression "supported" and the confirmation method thereof are the same as described above.

The above descriptions with respect to the carrier contained in the first catalyst layer 20 are also applied to the carrier contained in the upper layer 32. Upon application, the "first catalyst layer 20" is replaced with the "upper layer 32".

The upper layer 32 may contain other components such as a binder, a stabilizer, and the like. The descriptions with respect to the binder and the stabilizer are the same as described above.

<Production method of exhaust gas purification catalyst>

Hereinafter, an embodiment of a method for producing the catalyst 1B will be described. The catalyst 1B to be produced by the method according to the present embodiment encompasses aspects other than the above-described aspects (i) to (ix). The method according to the present embodiment is suitable for producing the above-described aspects (i) to (ix).

The method according to the present embodiment includes the following steps of:

(2a) applying a first slurry containing a first pore forming agent onto the inflow-side cell side of the partition wall 12 of the substrate 10 to form a first precursor layer;
(2b) applying a third slurry containing a third pore forming agent onto the outflow-side cell side of the partition wall 12 of the substrate 10 to form a third precursor layer;
(2c) applying a fourth slurry containing a fourth pore forming agent onto the third precursor layer to form a fourth precursor layer; and
(2d) calcining the first precursor layer, the third precursor layer and the fourth precursor layer to form the first catalyst layer 20, the lower layer 31 of the second catalyst layer 30 and the upper layer 32 of the second catalyst layer 30, respectively.

Step 2a may be performed before or after Steps 2b to 2c. Step 2b is performed before Step 2c. Step 2d is performed after Steps 2a to 2c.

<Step 2a>

Step 2a is a step of applying a first slurry containing a first pore forming agent onto the inflow-side cell side of the partition wall 12 of the substrate 10 to form a first precursor layer.

Step 2a can be carried out in the same manner as Step 1a. The above descriptions with respect to Step 1a are also applied to Step 2a.

<Step 2b>

Step 2b is a step of applying a third slurry containing a third pore forming agent onto the outflow-side cell side of the partition wall 12 of the substrate 10 to form a third precursor layer.

The third slurry contains the third pore forming agent. Examples of the third pore forming agent are the same as the above-described examples of the first pore forming agent.

The composition of the third slurry can be adjusted depending on the composition of the lower layer 31 of the second catalyst layer 30. The third slurry contains, in addition to the third pore forming agent, for example, a supply source of a platinum group element, an inorganic oxide particle, a binder, a solvent, and the like. Examples of the supply source of the platinum group element include a salt of the platinum group element. Examples of the salt of the platinum group element include a nitrate, an ammine complex salt, an acetate, a chloride, and the like. The descriptions with respect to the inorganic oxide constituting the inorganic oxide particle are the same as described above. Examples of the binder include alumina sol, zirconia sol, titania sol, silica sol, ceria sol, and the like. Examples of the solvent include water, an organic solvent, and the like. One solvent may be used, or a mixture of two or more solvents may be used.

The third precursor layer, which is a precursor of the lower layer 31 of the second catalyst layer 30, is formed by applying the third slurry onto the outflow-side cell side of the partition wall 12 of the substrate 10 (i.e., the outer surface S1b on the outflow-side cell 13b side of the partition wall 12), followed by drying. The drying temperature is, for example, 40°C or more and 150°C or less. The drying time is, for example, 5 minutes or more and 1 hour or less.

The particle size of the third pore forming agent can be adjusted as appropriate. The third pore forming agent has a median particle size D50 of, **preferably 0.1 $\mu$m or more and 20 $\mu$m or less, more preferably 0.5 $\mu$m or more and 17 $\mu$m or less, and still more preferably 1.5 $\mu$m or more and 15 $\mu$m or less.** By adjusting the particle size, amount, and like of the third pore forming agent, it is possible to form the lower layer 31 that satisfies none of Conditions 3 and 4, the lower layer 31 that satisfies one of Conditions 3 and 4, and the lower layer 31 that satisfies both of Conditions 3 and 4. The meaning and measurement method of D50 are the same as described above.

<Step 2c>

Step 2c is a step of applying a fourth slurry containing a fourth pore forming agent onto the third precursor layer to form a fourth precursor layer.

The fourth slurry contains the fourth pore forming agent. Examples of the fourth pore forming agent are the same as the above-described examples of the first pore forming agent.

The composition of the fourth slurry can be adjusted depending on the composition of the upper layer 32 of the second catalyst layer 30. The fourth slurry contains, in addition to the fourth pore forming agent, for example, a supply source of a platinum group element, an inorganic oxide particle, a binder, a solvent, and the like. Examples of the supply source of the platinum group element include a salt of the platinum group element. Examples of the salt of the platinum group element include a nitrate, an ammine complex salt, an acetate, a chloride, and the like. The descriptions with respect to the inorganic oxide constituting the inorganic oxide particle are the same as described above. Examples of the binder include alumina sol, zirconia sol, titania sol, silica sol, ceria sol, and the like. Examples of the solvent include water, an organic solvent, and the like. One solvent may be used, or a mixture of two or more solvents may be used.

The fourth precursor layer, which is a precursor of the upper layer 32 of the second catalyst layer 30, is formed by applying the fourth slurry onto the third precursor layer, followed by drying. The drying temperature is, for example, 40°C or more and 150°C or less. The drying time is, for example, 5 minutes or more and 1 hour or less.

The particle size of the fourth pore forming agent can be adjusted as appropriate. The fourth pore forming agent has a median particle size D50 of, **preferably 0.1 $\mu$m or more and 20 $\mu$m or less, more preferably 0.5 $\mu$m or more and 17 $\mu$m or less, and still more preferably 1.5 $\mu$m or more and 15 $\mu$m or less.** By adjusting the particle size, amount, and the like of the fourth pore forming agent, it is possible to form the upper layer 32 that satisfies none of Conditions 3 and 4, the upper layer 32 that satisfies one of Conditions 3 and 4, and the upper layer 32 that satisfies both of Conditions 3 and 4. By adjusting the particle size, amount, and the like of the third pore forming agent, and/or the particle size, amount, and the like of the fourth pore forming agent, it is possible to form the second catalyst layer 30 that satisfies none of Conditions 3 and 4, the second catalyst layer 30 that satisfies one of Conditions 3 and 4, and the second catalyst layer 30 that satisfies both of Conditions 3 and 4. The meaning and measurement method of D50 are the same as described above.

Step 2d is a step of calcining the first precursor layer, the third precursor layer and the fourth precursor layer to form the first catalyst layer 20, the lower layer 31 of the second catalyst layer 30 and the upper layer 32 of the second catalyst layer 30, respectively.

The first catalyst layer 20, the lower layer 31 of the second catalyst layer 30 and the upper layer 32 of the second catalyst layer 30 are formed by calcining the first precursor layer, the third precursor layer and the fourth precursor layer, respectively. The calcining temperature is, for example, 350°C or more and 600°C or less. The calcining time is, for example, 20 minutes or more and 5 hours or less. The atmosphere in which the calcining is carried out is usually an air atmosphere.

The first pore forming agent disappears during the calcining of the first precursor layer, thereby forming pores in the first catalyst layer 20. The third pore forming agent disappears during the calcining of the third precursor layer, thereby forming pores in the lower layer 31 of the second catalyst layer 30. The fourth pore forming agent disappears during the calcining of the fourth precursor layer, thereby forming pores in the upper layer 32 of the second catalyst layer 30. By adjusting the particle sizes, amounts, and the like of the first, third and fourth pore forming agents, the logarithmic differential pore volume distributions of the first catalyst layer 20 and the second catalyst layer 30 can be controlled.

It is preferable that the method according to the present embodiment satisfies the following conditions (D1) to (D10). This ensures that the amount of pores contributing to PM collection performance and the amount of pores contributing to a reduction in pressure loss are sufficient, thereby achieving both of improvement of PM collection performance and suppression of an increase in pressure loss. When the method according to the present embodiment satisfies the following conditions (D1) to (D10), the method according to the present embodiment is particularly suitable for producing the above-described aspects (i) to (ix).

(D1) Of the first, third and fourth pore forming agents, one or two pore forming **agents have a median particle size D50 of more than 4 $\mu$m, and the other one or two pore forming agents have a median particle size D50 of 4 $\mu$m or less.**

(D2) The first slurry contains an inorganic oxide particle, and the inorganic **oxide particle contained in the first slurry has a median particle size D50 of 1 $\mu$m or more and 20 $\mu$m or less.**

(D3) The amount of the first pore forming agent contained in the first precursor layer is 10% by mass or more and 60% by mass or less based on the mass (mass after calcining) of the first catalyst layer 20.

(D4) The mass (mass after calcining) of the first catalyst layer 20 per unit volume of the portion of the substrate 10 provided with the first catalyst layer 20 is 5 g/L or more and 150 g/L or less.

(D5) The third slurry contains an inorganic oxide particle, and the inorganic **oxide particle contained in the third slurry has a median particle size D50 of 1 $\mu$m or more and 20 $\mu$m or less.**

(D6) The amount of the third pore forming agent contained in the third precursor layer is 10% by mass or more and 60% by mass or less based on the mass (mass after calcining) of the lower layer 31.

(D7) The mass (mass after calcining) of the lower layer 31 per unit volume of the portion of the substrate 10 provided with the lower layer 31 is 5 g/L or more and 90 g/L or less.

(D8) The fourth slurry contains an inorganic oxide particle, and the inorganic oxide particle contained in the fourth slurry has a median particle size D50 of 1 **μm or more and 20 μm or less.**

(D9) The amount of the fourth pore forming agent contained in the fourth precursor layer is 10% by mass or more and 60% by mass or less based on the mass (mass after calcining) of the upper layer 32.

(D10) The mass (mass after calcining) of the upper layer 32 per unit volume of the portion of the substrate 10 provided with the upper layer 32 is 5 g/L or more and 60 g/L or less.

Hereinafter, Condition (D1) will be described.

In the case where, of the first, third and fourth pore forming agents, one **pore forming agent has a median particle size D50 of more than 4 μm, the other two pore forming agents have a median particle size D50 of 4 μm or less. In the** case where, of the first, third and fourth pore forming agents, two pore forming **agents have a median particle size D50 of more than 4 μm, the other one pore forming agent has a median particle size D50 of 4 μm or less.**

From the viewpoint of more effectively achieving both of improvement of PM collection performance and suppression of an increase in pressure loss, of the first, third and fourth pore forming agents, one or two pore forming agents **have a median particle size D50 of, more preferably 4.5 μm or more and 20 μm or less, still more preferably 4.5 μm or more and 17 μm or less, and still more preferably 4.5 μm or more and 15 μm or less.**

From the viewpoint of more effectively achieving both of improvement of PM collection performance and suppression of an increase in pressure loss, the other one or two pore forming agents have a median particle size D50 of, more preferably 0.1 μm or more and 4 μm or less, still more preferably 0.5 μm or more and 4 μm or less, and still more preferably 1.5 μm or more and 4 μm or less.

Hereinafter, Condition (D2) will be described.

From the viewpoint of more effectively achieving both of improvement of PM collection performance and suppression of an increase in pressure loss, the inorganic oxide particle contained in the first slurry has a median particle size D50 of, more preferably 1.5 μm or more and 15 μm or less, and still more preferably 2 μm or more and 10 μm or less.

Hereinafter, Condition (D3) will be described.

From the viewpoint of more effectively achieving both of improvement of PM collection performance and suppression of an increase in pressure loss, the amount of the first pore forming agent contained in the first precursor layer is more preferably 20% by mass or more and 50% by mass or less, and still more preferably 25% by mass or more and 45% by mass or less, based on the mass (mass after calcining) of the first catalyst layer 20. The amount of the first pore forming agent contained in the first precursor layer can be adjusted by adjusting the amount of the first pore forming agent contained in the first slurry, the amount of the first slurry applied onto the inflow-side cell side of the partition wall 12 of the substrate 10, and the like. The mass of the first catalyst layer 20 can be determined by subtracting the mass of components that disappear by drying and calcining of the first slurry (e.g., the solvent, the pore forming agent, and the like) from the mass of the first slurry applied onto the inflow-side cell side of the partition wall 12 of the substrate 10.

Hereinafter, Condition (D4) will be described.

From the viewpoint of more effectively achieving both of improvement of PM collection performance and suppression of an increase in pressure loss, the mass (mass after calcining) of the first catalyst layer 20 per unit volume of the portion of the substrate 10 provided with the first catalyst layer 20 is more preferably 10 g/L or more and 100 g/L or less, and still more preferably 25 g/L or more and 70 g/L or less. The mass of the first catalyst layer 20 per unit volume of the portion of the substrate 10 provided with the first catalyst layer 20 can be adjusted by adjusting the amount of the first slurry applied onto the inflow-side cell side of the partition wall 12 of the substrate 10, and the like.

Hereinafter, Condition (D5) will be described.

From the viewpoint of more effectively achieving both of improvement of PM collection performance and suppression of an increase in pressure loss, the inorganic oxide particle contained in the third slurry has a median particle size D50 of, more preferably 1.5 μm or more and 15 μm or less, and still more preferably 2 μm or more and 10 μm or less.

Hereinafter, Condition (D6) will be described.

From the viewpoint of more effectively achieving both of improvement of PM collection performance and suppression of an increase in pressure loss, the amount of the third pore forming agent contained in the third precursor layer is more preferably 20% by mass or more and 50% by mass or less, and still more preferably 25% by mass or more and 45% by mass or less, based on the mass (mass after calcining) of the lower layer 31. The amount of the third pore forming agent contained in the third precursor layer can be adjusted by adjusting the amount of the third pore forming agent contained in the third slurry, the amount of the third slurry applied onto the outflow-side cell side of the partition wall 12 of the substrate 10, and the like. The mass of the lower layer 31 can be determined by subtracting the mass of components that disappear by drying and calcining of the third slurry (e.g., the solvent, the pore forming agent, and the like) from the mass of the third slurry applied onto the outflow-side cell side of the partition wall 12 of the substrate 10.

Hereinafter, Condition (D7) will be described.

From the viewpoint of more effectively achieving both of improvement of PM collection performance and suppression of an increase in pressure loss, the mass (mass after calcining) of the lower layer 31 per unit volume of the portion of the substrate 10 provided with the lower layer 31 is more preferably 10 g/L or more and 70 g/L or less, and still more preferably 15 g/L or more and 50 g/L or less. The mass of the lower layer 31 per unit volume of the portion of the substrate 10 provided with the lower layer 31 can be adjusted by adjusting the amount of the third slurry applied onto the outflow-side cell side of the partition wall 12 of the substrate 10, and the like.

Hereinafter, Condition (D8) will be described.

From the viewpoint of more effectively achieving both of improvement of PM collection performance and suppression of an increase in pressure loss, the inorganic oxide particle contained in the fourth slurry has a median particle size D50 of, more preferably 1.5 $\mu$m or more and 15 $\mu$m or less, and still more preferably 2 $\mu$m or more and 10 $\mu$m or less.

Hereinafter, the condition (D9) will be described.

From the viewpoint of more effectively achieving both of improvement of PM collection performance and suppression of an increase in pressure loss, the amount of the fourth pore forming agent contained in the fourth precursor layer is more preferably 20% by mass or more and 50% by mass or less, and still more preferably 25% by mass or more and 45% by mass or less, based on the mass (mass after calcining) of the upper layer 32. The amount of the fourth pore forming agent contained in the fourth precursor layer can be adjusted by adjusting the amount of the fourth pore forming agent contained in the fourth slurry, the amount of the fourth slurry applied onto the third precursor layer, and the like. The mass of the upper layer 32 can be determined by subtracting the mass of components that disappear by drying and calcining of the fourth slurry (e.g., the solvent, the pore forming agent, and the like) from the mass of the fourth slurry applied onto the third precursor layer.

Hereinafter, Condition (D10) will be described.

From the viewpoint of more effectively achieving both of improvement of PM collection performance and suppression of an increase in pressure loss, the mass (mass after calcining) of the upper layer 32 per unit volume of the portion of the substrate 10 provided with the upper layer 32 is more preferably 5 g/L or more and 40 g/L or less, and still more preferably 5 g/L or more and 30 g/L or less. The mass of the upper layer 32 per unit volume of the portion of the substrate 10 provided with the upper layer 32 can be adjusted by adjusting the amount of the fourth slurry applied onto the third precursor layer, and the like.

When the median particle size D50 of the third pore forming agent is larger than the median particle size D50 of the fourth pore forming agent, the third slurry is less likely to enter pores in the partition wall 12, and thus an embodiment wherein at least part of the lower layer 31 rises from the outer surface S1b of the partition wall 12 toward the outflow-side cell 13b side (i.e., an embodiment wherein the lower layer 31 has a portion rising from the outer surface S1b of the partition wall 12 toward the outflow-side cell 13b side) is more easily realized. Therefore, when a pore forming agent having a median particle size D50 of more **than 4 $\mu$m and a pore forming agent having a median particle size D50 of 4 $\mu$m** or less, it is preferable that the pore forming agent having a median particle size **D50 of more than 4 $\mu$m is used as the third pore forming agent, and the pore forming agent having a median particle size D50 of 4 $\mu$m or less is used as the** fourth pore forming agent.

When the third pore forming agent has a median particle size D50 of more **than 4 $\mu$m, and the fourth pore forming agent has a median particle size D50 of 4 $\mu$m or less, the amount of pores contributing to PM collection performance** and/or the amount of pores contributing to a reduction in pressure loss in the second catalyst layer 30 are/is ensured to be sufficient. In addition, when the third pore forming agent has a median particle size D50 of more than 4 $\mu$m, and the fourth pore forming agent has a median particle size D50 of 4 $\mu$m or less, it is possible to more efficiently form the second catalyst layer 30 that satisfies one of Conditions 3 and 4, or the second catalyst layer 30 that satisfies both of Conditions 3 and 4, in particular, the second catalyst layer 30 that satisfies both of Conditions 3 and 4.

The median particle size D50 of the third pore forming agent is not particularly limited as long as it is more than 4 $\mu$m, but from the viewpoint of more effectively achieving both of improvement of PM collection performance and suppression of an increase in pressure loss, it is preferably 4.5 $\mu$m or more and 20 $\mu$m or less, more preferably 4.5 $\mu$m or more and 17 $\mu$m or less, and still more preferably 4.5 $\mu$m or more and 15 $\mu$m or less.

The median particle size D50 of the fourth pore forming agent is not particularly limited as long as it is 4 $\mu$m or less, but from the viewpoint of more effectively achieving both of improvement of PM collection performance and suppression of an increase in pressure loss, it is preferably 0.1 $\mu$m or more and 4 $\mu$m or less, more preferably 0.5 $\mu$m or more and 4 $\mu$m or less, and still more preferably 1.5 $\mu$m or more and 4 $\mu$m or less.

<<Third embodiment>>

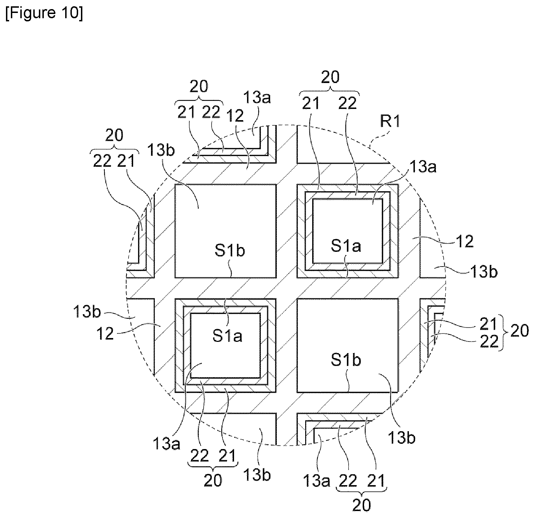

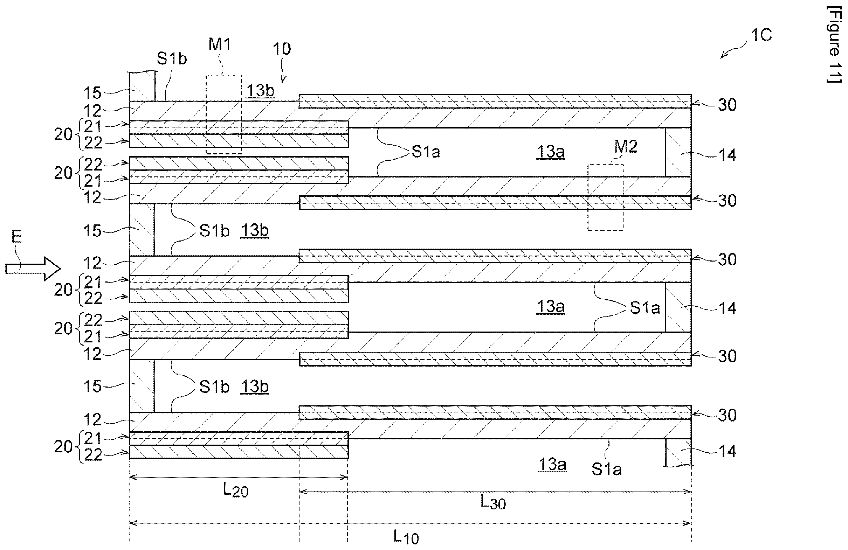

With reference to Figures 10 and 11, the third embodiment of the present invention will be described below.

As shown in Figures 10 and 11, an exhaust gas purification catalyst 1C according to the third embodiment (hereinafter referred to as the "catalyst 1C") differs from the catalyst 1A in that the first catalyst layer 20 has a layered structure including a lower layer 21 and an upper layer 22, instead of a single-layer structure. The lower layer is a layer located on the side of the partition wall 12 compared to the upper layer. In the case where the first catalyst layer 20 has a layered structure, PM collection performance can be improved compared to the case where the first catalyst layer 20 has a single-layer structure.

In the catalyst 1C, the same members as those of the catalyst 1A are denoted by the same reference signs as those of the catalyst 1A. Unless otherwise specified, the above descriptions with respect to the catalyst 1A are also applied to the catalyst 1C. Upon application, the "catalyst 1A" is replaced with the "catalyst 1C".

In the catalyst 1C, the logarithmic differential pore volume distribution of the first catalyst layer 20 is the sum of the logarithmic differential pore volume distribution of the lower layer 21 and the logarithmic differential pore volume distribution of the upper layer 22.

The cut piece M1 used in the mercury porosimetry includes part of the partition wall 12 and part of the first catalyst layer 20 (part of the lower layer 21 and part of the upper layer 22), but does not include the second catalyst layer 30. Other aspects regarding the cut piece M1 are the same as described above.

<Lower layer>

As shown in Figures 10 and 11, the lower layer 21 is formed on the inflow-side cell 13a side of the partition wall 12.

As shown in Figures 10 and 11, the lower layer 21 extends from the end on the exhaust gas inflow side of the partition wall 12 along the exhaust gas flow direction E. In the present embodiment, the lower layer 21 does not reach the end on the exhaust gas outflow side of the partition wall 12. The lower layer 21 may reach the end on the exhaust gas outflow side of the partition wall 12.

As shown in Figures 10 and 11, it is preferable that at least part of the lower layer 21 rises from the outer surface S1a of the partition wall 12 toward the inflow-side cell 13a side, i.e., the lower layer 21 has a portion rising from the outer surface S1a of the partition wall 12 toward the inflow-side cell 13a side (hereinafter referred to as the "rising structure"). This improves the contactability of the lower layer 21 with exhaust gas and PM, thereby more effectively improving exhaust gas purification performance and PM collection performance.

The lower layer 21 may be composed of the rising structure or may have a portion existing inside the partition wall 12 (hereinafter referred to as the "internal structure") in addition to the rising structure. The partition wall 12 is porous, so that when the lower layer 21 is formed, the internal structure may be formed together with the rising structure. The rising structure and the internal structure may be continuous. The lower layer 21 may be composed of the internal structure. The expression that "the lower layer 21 is formed on the inflow-side cell 13a side of the partition wall 12" encompasses an embodiment wherein the lower layer 21 is composed of the rising structure, an embodiment wherein the lower layer 21 is composed of the internal structure, and an embodiment wherein the lower layer 21 has both the rising structure and the internal structure.

The above descriptions with respect to the identification method of the rising structure and internal structure of the first catalyst layer 20 are also applied to the lower layer 21. Upon application, the "first catalyst layer 20" is replaced with the "lower layer 21".

From the viewpoint of balancing exhaust gas purification performance and cost, the mass (mass after calcining) of the lower layer 21 per unit volume of the portion of the substrate 10 provided with the lower layer 21 is preferably 5 g/L or more and 90 g/L or less, more preferably 10 g/L or more and 70 g/L or less, and still more preferably 15 g/L or more and 50 g/L or less. The mass of the lower layer 21 per unit volume of the portion of the substrate 10 provided with the lower layer 21 is calculated from the formula: (Mass of lower layer 21) / ((Volume of substrate 10) × (Average length L21 of lower layer 21 / Length L10 of substrate 10)).

The above descriptions with respect to the mass of the first catalyst layer 20 are also applied to the lower layer 21. Upon application, the "first catalyst layer 20" is replaced with the "lower layer 21".

The above descriptions with respect to the method for measuring the average length L20 of the first catalyst layer 20 are also applied to the method for measuring the average length L21 of the lower layer 21. Upon application, the "first catalyst layer 20" and the "average length L20" are replaced with the "lower layer 21" and the "average length L21", respectively.

The average length L21 of the lower layer 21 can be appropriately adjusted in consideration of exhaust gas purification performance, PM collection performance, and the like. From the viewpoint of improving exhaust gas purification performance and PM collection performance, the percentage of the average length L21 of the lower layer 21 to the length L10 of the substrate 10 (L21 / L10 × 100) is preferably 15% or more and 90% or less, more preferably 20% or more and 90% or less, and still more preferably 30% or more and 85% or less.

From the viewpoint of improving exhaust gas purification performance and PM collection performance, the percentage of the total of the average length L30 of the second catalyst layer 30 and the average length L21 of the lower layer 21 to the length L10 of the substrate 10 ((L30 + L21) / L10 × 100) is preferably 100% or more and 180% or less, more preferably 100% or more and 170% or less, and still more preferably 105% or more and 150% or less.

The lower layer 21 contains one or more platinum group elements. The above descriptions with respect to the one or more platinum group elements contained in the first catalyst layer 20 and the amount thereof in terms of metal are also applied to the one or more platinum group elements contained in the lower layer 21 and the amount thereof in terms of metal. Upon application, the "first catalyst layer 20" is replaced with the "lower layer 21".

In one embodiment, the lower layer 21 contains Pd. The lower layer 21 may contain one or more other platinum group elements in addition to Pd. The embodiment wherein the lower layer 21 contains Pd can be combined with the embodiment wherein the second catalyst layer 30 contains Rh.

It is preferable that the lower layer 21 contains one or more carriers, and that at least part of a catalytically active component is supported on the one or more carriers. The meaning of the expression "supported" and the confirmation method thereof are the same as described above.

The above descriptions with respect to the carrier contained in the first catalyst layer 20 are also applied to the carrier contained in the lower layer 21. Upon application, the "first catalyst layer 20" is replaced with the "lower layer 21".

The lower layer 21 may contain other components such as a binder, a stabilizer, and the like. The descriptions with respect to the binder and the stabilizer are the same as described above.

<Upper layer>

As shown in Figures 10 and 11, the upper layer 22 is formed on the lower layer 21.

The expression that "the upper layer 22 is formed on the lower layer 21" means that part or the whole of the upper layer 22 is present on, of two main surfaces of the lower layer 21, the main surface opposite to the main surface on the partition wall 12 side. The expression "the main surface of the lower layer 21" means an outer surface of the lower layer 21, the outer surface extending in the exhaust gas flow direction E. The upper layer 22 may be formed directly or via another layer on the main surface of the lower layer 21. Usually, the upper layer 22 is formed directly on the main surface of the lower layer 21. The upper layer 22 may be provided so that the upper layer 22 covers part or the whole of the main surface of the lower layer 21. The expression that "the upper layer 22 is formed on the lower layer 21" encompasses an embodiment wherein the upper layer 22 is formed directly on the main surface of the lower layer 21, and an embodiment wherein the upper layer 22 is formed via another layer on the main surface of the lower layer 21.

As shown in Figures 10 and 11, the upper layer 22 extends from the end on the exhaust gas inflow side of the partition wall 12 along the exhaust gas flow direction E. In the present embodiment, the upper layer 22 does not reach the end on the exhaust gas outflow side of the partition wall 12. The upper layer 22 may reach the end on the exhaust gas outflow side of the partition wall 12.

From the viewpoint of balancing exhaust gas purification performance and cost, the mass (mass after calcining) of the upper layer 22 per unit volume of the portion of the substrate 10 provided with the upper layer 22 is preferably 5 g/L or more and 60 g/L or less, more preferably 5 g/L or more and 40 g/L or less, and still more preferably 5 g/L or more and 30 g/L or less. The mass of the upper layer 22 per unit volume of the portion of the substrate 10 provided with the upper layer 22 is calculated from the formula: (Mass of upper layer 22) / ((Volume of substrate 10) × (Average length L22 of upper layer 22 / Length L10 of substrate 10)).

The above descriptions with respect to the mass of the first catalyst layer 20 are also applied to the upper layer 22. Upon application, the "first catalyst layer 20" is replaced with the "upper layer 22".

The above descriptions with respect to the method for measuring the average length L20 of the first catalyst layer 20 are also applied to the method for measuring the average length L22 of the upper layer 22. Upon application, the "first catalyst layer 20" and the "average length L20" are replaced with the "upper layer 22" and the "average length L22", respectively.

The average length L22 of the upper layer 22 can be appropriately adjusted in consideration of exhaust gas purification performance, PM collection performance, and the like. From the viewpoint of improving exhaust gas purification performance and PM collection performance, the percentage of the average length L22 of the upper layer 22 to the length L10 of the substrate 10 (L22 / L10 × 100) is preferably 15% or more and 90% or less, more preferably 20% or more and 90% or less, and still more preferably 30% or more and 85% or less.

From the viewpoint of improving exhaust gas purification performance and PM collection performance, the percentage of the total of the average length L30 of the second catalyst layer 30 and the average length L22 of the upper layer 22 to the length L10 of the substrate 10 ((L30 + L22) / L10 × 100) is preferably 100% or more and 180% or less, more preferably 100% or more and 170% or less, and still more preferably 105% or more and 150% or less.

The upper layer 22 contains one or more platinum group elements. The above descriptions with respect to the one or more platinum group elements contained in the first catalyst layer 20 and the amount thereof in terms of metal are also applied to the one or more platinum group elements contained in the upper layer 22 and the amount thereof in terms of metal. Upon application, the "first catalyst layer 20" is replaced with the "upper layer 22".

In one embodiment, the upper layer 22 contains Rh. The upper layer 22 may contain one or more other platinum group elements in addition to Rh. The embodiment wherein the upper layer 22 contains Rh can be combined with the embodiment wherein the second catalyst layer 30 contains Rh, and/or the embodiment wherein the lower layer 21 contains Pd.

It is preferable that the upper layer 22 contains one or more carriers, and that at least part of a catalytically active component is supported on the one or more carriers. The meaning of the expression "supported" and the confirmation method thereof are the same as described above.

The above descriptions with respect to the carrier contained in the first catalyst layer 20 are also applied to the carrier contained in the upper layer 22. Upon application, the "first catalyst layer 20" is replaced with the "upper layer 22".

The upper layer 22 may contain other components such as a binder, a stabilizer, and the like. The descriptions with respect to the binder and the stabilizer are the same as described above.

<Production method of exhaust gas purification catalyst>

Hereinafter, an embodiment of a method for producing the catalyst 1C will be described. The catalyst 1C to be produced **by** the method according to the present embodiment encompasses aspects other than the above-described aspects (i) to (ix). The method according to the present embodiment is suitable for producing the above-described aspects (i) to (ix).

The method according to the present embodiment includes the following steps of:

(3a) applying a second slurry containing a second pore forming agent onto the outflow-side cell side of the partition wall 12 of the substrate 10 to form a second precursor layer;

(3b) applying a fifth slurry containing a fifth pore forming agent onto the inflow-side cell side of the partition wall 12 of the substrate 10 to form a fifth precursor layer;

(3c) applying a sixth slurry containing a sixth pore forming agent onto the fifth precursor layer to form a sixth precursor layer; and

(3d) calcining the second precursor layer, the fifth precursor layer and the sixth precursor layer to form the second catalyst layer 30, the lower layer 21 of the first catalyst layer 20 and the upper layer 22 of the first catalyst layer 20, respectively.

Step 3a may be carried out before or after Steps (3b) to (3c). Step 3b is carried out before Step 3c. Step 3d is carried out after Steps 3a to 3c.

<Step 3a>

Step 3a is a step of applying a second slurry containing a second pore forming agent onto the outflow-side cell side of the partition wall 12 of the substrate 10 to form a second precursor layer.

Step 3a can be carried out in the same manner as Step 1b. The above descriptions with respect to Step 1b are also applied to Step 3a.

<Step 3b>

Step (3b) is a step of applying a fifth slurry containing a fifth pore forming agent onto the inflow-side cell side of the partition wall 12 of the substrate 10 to form a fifth precursor layer.

The fifth slurry contains the fifth pore forming agent. Examples of the fifth pore forming agent are the same as the above-described examples of the first pore forming agent.

The composition of the fifth slurry can be adjusted depending on the composition of the lower layer 21 of the first catalyst layer 20. The fifth slurry contains, in addition to the fifth pore forming agent, for example, a supply source of a platinum group element, an inorganic oxide particle, a binder, a solvent, and the like. Examples of the supply source of the platinum group element include a salt of the platinum group element. Examples of the salt of the platinum group element include a nitrate, an ammine complex salt, an acetate, a chloride, and the like. The descriptions with respect to the inorganic oxide constituting the inorganic oxide particle are the same as described above. Examples of the binder include alumina sol, zirconia sol, titania sol, silica sol, ceria sol, and the like. Examples of the solvent include water, an organic solvent, and the like. One solvent may be used, or a mixture of two or more solvents may be used.

The fifth precursor layer, which is a precursor of the lower layer 21 of the first catalyst layer 20, is formed by applying the fifth slurry onto the inflow-side cell side of the partition wall 12 of the substrate 10 (i.e., the outer surface S1a on the inflow-side cell 13a side of the partition wall 12), followed by drying. The drying temperature is, for example, 40°C or more and 150°C or less. The drying time is, for example, 5 minutes or more and 1 hour or less.

The particle size of the fifth pore forming agent can be adjusted as appropriate. The fifth pore forming agent has a median particle size D50 of, **preferably 0.1 $\mu$m or more and 20 $\mu$m or less, more preferably 0.5 $\mu$m or more and 17 $\mu$m or less, and still more preferably 1.5 $\mu$m or more and 15 $\mu$m or less.** By adjusting the particle size, amount, and the like of the fifth pore forming agent, it is possible to form the lower layer 21 that satisfies none of Conditions 1 and 2, the lower layer 21 that satisfies one of Conditions 1 and 2, and the lower layer 21 that satisfies both of Conditions 1 and 2. The meaning and measurement method of D50 are the same as described above.

<Step 3c>

Step 3c is a step of applying a sixth slurry containing a sixth pore forming agent onto the fifth precursor layer to form a sixth precursor layer.

The sixth slurry contains the sixth pore forming agent. Examples of the sixth pore forming agent are the same as the above-described examples of the first pore forming agent.

The composition of the sixth slurry can be adjusted depending on the composition of the upper layer 22 of the first catalyst layer 20. The sixth slurry contains, in addition to the sixth pore forming agent, for example, a supply source of a platinum group element, an inorganic oxide particle, a binder, a solvent, and the like. Examples of the supply source of the platinum group element include a salt of the platinum group element. Examples of the salt of the platinum group element include a nitrate, an ammine complex salt, an acetate, a chloride, and the like. The descriptions with respect to the inorganic oxide constituting the inorganic oxide particle are the same as described above. Examples of the binder include alumina sol, zirconia sol, titania sol, silica sol, ceria sol, and the like. Examples of the solvent include water, an organic solvent, and the like. One solvent may be used, or a mixture of two or more solvents may be used.

The sixth precursor layer, which is a precursor of the upper layer 22 of the first catalyst layer 20, is formed by applying the sixth slurry onto the fifth precursor layer, followed by drying. The drying temperature is, for example, 40°C or more and 150°C or less. The drying time is, for example, 5 minutes or more and 1 hour or less.

The particle size of the sixth pore forming agent can be adjusted as appropriate. The sixth pore forming agent has a median particle size D50 of, **preferably 0.1 $\mu$m or more and 20 $\mu$m or less, more preferably 0.5 $\mu$m or more and 17 $\mu$m or less, and still more preferably 1.5 $\mu$m or more and 15 $\mu$m or less.** By adjusting the particle size, amount, and the like of the sixth pore forming agent, it is possible to form the upper layer 22 that satisfies none of Conditions 1 and 2, the upper layer 22 that satisfies one of Conditions 1 and 2, and the upper layer 22 that satisfies both of Conditions 1 and 2. By adjusting the particle size, amount, and the like of the fifth pore forming agent, and/or the particle size, amount, and the like of the sixth pore forming agent, it is possible to form the first catalyst layer 20 that satisfies none of Conditions 1 and 2, the first catalyst layer 20 that satisfies one of Conditions 1 and 2, and the first catalyst layer 20 that satisfies both of Conditions 1 and 2. The meaning and measurement method of D50 are the same as described above.

<Step 3d>

Step 3d is a step of calcining the second precursor layer, the fifth precursor layer and the sixth precursor layer to form the second catalyst layer 30, the lower layer 21 of the first catalyst layer 20 and the upper layer 22 of the first catalyst layer 20, respectively.

The second catalyst layer 20, the lower layer 21 of the first catalyst layer 20 and the upper layer 22 of the first catalyst layer 20 are formed by calcining the second precursor layer, the fifth precursor layer and the sixth precursor layer, respectively. The calcining temperature is, for example, 350°C or more and 600°C or less. The calcining time is, for example, 20 minutes or more and 5 hours or less. The atmosphere in which the calcining is carried out is usually an air atmosphere.

The second pore forming agent disappears during the calcining of the second precursor layer, thereby forming pores in the second catalyst layer 30. The fifth pore forming agent disappears during the calcining of the fifth precursor layer, thereby forming pores in the lower layer 21 of the first catalyst layer 20. The sixth pore forming agent disappears during the calcining of the sixth precursor layer, thereby forming pores in the upper layer 22 of the first catalyst layer 20. By adjusting the particle sizes, amounts, and the like of the second, fifth and sixth pore forming agents, the logarithmic differential pore volume distributions of the first catalyst layer 20 and the second catalyst layer 30 can be controlled.

It is preferable that the method according to the present embodiment satisfies the following conditions (E1) to (E10). This ensures that the amount of pores contributing to PM collection performance and the amount of pores contributing to a reduction in pressure loss are sufficient, thereby achieving both of improvement of PM collection performance and suppression of an increase in pressure loss. When the method according to the present embodiment satisfies the following conditions (E1) to (E10), the method according to the present embodiment is particularly suitable for producing the above-described aspects (i) to (ix).

(E1) Of the second, fifth and sixth pore forming agents, one or two pore **forming agents have a median particle size D50 of more than 4 $\mu$m, and the other one or two pore forming agents have a median particle size D50 of 4 $\mu$m or less.**

(E2) The second slurry contains an inorganic oxide particle, and the inorganic oxide particle contained in the second slurry has a median particle size D50 of 1 $\mu$m **or more and 20 $\mu$m or less.**

(E3) The amount of the second pore forming agent contained in the second precursor layer is 10% by mass or more and 60% by mass or less based on the mass (mass after calcining) of the second catalyst layer 30.

(E4) The mass (mass after calcining) of the second catalyst layer 30 per unit volume of the portion of the substrate 10 provided with the second catalyst layer 30 is 5 g/L or more and 150 g/L or less.

(E5) The fifth slurry contains an inorganic oxide particle, and the inorganic **oxide particle contained in the fifth slurry has a median particle size D50 of 1 μm or more and 20 μm or less.**

(E6) The amount of the fifth pore forming agent contained in the fifth precursor layer is 10% by mass or more and 60% by mass or less based on the mass (mass after calcining) of the lower layer 21.

(E7) The mass (mass after calcining) of the lower layer 21 per unit volume of the portion of the substrate 10 provided with the lower layer 21 is 5 g/L or more and 90 g/L or less.

(E8) The sixth slurry contains an inorganic oxide particle, and the inorganic oxide particle contained in the sixth slurry has a median particle size D50 of 1 μm or more and 20 μm or less.

(E9) The amount of the sixth pore forming agent contained in the sixth precursor layer is 10% by mass or more and 60% by mass or less based on the mass (mass after calcining) of the upper layer 22.

(E10) The mass (mass after calcining) of the upper layer 22 per unit volume of the portion of the substrate 10 provided with the upper layer 22 is 5 g/L or more and 60 g/L or less.

The above descriptions with respect to Condition (D1) are also applied to Condition (E1). Upon application, the "first pore forming agent", the "third pore forming agent" and the "fourth pore forming agent" are replaced with the "second pore forming agent", the "fifth pore forming agent" and the "sixth pore forming agent", respectively.

The above descriptions with respect to Condition (D2) are also applied to Condition (E2). Upon application, the "first slurry" is replaced with the "second slurry".

The descriptions with respect to the condition (D3) are also applied to the condition (E3). Upon application, the "first precursor layer", the "first pore forming agent", the "first catalyst layer 20", the "first slurry" and the "inflow-side cell side of the partition wall 12" are replaced with the "second precursor layer", the "second pore forming agent", the "second catalyst layer 30", the "second slurry" and the "outflow-side cell side of the partition wall 12", respectively.

The above descriptions with respect to Condition (D4) are also applied to Condition (E4). Upon application, the "first catalyst layer 20", the "first slurry" and the "inflow-side cell side of the partition wall 12" are replaced with the "second catalyst layer 30", the "second slurry" and the "outflow-side cell side of the partition wall 12", respectively.

The above descriptions with respect to Condition (D5) are also applied to Condition (E5). Upon application, the "third slurry" is replaced with the "fifth slurry".

The above descriptions with respect to Condition (D6) are also applied to Condition (E6). Upon application, the "third precursor layer", the "third pore forming agent", the "lower layer 31", the "third slurry" and the "outflow-side cell side of the partition wall 12" are replaced with the "fifth precursor layer", the "fifth pore forming agent", the "lower layer 21", the "fifth slurry" and the "inflow-side cell side of the partition wall 12", respectively.

The above descriptions with respect to Condition (D7) are also applied to Condition (E7). Upon application, the "lower layer 31", the "third slurry" and the "outflow-side cell side of the partition wall 12" are replaced with the "lower layer 21", the "fifth slurry" and the "inflow-side cell side of the partition wall 12", respectively.

The above descriptions with respect to Condition (D8) are also applied to Condition (E8). Upon application, the "fourth slurry" is replaced with the "sixth slurry".

The above descriptions with respect to Condition (D9) are also applied to Condition (E9). Upon application, the "third precursor layer", the "fourth precursor layer", the "fourth pore forming agent", the "upper layer 32" and the "fourth slurry" are replaced with the "fifth precursor layer", the "sixth precursor layer", the "sixth pore forming agent", the "upper layer 22" and the "sixth slurry", respectively.

The above descriptions with respect to Condition (D10) are also applied to Condition (E10). Upon application, the "third precursor layer", the "upper layer 32" and the "fourth slurry" are replaced with the "fifth precursor layer", the "upper layer 22" and the "sixth slurry", respectively.

When the median particle size D50 of the fifth pore forming agent is larger than the median particle size D50 of the sixth pore forming agent, the fifth slurry is less likely to enter pores in the partition wall 12, and thus an embodiment wherein at least part of the lower layer 21 rises from the outer surface S1a of the partition wall 12 toward the inflow-side cell 13a side (i.e., an embodiment wherein the lower layer 21 has a portion rising from the outer surface S1a of the partition wall 12 toward the inflow-side cell 13a side) is more easily realized. Therefore, **when a pore forming agent having a median particle size D50 of more than 4 μm and a pore forming agent having a median particle size D50 of 4 μm or less, it is** preferable that the pore forming agent having a median particle size D50 of more **than 4 μm is used as the fifth pore forming agent, and the pore forming agent having a median particle size D50 of 4 μm or less is used as the sixth pore forming** agent.

When the fifth pore forming agent has a median particle size D50 of more **than 4 μm, and the sixth pore forming agent has a median particle size D50 of 4 μm or less, the amount of pores contributing to PM collection**

**performance and/or** the amount of pores contributing to a reduction in pressure loss in the first catalyst layer 20 are/is ensured to be sufficient. In addition, when the fifth pore forming agent has a median particle size D50 of more than 4 $\mu$m, and the sixth pore forming agent has a median particle size D50 of 4 $\mu$m or less, it is possible to more efficiently form the first catalyst layer 20 that satisfies one of Conditions 1 and 2, or the first catalyst layer 20 that satisfies both of Conditions 1 and 2, in particular, the first catalyst layer 20 that satisfies both of Conditions 1 and 2.

The median particle size D50 of the fifth pore forming agent is not particularly limited as long as it is more than 4 $\mu$m, but from the viewpoint of more effectively achieving both of improvement of PM collection performance and suppression of an increase in pressure loss, it is preferably 4.5 $\mu$m or more and 20 $\mu$m or less, more preferably 4.5 $\mu$m or more and 17 $\mu$m or less, and still more preferably 4.5 $\mu$m or more and 15 $\mu$m or less.

The median particle size D50 of the sixth pore forming agent is not particularly limited as long as it is 4 $\mu$m or less, but from the viewpoint of more effectively achieving both of improvement of PM collection performance and suppression of an increase in pressure loss, it is preferably 0.1 $\mu$m or more and 4 $\mu$m or less, more preferably 0.5 $\mu$m or more and 4 $\mu$m or less, and still more preferably 1.5 $\mu$m or more and 4 $\mu$m or less.

**EXAMPLES**

Hereinafter, the present invention is specifically described with reference to the Examples, but the present invention is not limited to the Examples.

<Example 1>

(1) Preparation of first slurry

A Ce-Zr-based complex oxide powder and an alumina powder were prepared. As the Ce-Zr-based complex oxide powder, a $CeO_2$-$ZrO_2$ solid solution powder was used.

The $CeO_2$-$ZrO_2$ solid solution powder and the alumina powder were mixed to prepare a mixed powder. The D50 of the mixed powder was 7 $\mu$m.

The mixed powder was added to an aqueous solution of rhodium nitrate to obtain a mixed liquid. The resulting mixed liquid, a pore forming agent (cross-linked poly(methyl (meth)acrylate) particles having a median particle size D50 of 3 $\mu$m), an alumina sol, a zirconia sol, and water as a solvent were mixed to prepare a first slurry. The amounts of Rh and the pore forming agent contained in the first slurry were adjusted such that the amounts of Rh and the pore forming agent were 0.3% by mass and 30% by mass, respectively, based on the mass (100% by mass) of the fist catalyst layer formed by drying and calcining the first slurry. The mass of the first catalyst layer formed by drying and calcining the first slurry is obtained by subtracting the mass of the components that disappear by drying and calcining the first slurry (e.g., the solvent, the pore forming agent, and the like) from the mass of the first slurry.

(2) Preparation of third slurry

A Ce-Zr-based complex oxide powder and an alumina powder were prepared. As the Ce-Zr-based complex oxide powder, a $CeO_2$-$ZrO_2$ solid solution powder was used.

The $CeO_2$-$ZrO_2$ solid solution powder and the alumina powder were mixed to prepare a mixed powder. The D50 of the mixed powder was 7 $\mu$m.

The mixed powder was added to an aqueous solution of palladium nitrate to obtain a mixed liquid. The resulting mixed liquid, a pore forming agent (cross-linked poly(methyl (meth)acrylate) particles having a median particle size D50 of 5 $\mu$m), barium hydroxide, an alumina sol, a zirconia sol, and water as a solvent were mixed to prepare a third slurry. The amounts of Pd and the pore forming agent contained in the third slurry were adjusted such that the amounts of Pd and the pore forming agent were 3% by mass and 30% by mass, respectively, based on the mass (100% by mass) of the lower layer of the second catalyst layer formed by drying and calcining the third slurry. The mass of the lower layer of the second catalyst layer formed by drying and calcining the third slurry is obtained by subtracting the mass of the components that disappear by drying and calcining the third slurry (e.g., the solvent, the pore forming agent, and the like) from the mass of the third slurry.

(3) Preparation of fourth slurry

A slurry that was the same as the first slurry was prepared as a fourth slurry. The amounts of Rh and the pore forming agent contained in the fourth slurry were adjusted such that the amounts of Rh and the pore forming agent were 0.3% by mass and 30% by mass, respectively, based on the mass (100% by mass) of the upper layer of the second catalyst layer formed by drying and calcining the fourth slurry. The mass of the upper layer of the second catalyst layer formed by drying and calcining the fourth slurry is obtained by subtracting the mass of the components that disappear by drying and calcining the fourth slurry (e.g., the solvent, the pore forming agent, and the like) from the mass of the fourth slurry.

(4) Production of exhaust gas purification catalyst

A substrate having the structure shown in Figures 1 to 6, namely, a substrate including inflow-side cells each extending in the axial direction of the substrate, outflow-side cells each extending in the axial direction of the substrate, and a porous partition wall separating the inflow-side cells and the outflow-side cells from one another was prepared. The thickness of the partition wall is 216 $\mu$m, and the total number of inflow-side and outflow-side cells in a cross section perpendicular to the axial direction of the substrate is 300 cells per square inch, and the volume of the substrate is 1.4 L. The area of the opening of the inflow-side cell at the end surface on the inflow side of the substrate and the area of the opening of the outflow-side cell at the end surface on the outflow side of the substrate are roughly the same.

The end on the exhaust gas inflow side of the substrate was immersed in the first slurry, and the first slurry was drawn by suction from the opposite side, and then dried at 70°C for 10 minutes. Thus, a first precursor layer composed of the solid content of the first slurry was formed on the inflow-side cell side of the partition wall of the substrate. The first precursor layer thus formed extended from the end on the exhaust gas inflow side of the partition wall along the exhaust gas flow direction.

After drying, the end on the exhaust gas outflow side of the substrate was immersed in the third slurry, and the third slurry was drawn by suction from the opposite side, and then dried at 70°C for 10 minutes. Thus, a third precursor layer composed of the solid content of the third slurry was formed on the outflow-side cell side of the partition wall of the substrate. The third precursor layer thus formed extended from the end on the exhaust gas outflow side of the partition wall along the direction opposite to the exhaust gas flow direction. After drying, the end on the exhaust gas outflow side of the substrate was immersed in the fourth slurry, and the fourth slurry was drawn by suction from the opposite side, and then dried at 70°C for 10 minutes. Thus, a fourth precursor layer composed of the solid content of the fourth slurry was formed on the third precursor layer formed on the outflow-side cell side of the partition wall of the substrate. The fourth precursor layer thus formed extended from the end on the exhaust gas outflow side of the partition wall along the direction opposite to the exhaust gas flow direction.

Thereafter, the substrate was calcined at 450°C for 1 hour to form the first catalyst layer and the second catalyst layer on the substrate. Thus, an exhaust gas purification catalyst of Example 1 was obtained. The first catalyst layer had a single-layer structure, while the second catalyst layer had a two-layer structure consisting of the lower layer and the upper layer. The mass (washcoat amount) of the first catalyst layer per unit volume of the portion of the substrate provided with the first catalyst layer was 69.4 g/L. The mass (washcoat amount) of the lower layer of the second catalyst layer per unit volume of the portion of the substrate provided with the lower layer of the second catalyst layer was 41.1 g/L. The mass (washcoat amount) of the upper layer of the second catalyst layer per unit volume of the portion of the substrate provided with the upper layer of the second catalyst layer was 21.4 g/L.

<Example 2>

An exhaust gas purification catalyst of Example 2 was obtained in the same manner as in Example 1, except that the pore forming agent in the first slurry was changed from cross-linked poly(methyl (meth)acrylate) particles having a median particle size D50 of 3 $\mu$m to cross-linked poly(methyl (meth)acrylate) particles having a median particle size D50 of 5 $\mu$m, and that a slurry that was the same as the first slurry in Example 1 (i.e., the slurry contained cross-linked poly(methyl (meth)acrylate) particles having a median particle size D50 of 3 $\mu$m as a pore forming agent) was used as the fourth slurry.

<Example 3>

An exhaust gas purification catalyst of Example 3 was obtained in the same manner as in Example 1, except that the pore forming agent in the first slurry was changed from cross-linked poly(methyl (meth)acrylate) particles having a median particle size D50 of 3 $\mu$m to cross-linked poly(methyl (meth)acrylate) particles having a median particle size D50 of 2 $\mu$m, and that the pore forming agent in the fourth slurry was changed from cross-linked poly(methyl (meth)acrylate) particles having a median particle size D50 of 3 $\mu$m to cross-linked poly(methyl (meth)acrylate) particles having a median particle size D50 of 2 $\mu$m.

<Example 4>

An exhaust gas purification catalyst of Example 4 was obtained in the same manner as in Example 1, except that the pore forming agent in the third slurry was changed from cross-linked poly(methyl (meth)acrylate) particles having a median particle size D50 of 5 $\mu$m to cross-linked poly(methyl (meth)acrylate) particles having a median particle size D50 of

10 μm.

<Example 5>

(1) Preparation of fifth slurry

A Ce-Zr-based complex oxide powder and an alumina powder were prepared. As the Ce-Zr-based complex oxide powder, a $CeO_2$-$ZrO_2$ solid solution powder was used.

The $CeO_2$-$ZrO_2$ solid solution powder and the alumina powder were mixed to prepare a mixed powder. The D50 of the mixed powder was 6 μm.

The mixed powder was added to an aqueous solution of palladium nitrate to obtain a mixed liquid. The resulting mixed liquid, a pore forming agent (cross-linked poly(methyl (meth)acrylate) particles having a median particle size D50 of 5 μm), an alumina sol, a zirconia sol, and water as a solvent were mixed to prepare a fifth slurry. The amounts of Pd and the pore forming agent contained in the fifth slurry were adjusted such that the amounts of Pd and the pore forming agent were 3% by mass and 40% by mass, respectively, based on the mass (100% by mass) of the lower layer of the first catalyst layer formed by drying and calcining the fifth slurry. The mass of the lower layer of the first catalyst layer formed by drying and calcining the fifth slurry is obtained by subtracting the mass of the components that disappear by drying and calcining the fifth slurry (e.g., the solvent, the pore forming agent, and the like) from the mass of the fifth slurry.

(2) Preparation of sixth slurry

A Ce-Zr-based complex oxide powder and an alumina powder were prepared. As the Ce-Zr-based complex oxide powder, a $CeO_2$-$ZrO_2$ solid solution powder was used.

The $CeO_2$-$ZrO_2$ solid solution powder and the alumina powder were mixed to prepare a mixed powder. The D50 of the mixed powder was 6 μm.

The mixed powder was added to an aqueous solution of rhodium nitrate to obtain a mixed liquid. The resulting mixed liquid, a pore forming agent (cross-linked poly(methyl (meth)acrylate) particles having a median particle size D50 of 3 μm), an alumina sol, a zirconia sol, and water as a solvent were mixed to prepare a sixth slurry. The amounts of Rh and the pore forming agent contained in the sixth slurry were adjusted such that the amounts of Rh and the pore forming agent were 0.3% by mass and 40% by mass, respectively, based on the mass (100% by mass) of the upper layer of the first catalyst layer formed by drying and calcining the sixth slurry. The mass of the upper layer of the first catalyst layer formed by drying and calcining the sixth slurry is obtained by subtracting the mass of the components that disappear by drying and calcining the sixth slurry (e.g., the solvent, the pore forming agent, and the like) from the mass of the sixth slurry.

(3) Preparation of second slurry

A slurry that was the same as the sixth slurry except for the amount of the pore forming agent described below was prepared as a second slurry. The amounts of Rh and the pore forming agent contained in the second slurry were adjusted such that the amounts of Rh and the pore forming agent were 0.3% by mass and 30% by mass, respectively, based on the mass (100% by mass) of the second catalyst layer formed by drying and calcining the second slurry. The mass of the second catalyst layer formed by drying and calcining the second slurry is obtained by subtracting the mass of the components that disappear by drying and calcining the second slurry (e.g., the solvent, the pore forming agent, and the like) from the mass of the second slurry.

(4) Production of exhaust gas purification catalyst

A substrate that was the same as the substrate in Example 1 was prepared.

The end on the exhaust gas inflow side of the substrate was immersed in the fifth slurry, and the fifth slurry was drawn by suction from the opposite side, and then dried at 70°C for 10 minutes. Thus, a fifth precursor layer composed of the solid content of the fifth slurry was formed on the inflow-side cell side of the partition wall of the substrate. The fifth precursor layer thus formed extended from the end on the exhaust gas inflow side of the partition wall along the exhaust gas flow direction. After drying, the end on the exhaust gas inflow side of the substrate was immersed in the sixth slurry, and the sixth slurry was drawn by suction from the opposite side, and then dried at 70°C for 10 minutes. Thus, a sixth precursor layer composed of the solid content of the sixth slurry was formed on the fifth precursor layer formed on the inflow-side cell side of the partition wall of the substrate. The sixth precursor layer thus formed extended from the end on the exhaust gas inflow side of the partition wall along the exhaust gas flow direction.

After drying, the end on the exhaust gas outflow side of the substrate was immersed in the second slurry, and the second slurry was drawn by suction from the opposite side, and then dried at 70°C for 10 minutes. Thus, a second precursor layer composed of the solid content of the second slurry was formed on the outflow-side cell side of the partition wall of the substrate. The second precursor layer thus formed extended from the end on the exhaust gas outflow side of the partition wall along the direction opposite to the exhaust gas flow direction.

Thereafter, the substrate was calcined at 450°C for 1 hour to form the first catalyst layer and the second catalyst layer on the substrate. Thus, an exhaust gas purification catalyst of Example 5 was obtained. The first catalyst layer had a two-layer structure consisting of the lower layer and the upper layer, while the second catalyst layer had a single-layer structure. The mass (washcoat amount) of the lower layer of the first catalyst layer per unit volume of the portion of the substrate provided with the lower layer of the first catalyst layer was 27.1 g/L. The mass (washcoat amount) of the upper layer of the first catalyst layer per unit volume of the portion of the substrate provided with the upper layer of the first catalyst layer was 12.3 g/L. The mass (washcoat amount) of the second catalyst layer per unit volume of the portion of the substrate provided with the second catalyst layer was 34.7 g/L.

<Comparative Example 1>

An exhaust gas purification catalyst of Comparative Example 1 was obtained in the same manner as in Example 1, except that the pore forming agent in the third slurry was changed from cross-linked poly(methyl (meth)acrylate) particles having a median particle size D50 of 5 $\mu$m to cross-linked poly(methyl (meth)acrylate) particles having a median particle size D50 of 3 $\mu$m.

<Comparative Example 2>

An exhaust gas purification catalyst of Comparative Example 2 was obtained in the same manner as in Example 1, except that the pore forming agent in the first slurry was changed from cross-linked poly(methyl (meth)acrylate) particles having a median particle size D50 of 3 $\mu$m to cross-linked poly(methyl (meth)acrylate) particles having a median particle size D50 of 5 $\mu$m, and that the pore forming agent in the fourth slurry was changed from cross-linked poly(methyl (meth) acrylate) particles having a median particle size D50 of 3 $\mu$m to cross-linked poly(methyl (meth)acrylate) particles having a median particle size D50 of 5 $\mu$m.

<Measurement of pore volume>

Each of the catalysts of the Examples and the Comparative Examples was cut in a plane parallel to the axial direction of the substrate and in a plane perpendicular to the axial direction of the substrate, and the portion indicated by the reference sign M1 in Figure 9 or 11 was cut out to obtain a cut piece M1 that included part of the partition wall and part of the first catalyst layer, but did not include the second catalyst layer. The cut piece M1 included neither the first sealing member nor the second sealing member. The length of the part of the partition wall included in the cut piece M1 was equal to the length of the cut piece M1. The length of the part of the first catalyst layer included in the cut piece M1 was equal to the length of the cut piece M1. The cut piece M1 was obtained from the vicinity of the exhaust gas inflow side end of the catalyst. Specifically, by cutting the substrate at two locations 10 mm and 20 mm apart from the exhaust gas inflow side end in the exhaust gas flow direction E, respectively, in a plane perpendicular to the axial direction of the substrate, the cut piece M1 was obtained. The cut piece M1 was in the shape of a cube with a side length of 10 mm.

Each of the catalysts of the Examples and the Comparative Examples was cut in a plane parallel to the axial direction of the substrate and in a plane perpendicular to the axial direction of the substrate, and the portion indicated by the reference sign M2 in Figure 9 or 11 was cut out to obtain a cut piece M2 that included part of the partition wall and part of the second catalyst layer (lower layer and upper layer), but did not include the first catalyst layer. The cut piece M2 included neither the first sealing member nor the second sealing member. The length of the part of the partition wall included in the cut piece M2 was equal to the length of the cut piece M2. The length of the part of the second catalyst layer (lower layer and upper layer) included in the cut piece M2 was equal to the length of the cut piece M2. The cut piece M2 was obtained from the vicinity of the exhaust gas outflow side end of the catalyst. Specifically, by cutting the substrate at two locations 10 mm and 20 mm apart from the exhaust gas outflow side end in the direction opposite to the exhaust gas flow direction E, respectively, in a plane perpendicular to the axial direction of the substrate, the cut piece M2 was obtained. The cut piece M2 was in the shape of a cube with a side length of 10 mm.

Using the cut piece M1, the log-differential pore volume distribution of the first catalyst layer was measured by mercury porosimetry to determine the log-differential pore volume distribution curve of the first catalyst layer. Using the cut piece M2, the log-differential pore volume distribution of the second catalyst layer was measured by mercury porosimetry to determine the log-differential pore volume distribution curve of the second catalyst layer. Specific measurement conditions were as follows.

[Measurement of log-differential pore volume distribution]

Measurement of the log-differential pore volume distribution was performed under the following conditions and procedures using an automatic porosimeter "AutoPore IV 9520" manufactured by Shimadzu Corporation as a measurement apparatus.

(Measurement conditions)

Measurement environment: 25°C
Measurement cell: sample chamber volume 3 cm$^3$, press-in volume 0.39 cm$^3$
Measurement range: from 0.0048 MPa to 255.1060 MPa
Measurement point:

54 points in the range of 0.0048 MPa to 0.3447 MPa
77 points in the range of 0.3447 MPa to 255.1060 MPa
131 points in total (the respective points were pitched to be equally spaced when plotting the pressure as a logarithm)
Press-in volume: adjusted to be 25% or more and 90% or less.

(Low pressure parameters)

Exhaust pressure: 50 μmHg
Exhaust time: 5.0 min
Mercury injection pressure: 0.0034 MPa
Equilibrium time: 10 sec

(High pressure parameter)

Equilibrium time: 10 sec

(Mercury parameters)

Advancing contact angle: 130.0 degrees
Receding contact angle: 130.0 degrees
Surface tension: 485.0 mN/m (485.0 dyne/cm)
Mercury density: 13.5335 g/mL

(Measurement procedures)

(1) In the low pressure section, measurement was made at 54 points in the range of 0.0048 MPa to 0.3447 MPa or less.
(2) In the high pressure section, measurement was made at 77 points in the range of 0.3792 MPa to 255.1060 MPa or less.
(3) The logarithmic differential pore volume distribution curve (log-differential pore volume distribution curve) was determined from the mercury injection pressure, the mercury injection volume, and the mass of the cut piece M1 or M2.

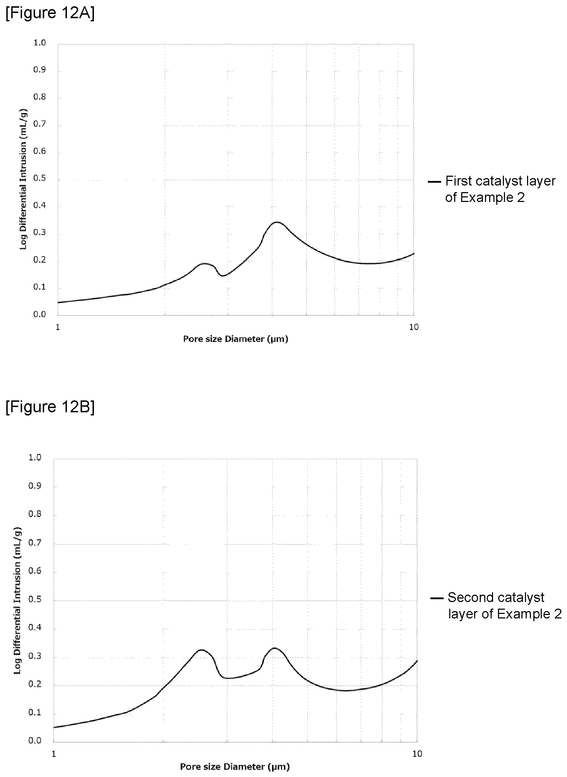

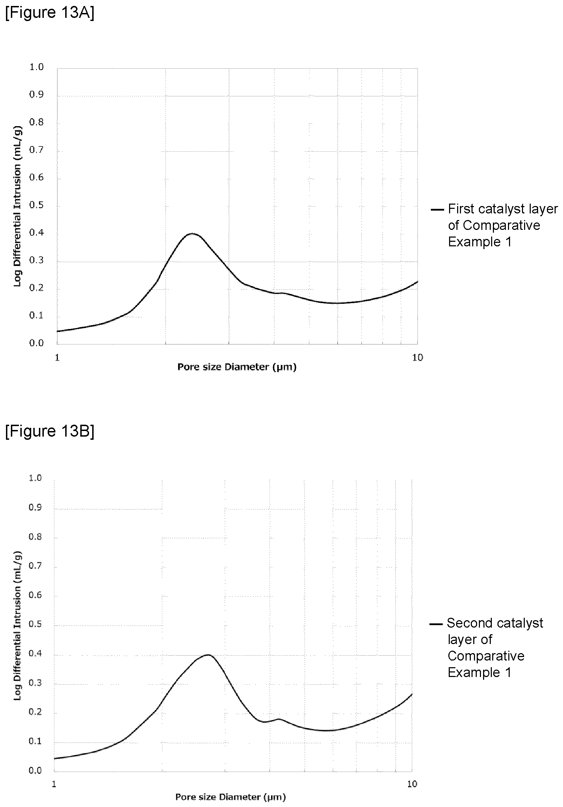

The above (1), (2), and (3) were carried out automatically by the software attached to the apparatus. Other conditions were in accordance with JIS R 1655:2003.
The logarithmic differential pore volume distribution curves of the first catalyst layer and the second catalyst layer in the exhaust gas purification catalyst of Example 2 are shown in Figures 12A and 12B, respectively.
The logarithmic differential pore volume distribution curves of the first catalyst layer and the second catalyst layer in the exhaust gas purification catalyst of Comparative Example 1 are shown in Figures 13A and 13B, respectively.

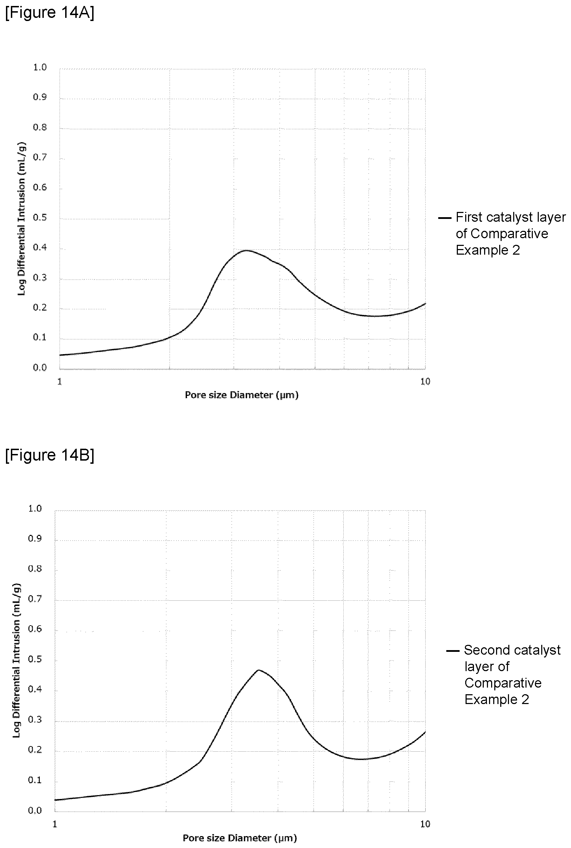

The logarithmic differential pore volume distribution curves of the first catalyst layer and the second catalyst layer in the exhaust gas purification catalyst of Comparative Example 2 are shown in Figures 14A and 14B, respectively.

It was checked whether the peak value A is present in the pore size range of 1 μm or more and 3 μm or less in the logarithmic differential pore volume distribution curve of the first catalyst layer (if present, specific value of the peak value A); whether the peak value B is present in the pore size range of more than 3 μm and 10 μm or less in the logarithmic differential pore volume distribution curve of the first catalyst layer (if present, specific value of the peak value B); whether the peak value C is present in the pore size range of 1 μm or more and 3 μm or less in the logarithmic differential pore volume distribution curve of the second catalyst layer (if present, specific value of the peak value C); and whether the peak value D is present in the pore size range of more than 3 μm and 10 μm or less in the logarithmic differential pore volume distribution curve of the second catalyst layer (if present, specific value of the peak value D). The results are shown in Tables 2 and 3. In Tables 2 and 3, in the "Presence/Absence" of the peak value A, "Absent" indicates that the peak value A was not present, "Maximal value" indicates that the peak value A was present as a maximal value (logarithmic differential pore volume at the vertex) in the logarithmic differential pore volume distribution curve, and "Shoulder" indicates that the peak value A was present as a shoulder in the logarithmic differential pore volume distribution curve. The same applies to the peak values B, C, and D.

<Evaluation of pressure loss>

The lateral face of the exhaust gas purification catalyst of Example 1 was supported and fixed so that the end face on the exhaust gas inflow side faced upward. Air was drawn **by** suction at a rate of 50 L/sec from the lower side of the fixed exhaust gas purification catalyst (the end face on the exhaust gas outflow side). The difference between the air pressure at the end face on the exhaust gas inflow side and the air pressure at the end face on the exhaust gas outflow side 10 seconds after the start of suction was determined, and this was defined as the pressure loss of the exhaust gas purification catalyst of Example 1.

Using a substrate (on which neither the first catalyst layer nor the second catalyst layer was formed) instead of the exhaust gas purification catalyst of Example 1, the difference between the air pressure at the end surface on the exhaust gas inflow side and the air pressure at the end surface on the exhaust gas outflow side 10 seconds after the start of suction was determined in the same manner as above, and this was defined as the pressure loss of the substrate.

A pressure loss ratio (%) was determined based on the following formula.

Pressure loss ratio = ((Pressure loss of exhaust gas purification catalyst of Example 1)/(Pressure loss of substrate)) × 100

The pressure loss ratio of less than 270% was evaluated as "A", the pressure loss ratio of 270% or more and less than 300% was evaluated as "B", and the pressure loss ratio of 300% or more was evaluated as "C". The results are shown in Table 2.

<Evaluation of PM collection performance>

A gasoline engine vehicle using the exhaust gas purification catalyst of Example 1 was driven according to the driving conditions of Worldwide Harmonized Light Vehicles Test Cycle (WLTC). The number of PM particles ($PN_{cat}$) in the exhaust gas passed through the exhaust gas purification catalyst was measured for each of the following periods: a low speed driving period from the start of driving to 589 seconds after the start of driving, a medium speed driving period from 589 seconds to 1022 seconds after the start of driving, a high speed driving period from 1022 seconds to 1477 seconds after the start of driving, and an ultra-high speed driving period from 1477 seconds to 1800 seconds after the start of driving. Further, the number of PM particles ($PN_{all}$) directly discharged from the engine was measured, and the PM collection performance of the exhaust gas purification catalyst of Example 1 was determined by the following formula.

$$PM\ collection\ ratio = (1 - (PN_{cat}/PN_{all})) \times 100$$

The measurement conditions of the PM collection performance were as follows.

Evaluated vehicle: 1.5 L direct injection turbo engine
Gasoline used: fuel for verification test
PM measuring apparatus: manufactured by HORIBA, Ltd.

The PM collection ratio of 98.7% or more was evaluated as "A", the PM collection ratio of 98.0% or more and less than 98.7% was evaluated as "B", and the PM collection ratio of less than 98.0% was evaluated as "C". The results are shown in Table 2.

[Table 2]

Table 2

| | Median particle size D50 of pore forming agent in slurry | | | Peak value A | | Peak value B | | Peak value C | | Peak value D | | PM collection ratio | Pressure loss ratio |
|---|---|---|---|---|---|---|---|---|---|---|---|---|---|
| | First catalyst layer | Second catalyst layer | | Presence/ Absence | Peak value (mL/g) | Presence/ Absence | Peak value (mL/g) | Presence/ Absence | Peak value (mL/g) | Presence/ Absence | Peak value (mL/g) | | |
| | | Lower layer | Upper layer | | | | | | | | | | |
| Example 1 | 3 | 5 | 3 | Maximal value | 0.47 | Absence | - | Absence | - | Maximal value | 0.43 | A | A |
| Example 2 | 5 | 5 | 3 | Maximal value | 0.19 | Maximal value | 0.34 | Maximal value | 0.33 | Maximal value | 0.33 | A | B |
| Example 3 | 2 | 5 | 2 | Maximal value | 0.27 | Absence | - | Absence | - | Maximal value | 0.41 | B | B |
| Example 4 | 3 | 10 | 3 | Maximal value | 0.29 | Absence | - | Maximal value | 0.19 | Maximal value | 0.35 | B | B |
| Comparative Example 1 | 3 | 3 | 3 | Maximal value | 0.38 | Maximal value | 0.18 | Maximal value | 0.40 | Maximal value | 0.17 | B | C |
| Comparative Example 2 | 5 | 5 | 5 | Absence | - | Maximal value | 0.39 | Absence | - | Maximal value | 0.47 | C | B |

EP 4 591 981 A1

[Table 3]

[Table 3]

Table 3

| | Median particle size D50 of pore forming agent in slurry | | | Peak value A | | Peak value B | | Peak value C | | Peak value D | | PM collection ratio | Pressure loss ratio |
| | First catalyst layer | | Second catalyst layer | Presence/ Absence | Peak value (mL/g) | Presence/ Absence | Peak value (mL/g) | Presence/ Absence | Peak value (mL/g) | Presence/ Absence | Peak value (mL/g) | | |
| | Upper layer | Lower layer | | | | | | | | | | | |
|---|---|---|---|---|---|---|---|---|---|---|---|---|---|
| Example 5 | 3 | 5 | 3 | Shoulder | 0.26 | Maximal value | 0.33 | Maximal value | 0.33 | - | - | A | A |

EP 4 591 981 A1

44

**EP 4 591 981 A1**

DESCRIPTION OF REFERENCE SIGNS

| 1A, 1B, 1C | Exhaust gas purification catalyst |
| 10 | Substrate |
| 11 | Tubular member |
| 12 | Partition wall |
| 13 | Cell |
| 13a | Inflow-side cell |
| 13b | Outflow-side cell |
| 14 | First sealing member |
| 15 | Second sealing member |
| 20 | First catalyst layer |
| 21 | Lower layer of first catalyst layer |
| 22 | Upper layer of first catalyst layer |
| 30 | Second catalyst portion |
| 31 | Lower layer of second catalyst layer |
| 32 | Upper layer of second catalyst layer |
| S1a | Outer surface on inflow-side cell side of partition wall |
| S1b | Outer surface on outflow-side cell side of partition wall |

**Claims**

1. An exhaust gas purification catalyst comprising: a substrate extending in an exhaust gas flow direction; a first catalyst layer; and a second catalyst layer,
wherein the substrate comprises:

an inflow-side cell extending in the exhaust gas flow direction and having an open end on an exhaust gas inflow side thereof and a closed end on an exhaust gas outflow side thereof;
an outflow-side cell extending in the exhaust gas flow direction and having a closed end on an exhaust gas inflow side thereof and an open end on an exhaust gas outflow side thereof; and
a porous partition wall separating the inflow-side cell and the outflow-side cell from each other,
wherein the first catalyst layer is formed on an inflow-side cell side of the partition wall from an end on an exhaust gas inflow side of the partition wall along the exhaust gas flow direction,
wherein the second catalyst layer is formed on an outflow-side cell side of the partition wall from an end on an exhaust gas outflow side of the partition wall along a direction opposite to the exhaust gas flow direction, and
wherein,
assuming that:

Condition 1 is defined as the condition that, in a logarithmic differential pore volume distribution curve of the first catalyst layer obtained by mercury porosimetry, a peak value A is present in a pore size range of 1 μm or more and 3 μm or less and the peak value A is 0.20 mL/g or more;
Condition 2 is defined as the condition that, in the logarithmic differential pore volume distribution curve of the first catalyst layer obtained by mercury porosimetry, a peak value B is present in a pore size range of more than 3 μm and 10 μm or less and the peak value B is 0.20 mL/g or more;
Condition 3 is defined as the condition that, in a logarithmic differential pore volume distribution curve of the second catalyst layer obtained by mercury porosimetry, a peak value C is present in a pore size range of 1 μm or more and 3 μm or less and the peak value C is 0.20 mL/g or more; and
Condition 4 is defined as the condition that, in the logarithmic differential pore volume distribution curve of the second catalyst layer obtained by mercury porosimetry, a peak value D is present in a pore size range of more than 3 μm and 10 μm or less and the peak value D is 0.20 mL/g or more,
the second catalyst layer satisfies Condition 3 and does not satisfy Condition 4, or satisfies Condition 4 and does not satisfy Condition 3, or
satisfies Conditions 3 and 4, or satisfies none of Conditions 3 and 4, and
when the second catalyst layer satisfies Condition 3 and does not satisfy Condition 4, the first catalyst layer satisfies at least Condition 2 of Conditions 1 and 2,
when the second catalyst layer satisfies Condition 4 and does not satisfy Condition 3, the first catalyst layer satisfies at least Condition 1 of Conditions 1 and 2,
when the second catalyst layer satisfies Conditions 3 and 4, the first catalyst layer satisfies at least one of Conditions 1 and 2, or none of Conditions 1 and 2, and
when the second catalyst layer satisfies none of Conditions 3 and 4, the first catalyst layer satisfies Conditions 1 and 2.

2. The exhaust gas purification catalyst as claimed in claim 1, wherein

the second catalyst layer satisfies Condition 3 and does not satisfy Condition 4, or satisfies Condition 4 and does not satisfy Condition 3, or satisfies Conditions 3 and 4, and
when the second catalyst layer satisfies Condition 3 and does not satisfy Condition 4, the first catalyst layer satisfies at least Condition 2 of Conditions 1 and 2,
when the second catalyst layer satisfies Condition 4 and does not satisfy Condition 3, the first catalyst layer satisfies at least Condition 1 of Conditions 1 and 2, and
when the second catalyst layer satisfies Conditions 3 and 4, the first catalyst layer satisfies at least one of Conditions 1 and 2.

3. The exhaust gas purification catalyst as claimed in claim 1 or 2, wherein the peak value A in Condition 1 is 1.00 mL/g or less, and the peak value C in Condition 3 is 1.00 mL/g or less.

4. The exhaust gas purification catalyst as claimed in claim 1 or 2, wherein the peak value B in Condition 2 is 1.00 mL/g or less, and the peak value D in Condition 4 is 1.00 mL/g or less.

5. The exhaust gas purification catalyst as claimed in claim 1 or 2, wherein the peak value A in Condition 1 is 0.31 mL/g or more, and the peak value C in Condition 3 is 0.31 mL/g or more.

6. A method for producing an exhaust gas purification catalyst comprising: a substrate extending in an exhaust gas flow direction; a first catalyst layer; and a second catalyst layer,
wherein the substrate comprises:

an inflow-side cell extending in the exhaust gas flow direction and having an open end on an exhaust gas inflow side thereof and a closed end on an exhaust gas outflow side thereof;
an outflow-side cell extending in the exhaust gas flow direction and having a closed end on an exhaust gas inflow side thereof and an open end on an exhaust gas outflow side thereof; and
a porous partition wall separating the inflow-side cell and the outflow-side cell from each other,
wherein the first catalyst layer is formed on an inflow-side cell side of the partition wall from an end on an exhaust gas inflow side of the partition wall along the exhaust gas flow direction,
wherein the second catalyst layer is formed on an outflow-side cell side of the partition wall from an end on an exhaust gas outflow side of the partition wall along a direction opposite to the exhaust gas flow direction,
wherein the method comprises the following steps of:

(1a) applying a first slurry containing a first pore forming agent onto the inflow-side cell side of the partition wall to form a first precursor layer;
(1b) applying a second slurry containing a second pore forming agent onto the outflow-side cell side of the partition wall to form a second precursor layer; and
(1c) calcining the first precursor layer and the second precursor layer to form the first catalyst layer and the second catalyst layer, respectively,

wherein, of the first and second pore forming agents, one pore forming agent has a median particle size D50 of more than 4 $\mu$m, and the other pore forming agent has a median particle size D50 of 4 $\mu$m or less,
wherein the first slurry contains an inorganic oxide particle, and the inorganic oxide particle contained in the first slurry has a median particle size D50 of 1 $\mu$m or more and 20 $\mu$m or less,
wherein an amount of the first pore forming agent contained in the first precursor layer is 10% by mass or more and 60% by mass or less based on a mass of the first catalyst layer,
wherein a mass of the first catalyst layer per unit volume of a portion of the substrate provided with the first catalyst layer is 5 g/L or more and 150 g/L or less,
wherein the second slurry contains an inorganic oxide particle, and the inorganic oxide particle contained in the second slurry has a median particle size D50 of 1 $\mu$m or more and 20 $\mu$m or less,

wherein an amount of the second pore forming agent contained in the second precursor layer is 10% by mass or more and 60% by mass or less based on a mass of the second catalyst layer, and

wherein a mass of the second catalyst layer per unit volume of a portion of the substrate provided with the second catalyst layer is 5 g/L or more and 150 g/L or less.

7. A method for producing an exhaust gas purification catalyst comprising: a substrate extending in an exhaust gas flow direction; a first catalyst layer; and a second catalyst layer,
wherein the substrate comprises:

an inflow-side cell extending in the exhaust gas flow direction and having an open end on an exhaust gas inflow side thereof and a closed end on an exhaust gas outflow side thereof;
an outflow-side cell extending in the exhaust gas flow direction and having a closed end on an exhaust gas inflow side thereof and an open end on an exhaust gas outflow side thereof; and
a porous partition wall separating the inflow-side cell and the outflow-side cell from each other,
wherein the first catalyst layer is formed on an inflow-side cell side of the partition wall from an end on an exhaust gas inflow side of the partition wall along the exhaust gas flow direction,
wherein the second catalyst layer is formed on an outflow-side cell side of the partition wall from an end on an exhaust gas outflow side of the partition wall along a direction opposite to the exhaust gas flow direction,
wherein the second catalyst layer comprises: a lower layer formed on the outflow-side cell side of the partition wall; and an upper layer formed on the lower layer,
wherein the method comprises the following steps of:

(2a) applying a first slurry containing a first pore forming agent onto the inflow-side cell side of the partition wall to form a first precursor layer;
(2b) applying a third slurry containing a third pore forming agent onto the outflow-side cell side of the partition wall to form a third precursor layer;
(2c) applying a fourth slurry containing a fourth pore forming agent onto the third precursor layer to form a fourth precursor layer; and
(2d) calcining the first precursor layer, the third precursor layer and the fourth precursor layer to form the first catalyst layer, the lower layer and the upper layer, respectively,

wherein, of the first, third and fourth pore forming agents, one or two pore forming agents have a median particle size D50 of more than 4 μm, and the other one or two pore forming agents have a median particle size D50 of 4 μm or less,
wherein the first slurry contains an inorganic oxide particle, and the inorganic oxide particle contained in the first slurry has a median particle size D50 of 1 μm or more and 20 μm or less,
wherein an amount of the first pore forming agent contained in the first precursor layer is 10% by mass or more and 60% by mass or less based on a mass of the first catalyst layer,
wherein a mass of the first catalyst layer per unit volume of a portion of the substrate provided with the first catalyst layer is 5 g/L or more and 150 g/L or less,
wherein the third slurry contains an inorganic oxide particle, and the inorganic oxide particle contained in the third slurry has a median particle size D50 of 1 μm or more and 20 μm or less,
wherein an amount of the third pore forming agent contained in the third precursor layer is 10% by mass or more and 60% by mass or less based on a mass of the lower layer,
wherein a mass of the lower layer per unit volume of a portion of the substrate provided with the lower layer is 5 g/L or more and 90 g/L or less,
wherein the fourth slurry contains an inorganic oxide particle, and the inorganic oxide particle contained in the fourth slurry has a median particle size D50 of 1 μm or more and 20 μm or less,
wherein an amount of the fourth pore forming agent contained in the fourth precursor layer is 10% by mass or more and 60% by mass or less based on a mass of the upper layer, and
wherein a mass of the upper layer per unit volume of a portion of the substrate provided with the upper layer is 5 g/L or more and 60 g/L or less.

8. The method as claimed in claim 7, wherein the third pore forming agent has a median particle size D50 of more than 4 μm, and the fourth pore forming agent has a median particle size D50 of 4 μm or less.

9. A method for producing an exhaust gas purification catalyst comprising: a substrate extending in an exhaust gas flow direction; a first catalyst layer; and a second catalyst layer,

wherein the substrate comprises:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction,

wherein the first catalyst layer comprises: a lower layer formed on the inflow-side cell side of the partition wall; and an upper layer formed on the lower layer,

wherein the method comprises the following steps of:

(3a) applying a second slurry containing a second pore forming agent onto the outflow-side cell side of the partition wall to form a second precursor layer;

(3b) applying a fifth slurry containing a fifth pore forming agent onto the inflow-side cell side of the partition wall to form a fifth precursor layer;

(3c) applying a sixth slurry containing a sixth pore forming agent onto the fifth precursor layer to form a sixth precursor layer; and

(3d) calcining the second precursor layer, the fifth precursor layer and the sixth precursor layer to form the second catalyst layer, the lower layer and the upper layer, respectively,

wherein, of the second, fifth and sixth pore forming agents, one or two pore forming agents have a median particle size D50 of more than 4 $\mu$m, and the other one or two pore forming agents have a median particle size D50 of 4 $\mu$m or less,

wherein the second slurry contains an inorganic oxide particle, and the inorganic oxide particle contained in the second slurry has a median particle size D50 of 1 $\mu$m or more and 20 $\mu$m or less,

wherein an amount of the second pore forming agent contained in the second precursor layer is 10% by mass or more and 60% by mass or less based on a mass of the second catalyst layer,

wherein a mass of the second catalyst layer per unit volume of a portion of the substrate provided with the second catalyst layer is 5 g/L or more and 150 g/L or less,

wherein the fifth slurry contains an inorganic oxide particle, and the inorganic oxide particle contained in the fifth slurry has a median particle size D50 of 1 $\mu$m or more and 20 $\mu$m or less,

wherein an amount of the fifth pore forming agent contained in the fifth precursor layer is 10% by mass or more and 60% by mass or less based on a mass of the lower layer,

wherein a mass of the lower layer per unit volume of a portion of the substrate provided with the lower layer is 5 g/L or more and 90 g/L or less,

wherein the sixth slurry contains an inorganic oxide particle, and the inorganic oxide particle contained in the sixth slurry has a median particle size D50 of 1 $\mu$m or more and 20 $\mu$m or less,

wherein an amount of the sixth pore forming agent contained in the sixth precursor layer is 10% by mass or more and 60% by mass or less based on a mass of the upper layer, and

wherein a mass of the upper layer per unit volume of a portion of the substrate provided with the upper layer is 5 g/L or more and 60 g/L or less.

10. The method as claimed in claim 9, wherein the fifth pore forming agent has a median particle size D50 of more than 4 $\mu$m, and the sixth pore forming agent has a median particle size D50 of 4 $\mu$m or less.

**Amended claims under Art. 19.1 PCT**

1. An exhaust gas purification catalyst comprising: a substrate extending in an exhaust gas flow direction; a first catalyst layer; and a second catalyst layer,
wherein the substrate comprises:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction, and wherein,

assuming that:

Condition 1 is defined as the condition that, in a logarithmic differential pore volume distribution curve of the first catalyst layer obtained by mercury porosimetry, a peak value A is present in a pore size range of 1 $\mu$m or more and 3 $\mu$m or less and the peak value A is 0.20 mL/g or more;

Condition 2 is defined as the condition that, in the logarithmic differential pore volume distribution curve of the first catalyst layer obtained by mercury porosimetry, a peak value B is present in a pore size range of more than 3 $\mu$m and 10 $\mu$m or less and the peak value B is 0.20 mL/g or more;

Condition 3 is defined as the condition that, in a logarithmic differential pore volume distribution curve of the second catalyst layer obtained by mercury porosimetry, a peak value C is present in a pore size range of 1 $\mu$m or more and 3 $\mu$m or less and the peak value C is 0.20 mL/g or more; and

Condition 4 is defined as the condition that, in the logarithmic differential pore volume distribution curve of the second catalyst layer obtained by mercury porosimetry, a peak value D is present in a pore size range of more than 3 $\mu$m and 10 $\mu$m or less and the peak value D is 0.20 mL/g or more,

the second catalyst layer satisfies Condition 3 and does not satisfy Condition 4, or satisfies Condition 4 and does not satisfy Condition 3, or

satisfies Conditions 3 and 4, or satisfies none of Conditions 3 and 4, and

when the second catalyst layer satisfies Condition 3 and does not satisfy Condition 4, the first catalyst layer satisfies at least Condition 2 of Conditions 1 and 2,

when the second catalyst layer satisfies Condition 4 and does not satisfy Condition 3, the first catalyst layer satisfies at least Condition 1 of Conditions 1 and 2,

when the second catalyst layer satisfies Conditions 3 and 4, the first catalyst layer satisfies at least one of Conditions 1 and 2, or none of Conditions 1 and 2, and

when the second catalyst layer satisfies none of Conditions 3 and 4, the first catalyst layer satisfies Conditions 1 and 2.

2. The exhaust gas purification catalyst as claimed in claim 1, wherein

the second catalyst layer satisfies Condition 3 and does not satisfy Condition 4, or satisfies Condition 4 and does not satisfy Condition 3, or satisfies Conditions 3 and 4, and

when the second catalyst layer satisfies Condition 3 and does not satisfy Condition 4, the first catalyst layer satisfies at least Condition 2 of Conditions 1 and 2,

when the second catalyst layer satisfies Condition 4 and does not satisfy Condition 3, the first catalyst layer satisfies at least Condition 1 of Conditions 1 and 2, and

when the second catalyst layer satisfies Conditions 3 and 4, the first catalyst layer satisfies at least one of Conditions 1 and 2.

3. The exhaust gas purification catalyst as claimed in claim 1 or 2, wherein the peak value A in Condition 1 is 1.00 mL/g or less, and the peak value C in Condition 3 is 1.00 mL/g or less.

4. The exhaust gas purification catalyst as claimed in claim 1 or 2, wherein the peak value B in Condition 2 is 1.00 mL/g or less, and the peak value D in Condition 4 is 1.00 mL/g or less.

5. The exhaust gas purification catalyst as claimed in claim 1 or 2, wherein the peak value A in Condition 1 is 0.31 mL/g or more, and the peak value C in Condition 3 is 0.31 mL/g or more.

6. A method for producing an exhaust gas purification catalyst comprising: a substrate extending in an exhaust gas flow direction; a first catalyst layer; and a second catalyst layer,

wherein the substrate comprises:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction,

wherein the method comprises the following steps of:

(1a) applying a first slurry containing a first pore forming agent onto the inflow-side cell side of the partition wall to form a first precursor layer;

(1b) applying a second slurry containing a second pore forming agent onto the outflow-side cell side of the partition wall to form a second precursor layer; and

(1c) calcining the first precursor layer and the second precursor layer to form the first catalyst layer and the second catalyst layer, respectively,

wherein, of the first and second pore forming agents, one pore forming agent has a median particle size D50 of more than 4 $\mu$m, and the other pore forming agent has a median particle size D50 of 4 $\mu$m or less,

wherein the first slurry contains an inorganic oxide particle, and the inorganic oxide particle contained in the first slurry has a median particle size D50 of 1 $\mu$m or more and 20 $\mu$m or less,

wherein an amount of the first pore forming agent contained in the first precursor layer is 10% by mass or more and 60% by mass or less based on a mass of the first catalyst layer,

wherein a mass of the first catalyst layer per unit volume of a portion of the substrate provided with the first catalyst layer is 5 g/L or more and 150 g/L or less,

wherein the second slurry contains an inorganic oxide particle, and the inorganic oxide particle contained in the second slurry has a median particle size D50 of 1 $\mu$m or more and 20 $\mu$m or less,

wherein an amount of the second pore forming agent contained in the second precursor layer is 10% by mass or more and 60% by mass or less based on a mass of the second catalyst layer, and

wherein a mass of the second catalyst layer per unit volume of a portion of the substrate provided with the second catalyst layer is 5 g/L or more and 150 g/L or less.

7. A method for producing an exhaust gas purification catalyst comprising: a substrate extending in an exhaust gas flow direction; a first catalyst layer; and a second catalyst layer,

wherein the substrate comprises:

an inflow-side cell extending in the exhaust gas flow direction and having an open end on an exhaust gas inflow side thereof and a closed end on an exhaust gas outflow side thereof;

an outflow-side cell extending in the exhaust gas flow direction and having a closed end on an exhaust gas inflow side thereof and an open end on an exhaust gas outflow side thereof; and

a porous partition wall separating the inflow-side cell and the outflow-side cell from each other,

wherein the first catalyst layer is formed on an inflow-side cell side of the partition wall from an end on an exhaust gas inflow side of the partition wall along the exhaust gas flow direction,

wherein the second catalyst layer is formed on an outflow-side cell side of the partition wall from an end on an exhaust gas outflow side of the partition wall along a direction opposite to the exhaust gas flow direction,

wherein the second catalyst layer comprises: a lower layer formed on the outflow-side cell side of the partition wall; and an upper layer formed on the lower layer,

wherein the method comprises the following steps of:

(2a) applying a first slurry containing a first pore forming agent onto the inflow-side cell side of the partition wall to form a first precursor layer;

(2b) applying a third slurry containing a third pore forming agent onto the outflow-side cell side of the partition wall to form a third precursor layer;

(2c) applying a fourth slurry containing a fourth pore forming agent onto the third precursor layer to form a fourth precursor layer; and

(2d) calcining the first precursor layer, the third precursor layer and the fourth precursor layer to form the first catalyst layer, the lower layer and the upper layer, respectively,

wherein, of the first, third and fourth pore forming agents, one or two pore forming agents have a median particle size D50 of more than 4 $\mu$m, and the other one or two pore forming agents have a median particle size D50 of 4 $\mu$m or less,

wherein the first slurry contains an inorganic oxide particle, and the inorganic oxide particle contained in the first slurry has a median particle size D50 of 1 $\mu$m or more and 20 $\mu$m or less,

wherein an amount of the first pore forming agent contained in the first precursor layer is 10% by mass or more and 60% by mass or less based on a mass of the first catalyst layer,

wherein a mass of the first catalyst layer per unit volume of a portion of the substrate provided with the first catalyst layer is 5 g/L or more and 150 g/L or less,

wherein the third slurry contains an inorganic oxide particle, and the inorganic oxide particle contained in the third slurry has a median particle size D50 of 1 $\mu$m or more and 20 $\mu$m or less,

wherein an amount of the third pore forming agent contained in the third precursor layer is 10% by mass or more and 60% by mass or less based on a mass of the lower layer,

wherein a mass of the lower layer per unit volume of a portion of the substrate provided with the lower layer is 5 g/L or more and 90 g/L or less,

wherein the fourth slurry contains an inorganic oxide particle, and the inorganic oxide particle contained in the fourth slurry has a median particle size D50 of 1 $\mu$m or more and 20 $\mu$m or less,

wherein an amount of the fourth pore forming agent contained in the fourth precursor layer is 10% by mass or more and 60% by mass or less based on a mass of the upper layer, and

wherein a mass of the upper layer per unit volume of a portion of the substrate provided with the upper layer is 5 g/L or more and 60 g/L or less.

8. The method as claimed in claim 7, wherein the third pore forming agent has a median particle size D50 of more than 4 $\mu$m, and the fourth pore forming agent has a median particle size D50 of 4 $\mu$m or less.

9. A method for producing an exhaust gas purification catalyst comprising: a substrate extending in an exhaust gas flow direction; a first catalyst layer; and a second catalyst layer,
wherein the substrate comprises:

an inflow-side cell extending in the exhaust gas flow direction and having an open end on an exhaust gas inflow side thereof and a closed end on an exhaust gas outflow side thereof;
an outflow-side cell extending in the exhaust gas flow direction and having a closed end on an exhaust gas inflow side thereof and an open end on an exhaust gas outflow side thereof; and
a porous partition wall separating the inflow-side cell and the outflow-side cell from each other,
wherein the first catalyst layer is formed on an inflow-side cell side of the partition wall from an end on an exhaust gas inflow side of the partition wall along the exhaust gas flow direction,
wherein the second catalyst layer is formed on an outflow-side cell side of the partition wall from an end on an exhaust gas outflow side of the partition wall along a direction opposite to the exhaust gas flow direction,
wherein the first catalyst layer comprises: a lower layer formed on the inflow-side cell side of the partition wall; and an upper layer formed on the lower layer,
wherein the method comprises the following steps of:

(3a) applying a second slurry containing a second pore forming agent onto the outflow-side cell side of the partition wall to form a second precursor layer;
(3b) applying a fifth slurry containing a fifth pore forming agent onto the inflow-side cell side of the partition wall to form a fifth precursor layer;
(3c) applying a sixth slurry containing a sixth pore forming agent onto the fifth precursor layer to form a sixth precursor layer; and
(3d) calcining the second precursor layer, the fifth precursor layer and the sixth precursor layer to form the second catalyst layer, the lower layer and the upper layer, respectively,

wherein, of the second, fifth and sixth pore forming agents, one or two pore forming agents have a median particle size D50 of more than 4 $\mu$m, and the other one or two pore forming agents have a median particle size D50 of 4 $\mu$m or less,

wherein the second slurry contains an inorganic oxide particle, and the inorganic oxide particle contained in the second slurry has a median particle size D50 of 1 $\mu$m or more and 20 $\mu$m or less,

wherein an amount of the second pore forming agent contained in the second precursor layer is 10% by mass or more and 60% by mass or less based on a mass of the second catalyst layer,

wherein a mass of the second catalyst layer per unit volume of a portion of the substrate provided with the second catalyst layer is 5 g/L or more and 150 g/L or less,

wherein the fifth slurry contains an inorganic oxide particle, and the inorganic oxide particle contained in the fifth slurry has a median particle size D50 of 1 $\mu$m or more and 20 $\mu$m or less,

wherein an amount of the fifth pore forming agent contained in the fifth precursor layer is 10% by mass or more and 60% by mass or less based on a mass of the lower layer,

wherein a mass of the lower layer per unit volume of a portion of the substrate provided with the lower layer is 5 g/L or more and 90 g/L or less,

wherein the sixth slurry contains an inorganic oxide particle, and the inorganic oxide particle contained in the sixth slurry has a median particle size D50 of 1 $\mu$m or more and 20 $\mu$m or less,

wherein an amount of the sixth pore forming agent contained in the sixth precursor layer is 10% by mass or more and 60% by mass or less based on a mass of the upper layer, and

wherein a mass of the upper layer per unit volume of a portion of the substrate provided with the upper layer is 5 g/L or more and 60 g/L or less.

10. The method as claimed in claim 9, wherein the fifth pore forming agent has a median particle size D50 of more than 4 $\mu$m, and the sixth pore forming agent has a median particle size D50 of 4 $\mu$m or less.

[Figure 1]

[Figure 2]

[Figure 3]

[Figure 4]

[Figure 5]

[Figure 6]

[Figure 7]

[Figure 8]

[Figure 9]

[Figure 10]

[Figure 11]

[Figure 12A]

— First catalyst layer of Example 2

[Figure 12B]

— Second catalyst layer of Example 2

[Figure 13A]

— First catalyst layer
of Comparative
Example 1

[Figure 13B]

— Second catalyst
layer of
Comparative
Example 1

[Figure 14A]

— First catalyst layer of Comparative Example 2

[Figure 14B]

— Second catalyst layer of Comparative Example 2

## INTERNATIONAL SEARCH REPORT

International application No.

**PCT/JP2024/010614**

### A. CLASSIFICATION OF SUBJECT MATTER

*B01J 35/60*(2024.01)i; *B01D 53/94*(2006.01)i; *B01J 23/63*(2006.01)i; *B01J 35/57*(2024.01)i; *B01J 37/02*(2006.01)i; *F01N 3/022*(2006.01)i; *F01N 3/035*(2006.01)i; *F01N 3/24*(2006.01)i; *F01N 3/28*(2006.01)i

FI: B01J35/60 F; B01D53/94 222; B01D53/94 245; B01D53/94 280; B01J23/63 A ZAB; B01J35/57 E; B01J35/57 L; B01J37/02 301D; F01N3/022 C; F01N3/035 A; F01N3/24 E; F01N3/28 301P

According to International Patent Classification (IPC) or to both national classification and IPC

### B. FIELDS SEARCHED

Minimum documentation searched (classification system followed by classification symbols)

B01J35/60; B01D53/94; B01J23/63; B01J35/57; B01J37/02; F01N3/022; F01N3/035; F01N3/24; F01N3/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-137681 A (NGK INSULATORS LTD.) 16 September 2021 (2021-09-16) entire text, all drawings | 1-10 |
| A | JP 2018-187595 A (CATALER CORP.) 29 November 2018 (2018-11-29) entire text, all drawings | 1-10 |
| A | JP 2009-255047 A (IBIDEN CO., LTD.) 05 November 2009 (2009-11-05) entire text, all drawings | 1-10 |
| A | JP 2015-145333 A (CORNING INC.) 13 August 2015 (2015-08-13) entire text, all drawings | 1-10 |
| A | WO 2017/170425 A1 (IBIDEN CO., LTD.) 05 October 2017 (2017-10-05) entire text, all drawings | 1-10 |

☑ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/010614** |

**C.    DOCUMENTS CONSIDERED TO BE RELEVANT**

| Category* | Citation of document, with indication, where appropriate, of the relevant passages | Relevant to claim No. |
| --- | --- | --- |
| P, A | WO 2023/047933 A1 (MITSUI MINING & SMELTING CO., LTD.) 30 March 2023 (2023-03-30)<br>      entire text, all drawings | 1-10 |
| E, A | JP 2024-037064 A (CATALER CORP.) 18 March 2024 (2024-03-18)<br>      entire text, all drawings | 1-10 |

Form PCT/ISA/210 (second sheet) (July 2022)

## INTERNATIONAL SEARCH REPORT
### Information on patent family members

International application No.

**PCT/JP2024/010614**

| Patent document cited in search report | | | Publication date (day/month/year) | Patent family member(s) | | | Publication date (day/month/year) |
|---|---|---|---|---|---|---|---|
| JP | 2021-137681 | A | 16 September 2021 | US | 2021/0270163 | A1 | |
| | | | | entire text, all drawings | | | |
| | | | | DE | 102021201567 | A1 | |
| | | | | CN | 113332811 | A | |
| JP | 2018-187595 | A | 29 November 2018 | US | 2021/0189930 | A1 | |
| | | | | entire text, all drawings | | | |
| | | | | WO | 2018/207497 | A1 | |
| | | | | CN | 110573250 | A | |
| JP | 2009-255047 | A | 05 November 2009 | (Family: none) | | | |
| JP | 2015-145333 | A | 13 August 2015 | US | 2010/0129599 | A1 | |
| | | | | entire text, all drawings | | | |
| | | | | WO | 2010/062795 | A1 | |
| | | | | CN | 102272071 | A | |
| WO | 2017/170425 | A1 | 05 October 2017 | (Family: none) | | | |
| WO | 2023/047933 | A1 | 30 March 2023 | (Family: none) | | | |
| JP | 2024-037064 | A | 18 March 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021029098 A